# EUROPÄISCHE PATENTSCHRIFT

(11) **EP 4 440 294 B1**
(45) Veröffentlichungstag und Bekanntmachung des Hinweises auf die Patenterteilung: **06.08.2025**
(21) Anmeldenummer: 22805767.5
(22) Anmeldetag: 09.11.2022
(51) Int. Cl.: A01G 9/08, A01G 9/029, A01G 9/14, A01G 31/04

(54) **TRANSPORTELEMENT FÜR EIN PFLANZENZUCHTSYSTEM, FÖRDERBAND UND PFLANZENZUCHTSYSTEM**
TRANSPORT ELEMENT FOR A PLANT GROWING SYSTEM, CONVEYOR BELT AND PLANT GROWING SYSTEM
ÉLÉMENT DE TRANSPORT POUR UN SYSTÈME DE CULTURE DE PLANTES, BANDE TRANSPORTEUSE ET SYSTÈME DE CULTURE DE PLANTES

(30) Priorität: 02.12.2021 DE 102021131780; 18.08.2022 DE 102022120891
(43) Veröffentlichungstag der Anmeldung: 09.10.2024
(73) Patentinhaber: MEISSNER AG MODELL- UND WERKZEUGFABRIK, 35216 Biedenkopf-Wallau (DE)
(72) Erfinder: BAMBERGER, Florian, 35232 Dautphetal (DE); BÖCHNER, Steffen, 35719 Angelburg (DE)
(74) Vertreter: Angerhausen, Christoph
(86) Internationale Anmeldenummer: PCT/DE2022/100831
(87) Internationale Veröffentlichungsnummer: WO 2023/098935

(56) Entgegenhaltungen:
- WO-A1-2018/220011
- WO-A1-2019/183734
- US-A- 5 881 655
- US-A1- 2017 202 163

## Beschreibung

Die Erfindung betrifft ein Transportelement für ein Pflanzenzuchtsystem, Förderband und Pflanzenzuchtsystem.

Ein Pflanzenzuchtsystem ist beispielsweise aus der WO 2018/220011 A1 bekannt. Das Pflanzenzuchtsystem weist eine wellenförmige Förderstrecke auf, mit der Pflanzen von einer Saatstation zu einer Erntestation transportiert werden können. Während des Transports können die Pflanzen beleuchtet und mit Nährstoffen versorgt werden. Die Pflanzen sind dabei auf einem Förderband mittels Kunststofflamellen fixiert, wobei die Abstände zwischen zwei Pflanzen durch Dehnung der Kunststofflamellen geringfügig verändert werden können, so dass den während des Transports wachsenden Pflanzen etwas mehr Raum zugestanden werden kann.

Nachteilig ist, dass durch die Fixierung der Pflanzen über die Kunststofflamellen am Förderband die Vorschubgeschwindigkeit jeder Pflanze bzw. an jedem Punkt des Förderbands im Wesentlichen gleich ist. Damit werden auch alle Pflanzen im Wesentlichen gleich viel bestrahlt und mit Nährstoffen versorgt. Ein Züchten verschiedener Pflanzen mit verschiedenen Licht- oder Nährstoffbedürfnissen ist mit dem bekannten Pflanzenzuchtsystem somit nicht möglich, bzw. nur in sehr begrenztem Umfang für Pflanzenfamilien mit hochgradig ähnlichen Anforderungen bzgl. Lichtverhältnissen und Nährstoffen.

Ein Transportelement ist aus der WO 2019/183734 A1 bekannt. Weitere Pflanzenzuchtsysteme sind beispielhaft aus der US 5 881 665 A und der US 2017/202163 A1 bekannt.

Es ist deshalb Aufgabe der vorliegenden Erfindung, ein Transportelement für ein Pflanzenzuchtsystem, ein Förderband und ein Pflanzenzuchtsystem bereitzustellen, mit dem verschiedene Pflanzen gleich gut gezüchtet werden können. Die vorliegende Erfindung erlaubt eine hohe Flexibilität der zu züchtenden Pflanzen. Insbesondere können verschiedene Pflanzen bzw. Pflanzensorten parallel mit demselben Pflanzenzuchtsystem gezüchtet werden. Die vorliegende Erfindung stellt diskrete Transportelemente und Förderbandabschnitte bereit, die jeweils einzeln und unabhängig verfahrbar sind. Die vorliegende Erfindung erlaubt eine weitestgehend automatische Züchtung der Pflanzen, sowie flexibel anpassbare und verschaltbare Pflanzenzuchtsysteme. Die vorliegende Erfindung ermöglicht zudem ein Pflanzenzuchtsystem, das vertikal übereinander und/oder vertikal nebeneinander angeordnete Ebenen aufweist, und/oder eine zumindest teilweise vertikale Anordnung des Pflanzenzuchtsystems. Das Pflanzenzuchtsystem kann für Vertical Farming eingesetzt werden. Verglichen mit der Fixierung via Kunststofflamellen ergibt sich durch das erfindungsgemäßen Transportelement zudem ein fester und sicherer Halt der Pflanzen oder Pflanzenplugs in der entsprechenden Aufnahme. Zudem kann beim Transport eine Relativbewegung der Pflanzen oder Pflanzenplugs und damit eine Gefahr des Herausfallens aus der Aufnahme reduziert werden.

Die Aufgabe wird erfindungsgemäß durch ein Transportelement nach Anspruch 1, ein Förderband nach Anspruch 11 und ein Pflanzenzuchtsystem nach Anspruch 13 gelöst. Vorteilhafte Ausführungsformen sind Gegenstand der Unteransprüche.

Ein Aspekt der Erfindung betrifft ein Transportelement für ein Pflanzenzuchtsystem, wobei das Transportelement einen Grundkörper mit einer Oberseite und einer Unterseite und mindestens eine in dem Grundkörper angeordnete oder sich durch den Grundkörper erstreckende Aufnahme für Pflanzen oder Pflanzenplugs aufweist, wobei das Transportelement dazu eingerichtet ist, zumindest einen Teil einer Fördervorrichtung oder eines Förderbands zu bilden oder mit einer Fördervorrichtung befestigbar oder verbindbar zu sein, wobei das Transportelement mindestens zwei Module aufweist, wobei bevorzugt jedes Modul mindestens eine Aufnahme für Pflanzen oder Pflanzenplugs aufweist, wobei die Module um eine gemeinsame Schwenkachse verschwenkbar sind.

Das Transportelement kann ein Pflanzenmodul sein oder aufweisen. Das Transportelement kann ein Tray sein oder aufweisen. In einigen Ausführungsformen kann das Transportelement modular aus Modulen zusammengesetzt sein.

Die Pflanze kann beispielsweise Salat, Blattsalat, Kopfsalat, Gemüse, Früchte, Leguminosen, Gräser, Erbsen, Gemüse, Erdbeeren, Auberginen, Tomaten und/oder Kräuter wie z.B. Basilikum, Petersilie, Oregano, Majoran, Thymian, Paprika, aber auch Blumen, Zierblumen umfassen. Ein Pflanzenplug kann ein Basiselement aufweisen. Ein Pflanzenplug kann ein Basiselement und eine oder mehrere in das Basiselement eingepflanzte Pflanzen umfassen. Das Basiselement kann z.B. Schaumstoff, Steinwolle, Erde, Kunststoff, Kokosfaser, Hanffaser, künstliche oder natürliche Fasern, künstliche oder natürliche Produkte und/oder ein poröses Material aufweisen.

Der Grundkörper kann im Wesentlichen flächig, plattenförmig, scheibenförmig, quaderförmig und/oder eben sein oder eine entsprechende Form aufweisen.

Die Module können miteinander verbunden sein, z.B. lösbar miteinander verbunden. In einigen Ausführungsformen kann das Transportelement mehr als zwei Module aufweisen, und/oder aus mehr als zwei Modulen gebildet sein. Weist das Transportelement mehr als zwei Module auf, so kann vorgesehen sein, dass die Module jeweils paarweise um eine jeweilige Schwenkachse verschwenkbar sein können. Weist das Transportelement mehr als zwei Module auf, so kann mehr als eine Schwenkachse vorgesehen sein. Die Schwenkachse kann zwischen zwei Modulen angeordnet sein, beispielsweise in einem Verbindungsbereich oder einem Kupplungsbereich. Es kann vorgesehen sein, dass mindestens eines der Module von mindestens einem anderen der Module verschieden ist, sich z.B. in Abmessungen oder Form der Module, oder der Anzahl Aufnahmen, Form der Aufnahmen, Anordnung der Aufnahmen oder dergleichen unterscheidet. Damit kann das Transportelement flexibel aus Modulen zusammengesetzt sein oder werden. Zudem kann das Transportelement durch geeignete Wahl der Module flexibel an die Sorte der Pflanzen und deren Bedürfnisse, z.B. verschiedene Größe und Beabstandung der Aufnahmen, angepasst sein oder werden, so dass in einem Transportelement verschiedene Pflanzensorten aufgenommen bzw. transportiert sein oder werden können. Die Aufnahme kann sich durch das Modul erstrecken. In einigen Ausführungsformen kann aber auch vorgesehen sein, dass mindestens eine Aufnahme sich nicht vollständig durch das Modul und/oder Transportelement erstreckt. Beispielsweise kann die Aufnahme in dem Modul und/oder Transportelement angeordnet sein und zu einer Oberfläche, z.B. einer Oberseite des Moduls und/oder Transportelements, geöffnet sein.

Die Module können in einem Schwenkwinkelbereich zwischen einem ersten relativen Schwenkwinkel und einem zweiten relativen Schwenkwinkel um die Schwenkachse verschwenkbar sein. Der Schwenkwinkelbereich kann einen Winkelbereich zwischen mindestens - 45° bis 45° umfassen. Der Schwenkwinkelbereich kann einen Winkelbereich zwischen mindestens - 90° und 90° umfassen. Der erste relative Schwenkwinkel kann, relativ zu einer Referenzrichtung, mindestens 45° betragen. Der erste relative Schwenkwinkel kann, relativ zu einer Referenzrichtung, mindestens 90° betragen. Der zweite relative Schwenkwinkel kann, relativ zu einer Referenzrichtung, mindestens -45° betragen. Der zweite relative Schwenkwinkel kann, relativ zu einer Referenzrichtung, mindestens -90° betragen. Dadurch, dass die Module gegeneinander verschwenkbar sein können und/oder verschwenkt werden können, kann sich ein flexibles Transportelement ergeben, das um Kurven mit relativ kleinen Kurvenradien umlenkbar sein kann.

Die Module können sich bei einer Verschwenkung in dem Schwenkwinkelbereich überlappen. Es kann vorgesehen sein, dass sich die Module überlappen, wenn sie um einen Winkel kleiner dem ersten relativen Schwenkwinkel und/oder dem zweiten relativen Schwenkwinkel verschwenkt sind. Die Module können sich in dem jeweiligen Verbindungsbereich oder dem Kupplungsbereich überlappen. Damit kann sichergestellt sein, dass auch bei einer Verschwenkung der Module kein Licht und/oder keine Feuchtigkeit durch den Verbindungsbereich bzw. Kupplungsbereich hindurchtreten kann.

Die Module können derart ausgeführt sein, dass kein Licht und/oder keine Feuchtigkeit zwischen den Modulen hindurchtreten kann. Beispielsweise können sich die Module überlappen, z.B. an oder in ihrem Verbindungsbereich bzw. Kupplungsbereich. Die Module können derart ausgeführt sein, dass durch die Module kein Licht und/oder keine Feuchtigkeit hindurchtreten kann.

Die Module können durch Scharniere und/oder einen Scharnierstab miteinander verbunden sein. Es kann vorgesehen sein, dass der Scharnierstab die Schwenkachse bildet. Die Scharniere und/oder der Scharnierstab können derart geformt oder ausgeführt sein, dass bei einer Verschwenkung der Module keine Feuchtigkeit und/oder Licht durch die Scharniere und/oder den Scharnierstab, bzw. die durch Scharniere und/oder Scharnierstab gebildete Verbindung, hindurchtreten kann. Beispielsweise können die Scharniere geeignet ineinander eingreifen. Scharniere und/oder Scharnierstab können im Verbindungsbereich bzw. Kupplungsbereich angeordnet sein.

Das Transportelement kann ein seitlich angeordnetes Kopplungselement aufweisen, mit dem die Module verbunden sein können. Das Kopplungselement kann ein Kettenelement, z.B. umfassend eines oder mehrere Kettenglieder, sein oder aufweisen. Es kann vorgesehen sein, dass das Kettenelement und/oder das Kettenglied eine Länge hat, die im wesentlichen einer Breite eines Moduls entspricht, so dass die Verbindung zweier Kettenelemente und/oder Kettenglieder die Schwenkachse bilden kann. Das Modul kann einen Kopplungsabschnitt aufweisen, der mit dem Kettenelement und/oder Kettenglied verbunden bzw. befestigt sein kann.

Das Transportelement und/oder die Aufnahme kann einen Topf aufweisen. Der Topf kann einstückig mit der Aufnahme ausgeführt sein. In einigen Ausführungsformen kann die Aufnahme topfförmig sein und/oder ein Topf sein. In einigen Ausführungsformen kann jede Aufnahme topfförmig und/oder ein Topf sein.

Das Transportelement kann eine Sicke aufweisen, die dazu eingerichtet sein kann, das Transportelement zumindest abschnittsweise zu versteifen. In einigen Ausführungsformen kann mindestens ein Modul eine Sicke aufweisen, die dazu eingerichtet sein kann, das Transportelement und/oder das Modul zumindest abschnittsweise zu versteifen.

Die Aufnahme kann an der Oberseite des Grundkörpers eine erste Öffnung mit einer ersten Öffnungsquerschnittsfläche und an der Unterseite des Grundkörpers eine zweite Öffnung mit einer zweiten Öffnungsquerschnittsfläche aufweisen, wobei die erste Öffnungsquerschnittsfläche größer als die zweite Öffnungsquerschnittsfläche sein kann.

Die Aufnahme kann zumindest abschnittsweise kegelstumpfförmig, schalenförmig und/oder halbkugelförmig sein. Alternativ oder zusätzlich kann die Aufnahme zumindest abschnittsweise eine schalenförmige Form, eine halbkugelförmige Form, eine ellipsoide Form, eine Quaderform, eine trapezoide Form, eine Diamantform und/oder eine Pyramidenform aufweisen.

Die erste Öffnung kann zumindest abschnittsweise rund, elliptisch und/oder polygonal sein. Alternativ oder zusätzlich kann die erste Öffnung zumindest abschnittsweise eine runde, elliptische und/oder polygonale Form aufweisen. Alternativ oder zusätzlich kann die zweite Öffnung zumindest abschnittsweise rund, elliptisch und/oder polygonal sein. Alternativ oder zusätzlich kann die zweite Öffnung zumindest abschnittsweise eine runde, elliptische und/oder polygonale Form aufweisen.

Das Transportelement kann eine Mehrzahl Aufnahmen aufweisen. In diesem Fall kann in einigen Ausführungsformen vorgesehen sein, dass die Aufnahmen regelmäßig über den Grundkörper verteilt sind. Bevorzugt können die Aufnahmen in Reihen oder einem Raster angeordnet sein.

Das Transportelement kann eine Mehrzahl Aufnahmen aufweisen. In diesem Fall kann in einigen Ausführungsformen vorgesehen sein, dass mindestens eine der Aufnahmen eine von mindestens einer anderen Aufnahme verschiedenen erste Öffnungsquerschnittsfläche aufweist. In anderen Worten kann eine erste Aufnahme des Transportelements eine erste Öffnungsquerschnittsfläche aufweisen, die von der ersten Öffnungsquerschnittsfläche einer zweiten Aufnahme des Transportelements verschieden ist. Alternativ oder zusätzlich kann in einigen Ausführungsformen vorgesehen sein, dass mindestens eine der Aufnahmen eine von mindestens einer anderen Aufnahme verschiedenen zweite Öffnungsquerschnittsfläche aufweist. In anderen Worten kann eine zweite Aufnahme des Transportelements eine zweite Öffnungsquerschnittsfläche aufweisen, die von der zweiten Öffnungsquerschnittsfläche einer zweiten Aufnahme des Transportelements verschieden ist. Die jeweils ersten und/oder zweiten Aufnahmen der Aufnahmen des Transportelements können sich beispielsweise in ihrer Form, ihrer Dimensionierung, und/oder ihren Öffnungsquerschnittsflächen unterscheiden.

Die erste Öffnungsquerschnittsfläche kann eine Fläche von 25 cm² bis 0,75 m² aufweisen. In einigen Ausführungsformen kann die erste Öffnungsquerschnittsfläche eine Fläche von 25 cm² bis 450 cm² aufweisen. In einigen Ausführungsformen kann die erste Öffnungsquerschnittsfläche eine Fläche von 25 cm² bis 300 cm², aufweisen. Alternativ oder zusätzlich kann die zweite Querschnittsfläche eine Fläche von 5 cm² bis 300 cm² aufweisen. In einigen Ausführungsformen kann die zweite Querschnittsfläche alternativ oder zusätzlich eine Fläche von 5 cm² bis 150 cm² aufweisen. In einigen Ausführungsformen kann die zweite Querschnittsfläche alternativ oder zusätzlich eine Fläche von 5 cm² bis 75 cm² aufweisen. In einigen Ausführungsformen kann die erste Querschnittsfläche und/oder die erste Querschnittsfläche eine handelsüblichen Blumentöpfen entsprechende Fläche aufweisen.

Alternativ kann vorgesehen sein, dass die erste Öffnungsquerschnittsfläche eine Fläche von 0,1 cm² bis 5 cm², bevorzugt 0,3 cm² bis 3 cm², besonders bevorzugt 0,5 cm² bis 2 cm², aufweisen kann, und/oder die zweite Querschnittsfläche eine Fläche von 0,2 cm² bis 10 cm², bevorzugt 0,5 cm² bis 5 cm², besonders bevorzugt 0,75 cm² bis 3 cm², aufweisen kann.

In einigen Ausführungsformen kann vorgesehen sein, dass die Aufnahme einen Öffnungsquerschnitt mit einer Fläche von 0,2 cm² bis 10 cm², bevorzugt 0,5 cm² bis 5 cm², besonders bevorzugt 0,75 cm² bis 3 cm², aufweisen kann. Es kann aber auch vorgesehen sein, dass die Aufnahme einen Öffnungsquerschnitt mit einer Fläche 0,1 cm² bis 5 cm², bevorzugt 0,3 cm² bis 3 cm², besonders bevorzugt 0,5 cm² bis 2 cm², aufweisen kann.

Die Aufnahme kann ein Volumen von 1 - 250 Milliliter (ml) aufweisen. Die Aufnahme kann ein Volumen von 1 - 100 Millilitern (ml) aufweisen. Die Aufnahme kann ein Volumen von 1 - 50 Millilitern (ml) aufweisen. Die Aufnahme kann alternativ ein Volumen von 1 - 250 Liter aufweisen. In einigen Ausführungsformen kann die Aufnahme ein Volumen von 1 - 100 Litern aufweisen. In einigen Ausführungsformen kann die Aufnahme ein Volumen von 1 - 50 Litern aufweisen. In einigen Ausführungsformen kann die Aufnahme ein Volumen entsprechend handelsüblichen Blumentöpfen aufweisen. Das Volumen der Aufnahme kann von der in die Aufnahme aufgenommene Pflanzensorte und/oder Pflanzenplug abhängen.

Das Transportelement kann ein Verbindungsmittel aufweisen, das dazu eingerichtet sein kann, mit der Fördervorrichtung verbunden zu sein oder werden. Die Fördervorrichtung kann eine Förderkette und/oder ein Zugmittel sein oder aufweisen. Es kann vorgesehen sein, dass das Verbindungsmittel dazu eingerichtet ist, mit der Fördervorrichtung form- und/oder kraftschlüssig verbunden zu sein oder werden. Die Fördervorrichtung kann ein Fördervorrichtungsverbindungselement aufweisen, das dazu eingerichtet ist, mit dem Verbindungsmittel form- und/oder kraftschlüssig verbunden zu sein oder werden. Die Verbindung des Verbindungsmittels mit der Fördervorrichtung kann lösbar sein und/oder dazu eingerichtet sein, gelöst zu werden. Es kann vorgesehen sein, dass die Verbindung zerstörungsfrei lösbar ist und/oder gelöst werden kann, und/oder dass Verbindungsmittel und/oder Fördervorrichtung dazu eingerichtet sind, zerstörungsfrei voneinander gelöst zu werden. Alternativ oder zusätzlich kann das Transportelement ein Verbindungsmittel aufweisen, das dazu eingerichtet ist, das Transportelement mit einem weiteren Transportelement zu verbinden. Die Verbindung mit dem weiteren Transportelement kann kraft- und/oder formschlüssig sein. In einigen Ausführungsformen kann das Verbindungsmittel dem Kopplungselement, in einigen weiteren Ausführungsformen dem Kettenelement, des Transportelements entsprechen oder diese umfassen. Das Verbindungsmittel kann dazu eingerichtet sein, eine Kraft auf das Transportelement und/oder Modul zu übertragen. Die Kraft kann über das Verbindungsmittel auf das Transportelement übertragen sein oder werden, um um das Transportelement zu bewegen oder zu verfahren.

Das Verbindungsmittel kann an einer Außenseite des Grundkörpers angeordnet sein. Das Verbindungsmittel kann an einem Außenbereich des Grundkörpers angeordnet sein. Das Verbindungsmittel kann an der Oberseite und/oder Unterseite des Grundkörpers angeordnet sein. Das Verbindungsmittel kann in einem Außenbereich der Oberseite und/oder Unterseite des Grundkörpers angeordnet sein.

Das Verbindungsmittel kann einen Haken aufweisen, mit dem das Transportelement in die Fördervorrichtung einhakbar ist. Weist die Fördervorrichtung eine Förderkette oder ein Zugmittel auf, so kann vorgesehen sein, dass der Haken in die Förderkette oder in das Zugmittel einhakbar ist. Weist die Fördervorrichtung ein Fördervorrichtungsverbindungselement auf, so kann vorgesehen sein, dass der Haken in die Förderkette oder in das Zugmittel einhakbar ist. In einigen Ausführungsformen kann das Verbindungsmittel alternativ oder zusätzlich einen Haken aufweisen, mit dem der das Transportelement mit einem weiteren Transportelement verhakbar sein kann. Es kann vorgesehen sein, dass der Haken zwei Transportelemente verbinden kann.

Das Verbindungsmittel kann ein Verbindungselement für eine Verbindung mit einem Mitnehmer oder einem Stift der Fördervorrichtung aufweisen. Das Verbindungsmittel kann eine Mitnehmeraufnahme oder eine Stiftaufnahme sein oder aufweisen. Die Fördervorrichtung kann einen Mitnehmer oder einen Stift aufweisen, der in die Mitnehmeraufnahme oder die Stiftaufnahme eingreifen kann.

Das Verbindungsmittel kann eine Mulde aufweisen. Die Mulde kann derart dimensioniert sein, dass eine Spannvorrichtung oder eine Klemme der Fördervorrichtung form- und/oder kraftschlüssig in die Mulde eingreifbar sein kann bzw. in die Mulde eingreifen kann. Die Spannvorrichtung kann ein Federelement sein oder aufweisen. Die Fördervorrichtung und/oder das Fördervorrichtungsverbindungselement kann eine entsprechende Klemme oder Spannvorrichtung aufweisen. Alternativ oder zusätzlich kann die Fördervorrichtung und/oder das Fördervorrichtungsverbindungselement einen Winkel und/oder eine Verstiftung und/oder Verschraubung aufweisen. Die Mulde kann dazu eingerichtet sein, den Winkel, die Verstiftung und/oder die Verschraubung aufzunehmen bzw. mit dieser verbunden zu sein oder werden. In einigen Ausführungsformen kann die Mulde kann ein Gewinde aufweisen, mit dem die Verschraubung verschraubt sein kann und/oder verschraubbar ist.

Der Grundkörper kann zumindest abschnittsweise ein biegsames Material aufweisen oder aus einem solchen bestehen. Es kann vorgesehen sein, dass der Grundkörper bei einer Umlenkung z.B. mittels einer Umlenkrolle bei einem Transport des Transportelements durch die Fördervorrichtung zumindest abschnittsweise gebogen werden kann. Der Grundkörper kann dazu eingerichtet sein, nach der Umlenkung und/oder Durchbiegung in eine im Wesentlichen flächige Form zurückzukehren bzw. wieder eine im wesentlichen flächige Form anzunehmen. In einigen Ausführungsformen weist der Grundkörper mindestens einen flexiblen Abschnitt auf. In einigen Ausführungsformen weist der der Grundkörper mindestens einen flexiblen Abschnitt und mindestens einen steifen Abschnitt auf. Der steife Abschnitt kann verglichen mit dem flexiblen Abschnitt eine erhöhte Biegesteifigkeit aufweisen. Es kann vorgesehen sein, dass z.B. bei einer Umlenkung des Transportelements z.B. z.B. mittels einer Umlenkrolle bei einem Transport des Transportelements durch die Fördervorrichtung der flexible Abschnitt gebogen oder verformt und der steife Abschnitt nicht gebogen oder verformt wird oder ist. In einigen Ausführungsformen kann vorgesehen sein, dass mindestens eine, mehrere oder alle Aufnahmen in mindestens einem oder mehreren steifen Abschnitten angeordnet sind. Damit kann eine Änderung des Volumens der Aufnahme bei Biegung des Grundkörpers und/oder z.B. einer Umlenkung verhindert oder zumindest reduziert sein oder werden.

Das Transportelement und/oder der Grundkörper kann zumindest abschnittsweise aus einem Kunststoff bestehen oder aufweisen. Der Grundkörper kann eine Kunststofffolie und/oder ein Gummimaterial aufweisen oder zumindest abschnittsweise aus einem solchen bestehen. In einigen Ausführungsformen kann der steife Abschnitt z.B. ein Duroplast oder dergleichen sein oder aufweisen. In einigen Ausführungsformen kann der flexible Abschnitt z.B. ein Elastomer sein oder aufweisen. Der Grundkörper und/oder das Transportelement kann eine hohe Opazität aufweisen.

Der Grundkörper kann lichtundurchlässig sein und/oder zumindest abschnittsweise ein lichtundurchlässiges Material aufweisen oder aus einem solchen bestehen. Alternativ oder zusätzlich kann der Grundkörper mit einem lichtundurchlässigen Material beschichtet oder benetzt sein. Bei in die Aufnahme eingesetzter Pflanze und/oder Pflanzenplug kann in einigen Ausführungsformen damit kein oder zumindest nur sehr wenig Licht von der Oberseite des Transportelements zu dessen Unterseite oder umgekehrt gelangen.

Die Unterseite kann lichtabsorbierend sein und/oder ein lichtabsorbierendes Material aufweisen oder aus einem solchen bestehen. Alternativ oder zusätzlich kann die Unterseite mit einem lichtabsorbierenden Material beschichtet und/oder benetzt sein. In einigen Ausführungsformen kann alternativ oder zusätzlich die Oberseite lichtabsorbierend sein und/oder ein lichtabsorbierendes Material aufweisen oder aus einem solchen bestehen. Alternativ oder zusätzlich kann in einigen Ausführungsformen die Oberseite mit einem lichtabsorbierenden Material beschichtet und/oder benetzt sein.

Die Oberseite kann lichtreflektierend sein und/oder ein lichtreflektierendes Material aufweisen oder aus einem solchen bestehen. Alternativ oder zusätzlich kann die Oberseite mit einem lichtreflektierenden Material beschichtet und/oder benetzt sein. In einigen Ausführungsformen kann alternativ oder zusätzlich die Unterseite lichtreflektierend sein und/oder ein lichtreflektierendes Material aufweisen oder aus einem solchen bestehen. Alternativ oder zusätzlich kann in einigen Ausführungsformen die Unterseite mit einem lichtreflektierenden Material beschichtet und/oder benetzt sein.

In einigen Ausführungsformen kann die Oberseite lichtabsorbierend und die Unterseite lichtreflektierend sein, und/oder diese entsprechende Materialien aufweisen. In einigen Ausführungsformen kann die Oberseite lichtreflektierend und die Unterseite lichtabsorbierend sein, und/oder diese entsprechende Materialien aufweisen.

Der Grundkörper kann zwei oder mehr miteinander verbundene oder übereinander angeordnete Schichten aufweisen oder aus solchen bestehen. Einige, mehrere oder alle Schichten können verschiedene Materialen aufweisen oder aus verschiedenen Materialien bestehen.

Mindestens eine der Schichten kann lichtundurchlässig sein und/oder zumindest abschnittsweise ein lichtundurchlässiges Material aufweisen oder aus einem solchen bestehen.

Eine erste Schicht kann lichtabsorbierend sein und/oder ein lichtabsorbierendes Material aufweisen oder aus einem solchen bestehen. Eine zweite Schicht kann lichtreflektierend sein und/oder ein lichtreflektierendes Material aufweisen oder aus einem solchen bestehen.

Das Transportelement kann an der Unterseite mindestens eine Vertiefung und an der Oberseite mindestens eine mit der Vertiefung komplementäre Erhebung aufweisen. Sind zwei Transportelemente übereinander gestapelt, so kann vorgesehen sein, dass die Erhebung des einen Transportelements in die Vertiefung des anderen Transportelements eingreift. Beispielsweise kann die Erhebung eines unteren Transportelements der gestapelten Transportelements in die Vertiefung des oberen Transportelements der gestapelten Transportelemente eingreifen.

Alternativ oder zusätzlich kann das Transportelement kann an der Oberseite mindestens eine Vertiefung und an der Unterseite mindestens eine mit der Vertiefung komplementäre Erhebung aufweisen. Sind zwei Transportelemente übereinander gestapelt, so kann vorgesehen sein, dass die Erhebung des einen Transportelements in die Vertiefung des anderen Transportelements eingreift. Beispielsweise kann die Erhebung eines oberen Transportelements der gestapelten Transportelemente in die Vertiefung des unteren Transportelements der gestapelten Transportelemente eingreifen.

In einigen Ausführungsformen kann die Aufnahme die Vertiefung sein oder aufweisen. Es kann vorgesehen sein, dass die Anordnung der Aufnahme bzw. Vertiefung und/oder der Erhebung zweier übereinander stapelbarer Transportelemente unterschiedlich ist, so dass die Erhebung des einen Transportelements in die Vertiefung des anderen Transportelements oder umgekehrt eingreifen kann.

Durch die Erhebung und Vertiefung können Transportelemente gut und sicher in einer vertikalen Richtung miteinander befestigbar sein. Damit kann ein Transportelementstapel gut stapelbar, lagerbar und/oder transportierbar sein. Es ist denkbar, dass in mindestens eine, mehrere oder alle Aufnahmen von zu einem Transportelementstapel verbundenen Transportelemente Pflanzen und/oder Pflanzenplugs eingesetzt sind.

Das Transportelement kann ein Identifizierungselement aufweisen. Das Identifizierungselement kann einen RFID-Chip, Barcode, Farbcode, Piktogramm, alphanumerischer Ziffercode und/oder QR-Code aufweisen oder sein. Das Identifizierungselement kann Informationen aufweisen, die das Transportelement und/oder in die Aufnahme eingesetzte Pflanzen und/oder Pflanzenplugs identifizieren, charakterisieren und/oder beschreiben. Das Identifizierungselement kann beispielsweise auf oder an einer Außenseite oder einem Außenbereich des Grundkörpers, der Oberseite und/oder der Unterseite angeordnet sein.

In einigen Ausführungsformen kann das Transportelement mindestens ein Dichtelement aufweisen. Das Dichtelement kann eine Dichtlippe sein oder aufweisen. Das Dichtelement kann lichtundurchlässig und/oder lichtabsorbierend sein. Das Dichtelement kann alternativ oder zusätzlich fluidisch dichtend sein. Das Dichtelement kann an einer Außenseite und/oder einem Rand des Transportelements angeordnet sein.

Die Erfindung umfasst eine Anordnung aus einer Fördervorrichtung und einem Transportelement, z.B. einem vorstehend beschriebenen Transportelement. Das Transportelement kann Befestigungsmittel zur Befestigung oder Kopplung an oder mit der Fördervorrichtung aufweisen.

Ein zweiter Aspekt der Erfindung betrifft ein Förderband, aufweisend mindestens zwei vorstehend beschriebene Transportelemente, wobei mindestens zwei der Transportelemente miteinander verbunden sind, so dass verbundenen Transportelemente einen Förderbandabschnitt bilden.

Das Förderband kann eine Querverstrebung aufweisen, wobei mindestens zwei der Transportelemente paarweise über die Querverstrebung miteinander verbunden sein können, so dass die Querverstrebung und die mit der Querverstrebung verbundenen Transportelemente den Förderbandabschnitt bilden. In einigen Ausführungsformen kann die Querverstrebung ein Dichtelement, z.B. eine Dichtlippe, sein oder aufweisen. Alternativ oder zusätzlich kann mindestens einer, mehrere oder alle der Transportelemente mindestens ein Dichtelement, z.B. eine Dichtlippe, aufweisen. Das Dichtelement kann dazu eingerichtet sein, fluidisch dicht zu sein, und/oder Transportelemente und/oder Querverstrebung fluidisch abzudichten. Alternativ oder zusätzlich kann das Dichtelement lichtundurchlässig und/oder lichtabsorbierend sein.

Das Förderband kann aus mehreren miteinander verbundenen Förderbandabschnitten bestehen oder solche aufweisen. Alternativ oder zusätzlich kann das Förderband mindestens einen Förderbandabschnitt und mindestens ein Transportelement aufweisen, der nicht mit einer Querverstrebung verbunden ist. Es kann vorgesehen sein, dass zwischen mindestens zwei oder mehreren Förderbandabschnitten, Transportelementen und/oder zwischen mindestens einem Förderbandabschnitt und einem Transportelement das Förderband eine "Lücke" aufweist, d.h. einen Abschnitt, in dem kein Transportelement und kein Förderbandabschnitt angeordnet ist.

Einer der mit der Querverstrebung verbundenen Transportelemente kann verschwenkbar mit der Querverstrebung verbunden sein, so dass das Transportelement relativ zu der Querverstrebung um eine Schwenkachse verschwenkbar sein kann. Es kann aber auch vorgesehen sein, dass in einigen Ausführungsformen beide der der mit der Querverstrebung verbundenen Transportelemente verschwenkbar mit der Querverstrebung verbunden sind, so dass die Transportelemente relativ zu der Querverstrebung um jeweils eine Schwenkachse verschwenkbar sind. Ist mindestens einer der Transportelemente verschwenkbar mit der Querverstrebung verbunden, so kann eine Umlenkung des Förderbandabschnitts z.B. an einer Umlenkrolle erleichtert sein oder werden.

Die Querverstrebung kann derart eingerichtet sein und/oder die Transportelemente derart mit der Querverstrebung verbunden sein, dass mindestens bei ebener Erstreckung des Förderbandabschnitts ein Verbindungsbereich der Querverstrebung und der damit verbundenen Transportelemente und/oder der Förderbandabschnitt lichtundurchlässig ist. Alternativ oder zusätzlich kann die Querverstrebung derart eingerichtet sein und/oder die Transportelemente derart mit der Querverstrebung verbunden sein, dass bei gekrümmtem und/oder umgelenktem Förderbandabschnitt ein Verbindungsbereich der Querverstrebung und der damit verbundenen Transportelemente und/oder der Förderbandabschnitt lichtundurchlässig. Der Verbindungsbereich kann einen Bereich und/oder Abschnitt des Förderbandabschnitts bei oder um eine Verbindungsstelle der Querverstrebung und eines Transportelements umfassen. Der Verbindungsbereich kann einen Bereich und/oder Abschnitt des Förderbandabschnitts bei oder um die Schwenkachse umfassen. Es kann vorgesehen sein, dass bei umgelenktem Förderbandabschnitt und/oder um die Querverstrebung verschwenktem Transportelement der Förderbandabschnitt keinen Spalt zwischen Querverstrebung und damit verbundenem Transportelement aufweist, durch den Licht treten kann bzw. treten könnte.

Das Förderband kann eine Förderkette oder ein Zugmittel aufweisen, wobei mindestens eines, bevorzugt alle, der Transportelemente und/oder der Förderbandabschnitt form- und/oder kraftschlüssig mit der Förderkette und/oder dem Zugmittel verbunden sein kann.

Alternativ oder zusätzlich kann das Förderband mit einer Förderkette und/oder einem Zugmittel verbunden sein. Das Förderband kann ein Fördervorrichtungsverbindungselement aufweisen. Die Querverstrebung, mindestens ein Transportelement und/oder der Förderbandabschnitt kann über das Fördervorrichtungsverbindungselement form- und/oder kraftschlüssig mit der Förderkette und/oder dem Zugmittel verbunden sein. In einigen Ausführungsformen kann mindestens eines der Transportelemente, aber nicht die mit den Transportelementen verbundene Querverstrebung, mit dem Fördervorrichtungsverbindungselement verbunden sein. Es kann vorgesehen sein, dass eines der beiden mit der Querverstrebung verbundenen Transportelemente mit dem Fördervorrichtungsverbindungselement verbunden ist, wobei die Querverstrebung und das andere der mit dem Fördervorrichtungsverbindungselement verbundenen Transportelemente nicht direkt bzw. unmittelbar mit dem Fördervorrichtungsverbindungselement verbunden ist, sondern nur mittelbar über den einen mit dem Fördervorrichtungsverbindungselement verbunden Transportelement. In einigen Ausführungsformen kann vorgesehen sein, dass nur die Querverstrebung mit dem Fördervorrichtungsverbindungselement verbunden ist, wobei die beiden mit der Querverstrebung verbundenen Transportelemente nicht direkt bzw. unmittelbar mit dem Fördervorrichtungsverbindungselement verbunden sind, sondern nur mit der Querverstrebung. In Einigen Ausführungsformen kann vorgesehen sein, dass mindestens einer der beiden mit der Querverstrebung verbundene Transportelemente mit dem Fördervorrichtungsverbindungselement verbunden ist und dass die Querverstrebung mit dem Fördervorrichtungsverbindungselement verbunden, wobei der andere der mit der Querverstrebung verbundene Transportelemente nicht direkt bzw. unmittelbar mit dem Fördervorrichtungsverbindungselement verbunden sind, sondern nur mit der Querverstrebung. In einigen Ausführungsformen kann vorgesehen sein, dass beide mit der Querverstrebung verbundene Transportelemente mit dem Fördervorrichtungsverbindungselement verbunden sind, die Querverstrebung aber nicht direkt bzw. unmittelbar mit dem Fördervorrichtungsverbindungselement verbunden ist. In einigen Ausführungsformen kann vorgesehen sein, dass beide mit der Querverstrebung verbundene Transportelemente und die Querverstrebung mit dem Fördervorrichtungsverbindungselement verbunden ist.

Das Fördervorrichtungsverbindungselement kann einen Mitnehmer, einen Haken, eine Klemme, ein Federelement, einen Winkel, eine Verstiftung und/oder eine Verschraubung aufweisen. Die Transportelemente und/oder die Querverstrebung können zu dem Fördervorrichtungsverbindungselement komplementäre Verbindungsmittel aufweisen, so dass Fördervorrichtungsverbindungselement und Verbindungsmittel miteinander verbindbar sind. Es kann vorgesehen sein, dass Fördervorrichtungsverbindungselement und Verbindungsmittel derart eingerichtet sind, dass eine Verbindung dieser zerstörungsfrei gelöst werden kann.

Es kann vorgesehen sein, dass die Förderkette und/oder das Zugmittel zumindest teilweise aus seitlich angeordneten Kopplungselementen, bevorzugt Kettenelementen, der Transportelemente gebildet ist oder solche umfasst. In einigen Ausführungsformen können die Kopplungselemente und/oder Kettenelemente der miteinander verbundenen Transportelemente die die Förderkette und/oder das Zugmittel bilden. Es kann vorgesehen sein, dass das Förderband keine weitere bzw. separate Förderkette und/oder Zugmittel aufweist. In einigen Ausführungsformen kann das Förderband nur durch die verbundenen Transportelemente und deren Kopplungselemente und/oder Kettenelemente gebildet sein.

Das Kopplungselement kann miteinander verbundene Kettenglieder umfassen. Es kann vorgesehen sein, dass ein Kettenglied mit einem Modul des Transportelements verbunden ist. Das Modul kann einen Verbindungsmittel und/oder einen Kopplungsabschnitt zum Verbinden mit dem Kopplungselement und/oder einem Kettenglied aufweisen. Es kann vorgesehen sein, dass eine Läng eines Kettenglieds im wesentlichen der Breite und/oder einer Quererstreckung eines Moduls, beispielsweise eines mit dem Kettenglied verbundenen Moduls, aufweist. In einigen Ausführungsformen kann die Schwenkachse zwischen zwei Modulen durch die Verbindung der mit den jeweiligen Modulen verbundenen Kettengliedern definiert sein.

Ein weiterer Aspekt der Erfindung betrifft ein Pflanzenzuchtsystem, aufweisend mindestens einen Transportelement und eine Fördervorrichtung zum Transportieren des Transportelements, eine Saatstation zum Einsetzen von Pflanzen oder Pflanzenplugs in die Aufnahme des Transportelements und einer Erntestation zum Entnehmen von Pflanzen und/oder der Pflanzenplugs aus der Aufnahme des Transportelements, wobei die Fördervorrichtung dazu eingerichtet ist, das Transportelement von der Saatstation zu der Erntestation zu transportieren, und wobei das Pflanzenzuchtsystem mindestens eine Beleuchtungseinheit zum zumindest abschnittsweise Beleuchten von in die Aufnahme eingesetzten Pflanzen oder Pflanzenplugs und mindestens eine Nährstoffmittelversorgungseinheit zum zumindest abschnittsweise Versorgen der in die Aufnahme eingesetzten Pflanzen oder Pflanzenplugs mit Nährstoffen aufweist. Mindestens einer, mehrere oder alle der Transportelemente kann ein vorstehend beschriebenes Transportelement sein. Die Pflanzenplugs können Samen aufweisen, bzw. Samen in die Pflanzenplugs eingesetzt sein. In diesem Fall kann die Nährstoffmittelversorgungseinheit zumindest abschnittsweise die in die Pflanzenplugs eingesetzte Samen mit Nährstoffen versorgen.

Mit "zumindest abschnittsweise" kann ein oder mehrere Bereiche oder Abschnitte des Pflanzenzuchtsystems, z.B. eine oder mehrere Stationen des Fördersystems, ein oder mehrere Abschnitte der Fördervorrichtung oder Bereiche entlang der Fördervorrichtung, gemeint sein.

In einigen Ausführungsformen kann vorgesehen sein, dass die Transportelemente nach dem Ernten oder Entnehmen der Pflanzen gewaschen oder gesäubert werden. Das Pflanzenzuchtsystem kann eine Reinigungseinheit zum Reinigen, Waschen und/oder Säubern der Transportelemente aufweisen. Die Reinigungseinheit kann der Erntestation bzw. Ernteeinheit nachgeordnet sein. Beispielsweise kann das Transportelement von der Erntestation bzw. Ernteeinheit zu der der Reinigungseinheit geführt sein oder werden, z.B. von der Fördervorrichtung. Die Reinigungseinheit kann in einer Reinigungsstation angeordnet oder aufgenommen sein, und/oder die Reinigungsstation kann die Reinigungseinheit aufweisen. Die Reinigungseinheit kann dazu eingerichtet sein, ein Transportelement z.B. mittels eines Waschmittels zu waschen oder zu säubern. Das Waschmittel kann z.B. Wasser, Seife, Lauge, oder ein Lösungsmittel umfassen. Die Reinigungseinheit kann beispielsweise eine Düse aufweisen, mit der das Waschmittel auf das Transportelement aufgebracht oder gespritzt werden kann, beispielsweise unter Hochdruck. In einigen Ausführungsformen kann die Reinigungseinheit dazu eingerichtet sein, das Transportelement zumindest teilweise in das Waschmittel einzutauchen, und/oder kann das Transportelement zumindest teilweise in das Waschmittel sein oder werden. Die Reinigungseinheit kann alternativ oder zusätzlich Bürsten, Schrubber oder dergleichen aufweisen, und/oder dazu eingerichtet sein, das Transportelement mechanisch zu säubern. Wird ein Transportelement nach dem Ernten bzw. Entfernen der Pflanzen nochmals verwendet und/oder der Saatstation zugeführt, so kann vorgesehen sein, das Transportelement vor Zuführen zu der Saatstation zu reinigen, z.B. mit der Reinigungseinheit und/oder Reinigungsstation. Die Fördervorrichtung kann ein vorstehend beschriebenes Förderband sein oder aufweisen.

Es kann vorgesehen sein, dass mindestens eine Beleuchtungseinheit an, in oder bei einem oder mehreren Abschnitten der Fördervorrichtung angeordnet ist, so dass die Pflanzen und/der Pflanzenplugs zumindest abschnittsweise, d.h. bei Transport durch den oder die jeweiligen Abschnitte beleuchtet und/oder bestrahlt werden. Es kann vorgesehen sein, dass mindestens eine Nährstoffmittelversorgungseinheit an, in oder bei einem oder mehreren Abschnitten der Fördervorrichtung angeordnet ist, so dass die Pflanzen und/der Pflanzenplugs zumindest abschnittsweise, d.h. bei Transport durch den oder die jeweiligen Abschnitte mit Nährstoffen versorgt werden. Die Nährstoffmittelversorgungseinheit kann beweglich sein, und/oder entlang des Abschnitts der Fördervorrichtung bewegbar sein oder verfahren werden.

In einigen Ausführungsformen umfasst das Pflanzenzuchtsystem ausschließlich Transportelemente, die nicht zu einem Förderbandabschnitt verbunden sind. Es kann vorgesehen sein, dass mindestens einer, mehrere oder alle der Transportelemente unabhängig von mindestens einem, mehreren oder allen anderen Transportelemente von der Fördervorrichtung transportierbar bzw. bewegbar sind. In anderen Worten kann jedes der Transportelemente des Pflanzenzuchtsystems individuell verfahren bzw., bewegt werden, so dass sich unterschiedliche Verweilzeiten der jeweiligen Transportelemente ergeben können.

In einigen Ausführungsformen sind mindestens zwei, mehrere oder alle Transportelemente zu Förderbandabschnitten verbunden. Es kann vorgesehen sein, dass mindestens einer, mehrere oder alle der Förderbandabschnitte und/oder Transportelemente unabhängig von mindestens einem, mehreren oder allen anderen Förderbandabschnitten und/oder Transportelemente von der Fördervorrichtung transportierbar bzw. bewegbar sind. Alternativ oder zusätzlich kann vorgesehen sein, dass mindestens einer, mehrere oder alle der Förderbandabschnitte und/oder Transportelemente nicht unabhängig von mindestens einem, mehreren oder allen anderen Förderbandabschnitten und/oder Transportelemente von der Fördervorrichtung transportierbar bzw. bewegbar sind, d.h. um gleiche Distanzen oder Abschnitte verfahren, transportiert und/oder bewegt sind oder werden.

Es kann vorgesehen sein, dass einer, mehrere oder alle Transportelemente und/oder Förderbandabschnitte von der Fördervorrichtung kontinuierlich bewegt werden, d.h. zwischen Saatstation und Erntestation nicht angehalten werden. Die Fördergeschwindigkeit und/oder Vorschubgeschwindigkeit kann abschnittsweise verändert sein oder werden. Alternativ kann vorgesehen sein, dass einer, mehrere oder alle Transportelemente und/oder Förderbandabschnitte gleichmäßig bzw. mit gleicher Fördergeschwindigkeit und/oder Vorschubgeschwindigkeit zwischen Saatstation und Erntestation von der Fördervorrichtung bewegt bzw. verfahren werden. Die Fördergeschwindigkeit und/oder Vorschubgeschwindigkeit kann dabei derart angepasst sein, dass in der Saatstation eingesetzte Pflanzen und/oder Pflanzenplugs bei Erreichen der Erntestation erntereif sind. Die Zeitdauer zwischen Einsetzen der Pflanzen bzw. Pflanzenplugs in das Transportelement und dem Zeitpunkt, zu dem die Pflanze erntereif ist, kann einer Verweildauer der Pflanze bzw. des Pflanzenplugs im Pflanzenzuchtsystem entsprechen.

In einigen Ausführungsformen kann vorgesehen sein, dass einer, mehrere oder alle Transportelemente und/oder Förderbandabschnitte von der Fördervorrichtung zwischen Saatstation und Erntestation einmal oder mehrmals für angehalten bzw. gestoppt werden. Die Fördergeschwindigkeit und/oder Vorschubgeschwindigkeit eines Transportelements und/oder Förderbandabschnitts kann abschnittsweise verändert sein oder werden. Die Fördergeschwindigkeit und/oder Vorschubgeschwindigkeit sowie die jeweiligen Stoppzeiten können dabei derart angepasst sein, dass in der Saatstation eingesetzte Pflanzen und/oder Pflanzenplugs bei Erreichen der Erntestation erntereif sind. Die Zeitdauer zwischen Einsetzen der Pflanzen bzw. Pflanzenplugs in das Transportelement und dem Zeitpunkt, zu dem die Pflanze erntereif ist, kann einer Verweildauer der Pflanze bzw. des Pflanzenplugs im Pflanzenzuchtsystem entsprechen.

Während der Verweilzeit der Pflanzen und/oder Pflanzenplugs im Pflanzenzuchtsystem und/oder beim Transportieren der Transportelemente oder Förderbandabschnitte zwischen Saatstation und Erntestation können die Pflanzen von der Beleuchtungseinheit zumindest zeitweise beleuchtet bzw. bestrahlt sein oder werden. Während der Verweilzeit der Pflanzen und/oder Pflanzenplugs im Pflanzenzuchtsystem und/oder beim Transportieren der Transportelemente oder Förderbandabschnitte zwischen Saatstation und Erntestation können die Pflanzen von der Nährstoffmittelversorgungseinheit zumindest zeitweise mit Nährstoffen versorgt sein oder werden.

Es kann vorgesehen sein, dass mindestens eine, mehrere oder alle Beleuchtungseinheiten in dedizierten Beleuchtungsstationen angeordnet sind. Es kann vorgesehen sein, dass mindestens eine, mehrere oder alle Nährstoffmittelversorgungseinheiten in dedizierten Nährstoffmittelversorgungsstationen angeordnet sind.

Die Beleuchtungseinheit kann eine mindestens eine Lampe, Strahler, oder dergleichen aufweisen. Die Beleuchtungseinheit kann dazu eingerichtet sein, Licht, UV-Strahlung, elektromagnetische Strahlung und/oder Wärme abzustrahlen. Die Beleuchtungseinheit kann ein dazu geeignetes Beleuchtungsmittel aufweisen.

Die Fördervorrichtung kann ein vorstehend beschriebenes Förderband sein oder aufweisen. Die Fördervorrichtung kann dazu eingerichtet sein, einen Förderbandabschnitt aufweisend mindestens zwei Transportelemente und mindestens eine Querverstrebung zu fördern oder zu transportieren. Es kann vorgesehen sein, dass nicht alle der Transportelemente zu Förderbandabschnitten verbunden sind. In einigen Ausführungsformen können auch einzelne Transportelemente zusätzlich zu Förderbandabschnitten von der Fördervorrichtung transportiert werden. In einigen Ausführungsformen sind keine der Transportelemente mit Querverschiebungen zu Förderbandabschnitten verbunden, sondern jedes Transportelement individuell von der Fördervorrichtung förderbar bzw. transportierbar. In einigen Ausführungsformen kann das Förderband aus miteinander verbundenen Transportelemente und/oder Förderbandabschnitten bestehen, so dass die miteinander verbundenen Transportelemente und/oder Förderbandabschnitten um jeweils eine gleiche Distanz oder Abschnitt verfahren bzw. bewegt werden. In einigen Ausführungsformen kann das Förderband miteinander verbundenen Transportelemente und/oder Förderbandabschnitten aufweisen, so dass die miteinander verbundenen Transportelemente und/oder Förderbandabschnitten um jeweils eine gleiche Distanz oder Abschnitt verfahren bzw. bewegt werden.

Die Fördervorrichtung kann ein Zugmittel aufweisen, mittels dem Transportelemente und/oder Förderbandabschnitte transportiert, bewegt oder verfahren werden können.

Die Saatstation kann dazu eingerichtet sein, die Pflanzen oder Pflanzenplugs derart in die Aufnahme einzusetzen, dass Blätter und/oder Früchte der Pflanzen oberhalb der Oberseite des Grundkörpers ragen und Wurzeln der Pflanzen durch die zweite Öffnungsquerschnittsfläche unterhalb der Unterseite des Grundkörpers ragen. Alternativ oder zusätzlich kann die Saatstation kann dazu eingerichtet sein, die Pflanzen oder Pflanzenplugs derart in die Aufnahme einzusetzen, von den Pflanzen beim Transportieren mittels der Fördervorrichtung gebildete Blätter und/oder Früchte oberhalb der Oberseite des Grundkörpers ragen und von den Pflanzen beim Transportieren mittels der Fördervorrichtung gebildete Wurzeln durch die zweite Öffnungsquerschnittsfläche unterhalb der Unterseite des Grundkörpers ragen.

Die Nährstoffmittelversorgungseinheit einen Zerstäuber aufweisen, über den eine Nährstofflösung und/oder Düngemittel auf in die Aufnahme der Transportelemente eingesetzte Pflanzen oder Pflanzenplugs aufsprühbar ist. Es kann vorgesehen sein, dass der Zerstäuber Nährstofflösung und/oder Düngemittel auf aus dem Transportelement hinausragenden Wurzeln der Pflanzen aufsprühen kann. Die Nährstofflösung und/oder das Düngemittel kann flüssig sein oder eine flüssige Phase aufweisen. Die Nährstoffmittelversorgungseinheit kann dazu eingerichtet sein, die Pflanzen und/oder Pflanzenplugs aeroponisch mit Nährstoffen zu versorgen. Alternativ oder zusätzlich kann die Nährstoffmittelversorgungseinheit kann dazu eingerichtet sein, die Pflanzen und/oder Pflanzenplugs hydroponisch mit Nährstoffen zu versorgen.Die Nährstoffmittelversorgungseinheit kann derart angeordnet sein, dass eine Förderrichtung der von der Fördervorrichtung transportierten Transportelemente oberhalb der Nährstoffmittelversorgungseinheit verläuft. Die Nährstoffmittelversorgungseinheit kann unterhalb der Fördervorrichtung angeordnet sein.

Die Beleuchtungseinheit kann derart angeordnet sein, dass eine Förderrichtung der von der Fördervorrichtung transportierten Transportelemente unterhalb der Beleuchtungseinheit verläuft. Die Beleuchtungseinheit kann oberhalb der Fördervorrichtung angeordnet ein. Sind die Transportelemente und/oder der Förderbandabschnitt lichtundurchlässig, so kann damit eine Beleuchtung oder Bestrahulung der Unterseite der Transportelemente bzw. des Förderbandabschnitts vermieden oder verringert werden. Bei in die Aufnahme eingesetzten Pflanzen und/oder Pflanzenplugs kann damit eine Bestrahlung oder Beleuchtung der Wurzeln verringert oder vermieden werden. Es kann vorgesehen sein, dass der Bereich unterhalb der Fördervorrichtung, durch den z.B. die Wurzeln der transportierten Pflanzen verfahren werden, unbeleuchtet und/oder abgedunkelt ist und/oder im Dunkeln liegt.

In einigen Ausführungsformen des Pflanzenzuchtsystems, in denen zumindest bereichsweise alle Beleuchtungseinheiten ausschließlich in Beleuchtungsstation angeordnet sind, kann vorgesehen sein, dass außerhalb der Beleuchtungsstation liegende Bereiche unbeleuchtet und/oder abgedunkelt sind und/oder im Dunkeln liegen. Es kann vorgesehen sein, dass die Beleuchtungsstation nach außen lichtundurchlässig ist, so dass in die Beleuchtungsstation verfahrene Pflanzen ausschließlich in der Beleuchtungsstation bestrahlt bzw. beleuchtet werden.

Die Fördervorrichtung kann dazu eingerichtet sein, die Transportelemente zwischen Saatstation und Erntestation zumindest in einem ersten Abschnitt im wesentlichen in eine horizontal Richtung und in einem zweiten Abschnitt unter einem Neigungswinkel zur horizontalen Richtung zu transportieren. Der Neigungswinkel kann ein spitzer Winkel sein. Es kann vorgesehen sein, dass das Pflanzenzuchtsystem über mehrere Ebenen angeordnet ist, und/oder Stationen des Pflanzenzuchtsystems sich auf unterschiedlichen Ebenen, Etagen, Höhen oder dergleichen befinden. Damit kann das Pflanzenzuchtsystems einen verringerten Flächenbedarf aufweisen. Die Fördervorrichtung kann dazu eingerichtet sein, einen Höhenunterschied zwischen verschiedenen Stationen des Pflanzenzuchtsystems zu überwinden bzw. zu überbrücken.

Alternativ oder zusätzlich kann vorgesehen sein, dass Transportelemente und/oder Förderbandabschnitt von der Fördervorrichtung entlang Kurven, Wellen, Tälern, Hügeln bzw. kurvig, wellenförmig, schleifenförmig oder dergleichen umgelenkt, verfahren, bewegt und/oder transportiert sind oder werden. Die Fördervorrichtung kann dazu geeignet eingerichtet sein. Durch den entsprechenden Förderweg können in den Transportelementen aufgenommene Pflanzen bewegt, geschüttelt und/ anders ausgerichtet sein oder werden. Dadurch kann das Pflanzuenwachstum begünstigt sein oder werden.

In einigen Ausführungsformen kann mindestens eine Beleuchtungseinheit in einem Abschnitt der Fördervorrichtung angeordnet sein, so dass beim Transportieren der Transportelemente und/oder des Förderbandabschnitts durch diesen Abschnitt der Förderbandabschnitt und/oder die Transportelemente bzw. die Pflanzen und/oder Pflanzenplugs beleuchtet werden. In einigen Ausführungsformen können der Förderbandabschnitt und/oder die Transportelemente bei oder unter einer Beleuchtungseinheit oder zumindest in deren Nähe zumindest zeitweise für eine Beleuchtungsdauer gestoppt sein oder werden, so dass der Förderbandabschnitt und/oder das Transportelement bzw. die Pflanzen und/oder Pflanzenplugs über die Beleuchtungsdauer von der Beleuchtungseinheit beleuchtet werden.

In einigen Ausführungsformen kann mindestens eine Nährstoffmittelversorgungseinheit in einem Abschnitt der Fördervorrichtung angeordnet sein, so dass beim Transportieren der Transportelemente und/oder des Förderbandabschnitts durch diesen Abschnitt die sich in dem Förderbandabschnitt und/oder den Transportelementen befindlichen Pflanzen und/oder Pflanzenplugs mit Nährstoffen, der Nährstofflösung und/oder dem Düngemittel versorgt werden. In einigen Ausführungsformen können der Förderbandabschnitt und/oder die Transportelemente bei oder über einer Nährstoffmittelversorgungseinheit oder zumindest in deren Nähe zumindest zeitweise für eine Nährstoffversorgungsdauer gestoppt sein oder werden, so dass die Pflanzen und/oder Pflanzenplugs über die Nährstoffversorgungsdauer von der Nährstoffversorgungseinheit mit Nährstoffen, Nährstofflösung und/oder Düngemittel versorgt werden.

Es kann vorgesehen sein, dass die Fördervorrichtung derart angeordnet ist bzw. die Transportelemente und/oder den Förderbandabschnitt derart transportiert bzw. fördert, dass die Transportelemente und/oder der Förderbandabschnitt beim transportieren gedreht, geschüttelt, in horizontale oder vertikale Richtung umgelenkt, schleifenförmig geführt sind oder werden.

Die Fördervorrichtung kann dazu eingerichtet sein, die Transportelemente zwischen Saatstation und Erntestation zumindest in einem dritten Abschnitt im wesentlichen in eine vertikale Richtung zu transportieren.

Das Pflanzenzuchtsystem kann eine Pufferstation zwischen Saatstation und Erntestation aufweisen. Die Fördervorrichtung kann dazu eingerichtet sein, Transportelemente von der Saatstation zu der Pufferstation und von der Pufferstation zu der Erntestation zu transportieren. Die Pufferstation dazu eingerichtet sein, Transportelemente von der Fördervorrichtung zu lösen, gelöste Transportelemente für eine bestimmte Zeit zu lagern und gelagerte Transportelemente mit der Fördervorrichtung zu verbinden.

Mindestens eine der Beleuchtungseinheiten und/oder mindestens eine der Nährstoffversorgungseinheiten kann in der Pufferstation angeordnet sein.

Die Saatstation kann dazu eingerichtet sein, ein Identifizierungselement des Transportelements mit Informationen der in die Aufnahme eingesetzter oder einzusetzender Pflanzen oder Pflanzenplugs zu beschreiben. Alternativ oder zusätzlich kann die Saatstation dazu eingerichtet sein, ein Identifizierungselement enthaltend Informationen der in die Aufnahme eingesetzter oder einzusetzender Pflanzen oder Pflanzenplugs an dem Transportelement anzubringen. Das Identifizierungselement kann ein RFID-Chip, ein Barcode und/oder ein QR-Code sein oder aufweisen.

Die Pufferstation kann ein Lesegerät zum Auslesen der Informationen des Identifizierungselements aufweisen und die Pufferstation kann dazu eingerichtet sein, das das Identifizierungselement aufweisende Transportelement für einen in Abhängigkeit der gelesenen Informationen bestimmten Zeitraum zu lagern.

Die Beleuchtungseinheit kann ein Lesegerät zum Auslesen der Informationen des Identifizierungselements aufweisen und die Beleuchtungseinheit kann dazu eingerichtet sein, Licht mit einer in Abhängigkeit der gelesenen Informationen bestimmten Beleuchtungsdauer, Beleuchtungsintensität und/oder ein Beleuchtungsspektrum abzustrahlen.

Die Nährstoffversorgungseinheit kann ein Lesegerät zum Auslesen der Informationen des Identifizierungselements aufweisen und die Nährstoffversorgungseinheit dazu eingerichtet ist, ein in Abhängigkeit der gelesenen Informationen bestimmte oder gewählte Nährstofflösung und/oder Düngemittel mit einem eine in Abhängigkeit der gelesenen Informationen bestimmten Volumen- oder Massenstrom abzugeben.

Die Erfindung wird anhand der nachfolgenden Figuren weiter erläutert. Es zeigen:
- Fig. 1: ein erstes Ausführungsbeispiel eines erfindungsgemäßen Transportelements in einer Draufsicht;
- Fig. 2: weitere Ausführungsbeispiele erfindungsgemäßer Transportelemente in einer Draufsicht;
- Fig. 3: noch weitere Ausführungsbeispiele erfindungsgemäßer Transportelemente in einer Draufsicht;
- Fig. 4: Ausführungsbeispiele erfindungsgemäßer Transportelemente in einer Schnittansicht;
- Fig. 5: weitere Ausführungsbeispiele erfindungsgemäßer Transportelemente in einer Schnittansicht, mit eingesetztem Pflanzenplug;
- Fig. 6: noch weitere Ausführungsbeispiele erfindungsgemäßer Transportelemente in einer Schnittansicht;
- Fig. 7: einen Ausschnitt eines Ausführungsbeispiels eines erfindungsgemäßen Förderbands;
- Fig. 8: einen Ausschnitt eines Ausführungsbeispiels eines erfindungsgemäßen Förderbands, sowie eine Umlenkrolle;
- Fig. 9: ein Ausführungsbeispiel eines Fördervorrichtungsverbindungselements in einer Sperrposition;
- Fig. 10: das Ausführungsbeispiel eines Fördervorrichtungsverbindungselements der Fig. 9 in einer Freigabeposition;
- Fig. 11: eine schematische Darstellung eines Ausführungsbeispiels eines erfindungsgemäßen Pflanzenzuchtsystems;
- Fig. 12: eine schematische Darstellung eines weiteren Ausführungsbeispiels eines erfindungsgemäßen Pflanzenzuchtsystems;
- Fig. 13: einen Abschnitt einer Fördervorrichtung mit Beleuchtungseinheit und Nährstoffmittelversorgungseinheit;
- Fig. 14: eine schematische Darstellung eines weiteren Ausführungsbeispiels eines erfindungsgemäßen Pflanzenzuchtsystems;
- Fig. 15: eine schematische Darstellung noch eines weiteren Ausführungsbeispiels eines erfindungsgemäßen Pflanzenzuchtsystems;
- Fig. 16: eine Ausführungsform eines erfindungsgemäßen Transportelements;
- Fig. 17: eine weitere Ausführungsform eines erfindungsgemäßen Transportelements;
- Fig. 18: noch eine weitere Ausführungsform eines erfindungsgemäßen Transportelements oder Förderbands in einer perspektivischen Ansicht und einer Seitenansicht; und
- Fig. 19: die in Fig. 18 dargestellte Ausführungsform eines erfindungsgemäßen Transportelements oder Förderbands in zwei weiteren perspektivischen Ansichten.

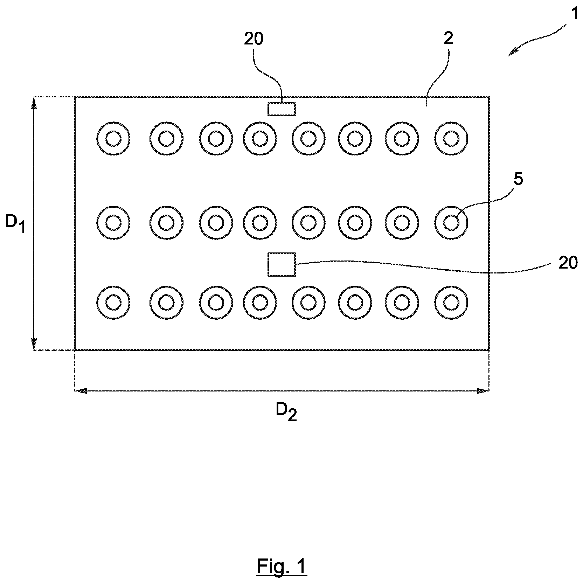

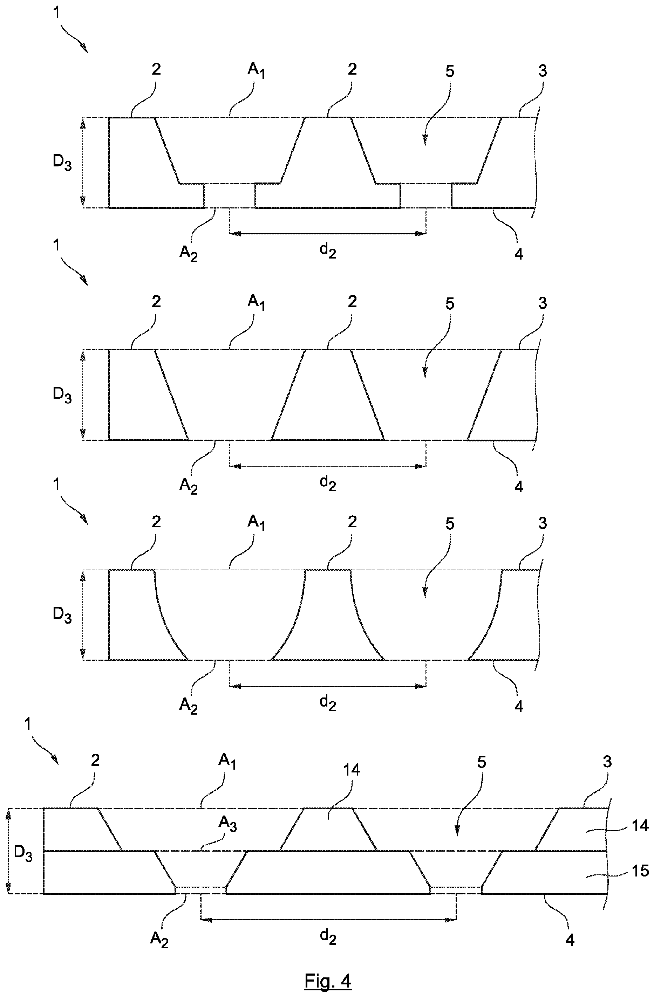

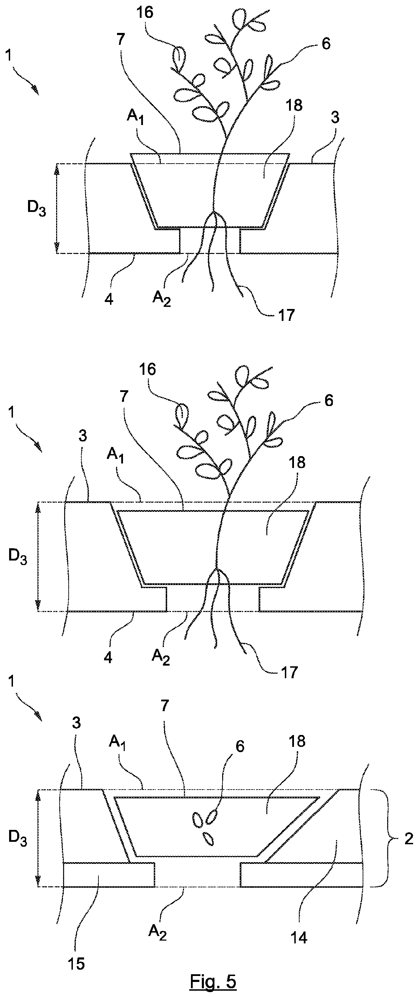

Figur 1 zeigt eine erste Ausführungsform eines erfindungsgemäßen Transportelements 1. Das Transportelement 1 weist einen Grundkörper 2 auf. Der Grundkörper 2 kann wie in Figur 1 gezeigt im Wesentlichen eine rechteckige Form haben. Der Grundkörper 2 kann plattenförmig, flach und/oder eben sein. Der Grundkörper 2 kann wie in Figur 1 zeigt eine erste Abmessung D₁ und eine zweite Abmessung D₂ haben. D₁ und D2 können so gewählt sein, dass der Grundkörper im Wesentlichen rechteckig sein kann. Das Transportelement 1 weist mindestens eine Aufnahme 5, bevorzugt mehrere Aufnahmen 5 auf. Die Aufnahmen 5 können wie in Figur 1 gezeigt regelmäßig auf bzw. in dem Grundkörper 2 angeordnet sein. Die Aufnahme 5 kann von einer Oberseite 3 des Transportelements 1 bzw. des Grundkörpers 2 zu einer Unterseite 4 des Transportelements 1 verlaufen, vergleiche z.B. auch Figuren 4 und 5. Die Aufnahme 5 kann sich durch den Grundkörper 2 hindurch erstrecken. Der Grundkörper 2 kann im Wesentlichen flach, eben, scheibenförmig, plattenförmig und/oder quaderförmig sein und/oder eine entsprechende Form aufweisen. Das Transportelement 1 und/oder der Grundkörper 2 kann zumindest abschnittsweise eine Kunststofffolie aufweisen oder aus einer solchen bestehen. Alternativ oder zusätzlich kann das Transportelement 1 und/oder der Grundkörper 2 zumindest abschnittsweise einen Kunststoff aufweisen oder aus einem solchen bestehen.

In einigen Ausführungsformen kann das Transportelement 1 ein Identifizierungselement 20 aufweisen. Das Identifizierungselement 20 kann z.B. an einem Seitenabschnitt, z.B. an einer Oberfläche des Grundkörpers 2, angebracht sein oder werden. Das Identifizierungselement 20 kann ein RFID-Chip, ein Barcode, ein Farbcode, ein Piktogramm, ein alphanumerischer Code und/oder ein QR-Code sein oder aufweisen. Das Identifizierungselement 20 kann Informationen bezüglich des Transportelements 1, und/oder in der Aufnahme 5 eingesetzte und/oder noch einzusetzender Pflanzen 6 und/oder Pflanzenplug 7 aufweisen.

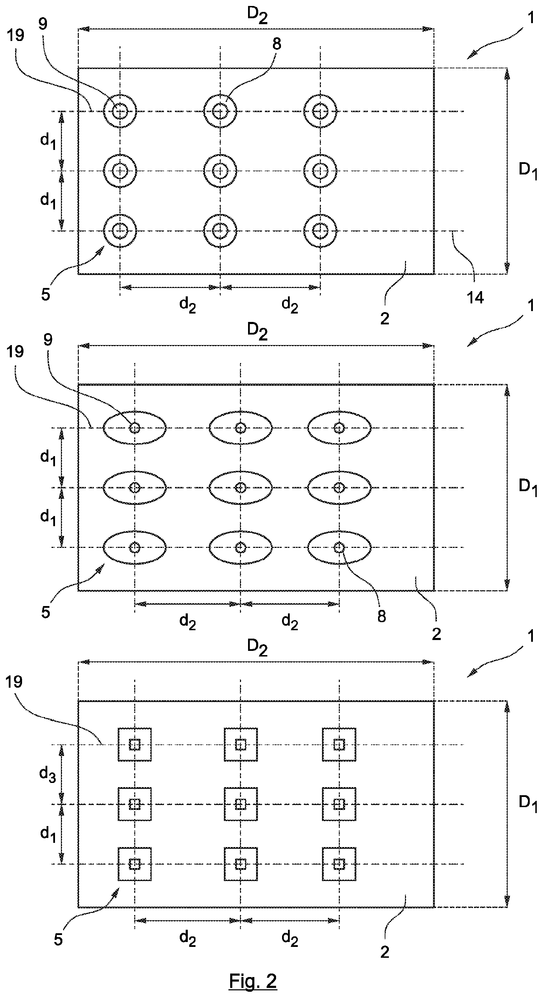

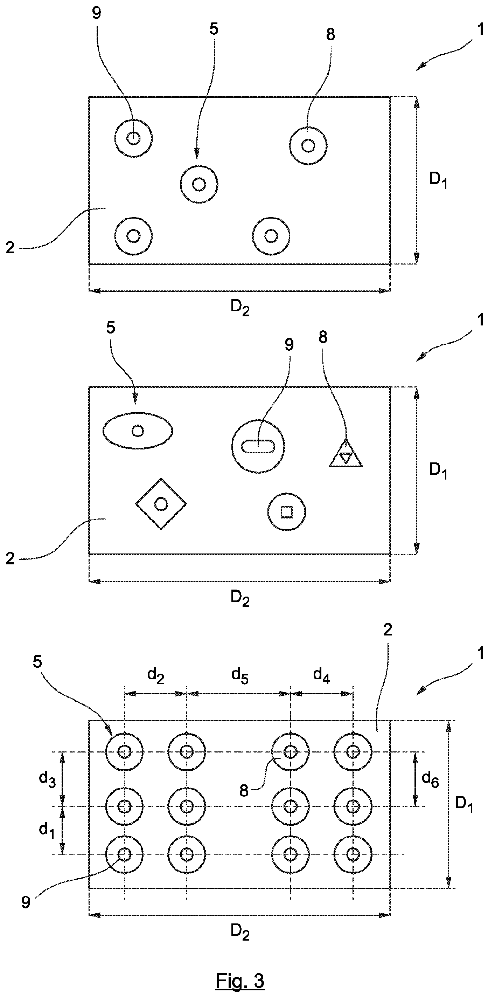

Figuren 2 und 3 zeigen erfindungsgemäße Ausführungsbeispiele von Transportelementen 1 mit Grundkörper 2. Das Transportelement 1 weist jeweils mehrere Aufnahmen 5 auf. Wie in Figur 2 und 3 gezeigt, können die Aufnahmen 5 eine runde, elliptische, polygonale, z.B. rechteckige, trapezförmige, dreiecksförmige, diamantförmige, rautenförmige Form oder dergleichen aufweisen. Die Aufnahme 5 kann insbesondere eine runde, elliptische, polygonale, z.B. rechteckige, trapezförmige, dreiecksförmige, diamantförmige, rautenförmige erste Öffnungen 8 und/oder zweite Öffnung 9 bzw. eine ersten Öffnungsquerschnittfläche A₁ und/oder zweite Öffnungsquerschnittfläche ab 2 aufweisen. In einigen Ausführungsformen kann vorgesehen sein, dass die Aufnahmen 5 in Reihen 19 bzw. einem Raster angeordnet sind. Zwei jeweils benachbarte Aufnahmen 5 können unter einem ersten Abstand d₁ entlang einer ersten Abmessung D₁ des Transportelements 1 bzw. des Grundkörpers 2 voneinander beabstandet sein. Zwei jeweils benachbarte Aufnahmen 5 können unter einem zweiten Abstand d₂ entlang einer zweiten Abmessung D₂ des Transportelements 1 bzw. des Grundkörpers 2 voneinander beabstandet sein. Es kann vorgesehen sein, dass der Abstand d₁ und/oder der Abstand d₂ jeweils benachbarter Aufnahmen 5 über den gesamten Grundkörper 2 bzw. Transportelement 1 bzw. für alle Aufnahmen 5 gleich ist. Alternativ kann vorgesehen sein, dass mindestens zwei, mehrere und/oder alle Aufnahmen 5 jeweils unterschiedliche Abstände d₁ und/oder d₂ zu mindestens einer benachbarten Aufnahme 5 aufweisen. Wie in Figur 2 gezeigt, können die Aufnahmen 5 zumindest abschnittsweise über den Grundkörper 2 bzw. Transportelement 1 regelmäßig verteilt sein. Alternativ können wie in Figur 3 gezeigt die Aufnahmen 5 zumindest abschnittsweise unregelmäßig über den Grundkörper 2 bzw.

Transportelement 1 verteilt sein. Wie in Figur 3 gezeigt, kann mindestens eine, mehrere und/oder alle Aufnahmen 5 von mindestens einer, mehreren oder allen Aufnahmen 5 verschiedene Formen, Abmessungen, Beanstandungen oder aufweisen.

In einigen Ausführungsformen können die Aufnahmen 5 bereichsweise homogen, bereichsübergreifend aber inhomogen sein. Beispielsweise können in einem ersten Bereich eines Transportelements 1 bzw. eines Grundkörpers 2 Aufnahmen 5 zueinander unter einem ersten Abstand d₁ und einem zweiten Abstand d₂ regelmäßig beabstandet sein. In einem zweiten Bereich können Aufnahmen 5 zueinander unter einem dritten Abstand d₃ und dem zweiten Abstand d₂ regelmäßig beabstandet sein. In einem dritten Bereich können Aufnahmen 5 zueinander unter dem ersten Abstand d₁ und einem vierten Abstand d₄ regelmäßig beabstandet sein. In einem vierten Bereich können Aufnahmen 5 zueinander unter einem sechsten Abstand d₆ und dem vierten Abstand d₄ regelmäßig beabstandet sein. Der erste und zweite Bereich kann von dem dritten und vierten Bereich unter einem Abstand d₅ beabstandet sein. Keiner, zwei, mehrere oder alle Abstände d₁, d₂, d₃, d₄, d₅ und/oder d₆ können gleich sein. Die beispielhaft beschriebenen Ausführungsform kann dabei beliebig verallgemeinert und/oder abgeändert werden. Es kann vorgesehen sein, dass die Form, Abmessungen und/oder Anordnung der Aufnahme 5 bzw. der Aufnahmen 5 und ggf. deren Beabstandungen in Abhängigkeit der in die Aufnahme 5 eingesetzten oder einzusetzenden Pflanzen 6 und/oder Pflanzenplugs 7 bestimmt oder vorgegeben ist.

Figuren 4, 5 und 6 zeigen beispielhafte Querschnitte durch beispielhafte erfindungsgemäße Ausführungsformen von Transportelementen 1. Wie in den Figuren dargestellt, ist die obere Querschnittsfläche A₁ der Aufnahme 5 an der Oberseite 3 des Grundkörpers 2 größer als die zweite Querschnittsfläche A₂ der Aufnahme 5 an der Unterseite 4 des Grundkörpers 2. Die Aufnahme 5 kann wie in Figur 4 gezeigt beispielsweise zumindest abschnittsweise kegelstumpfförmig, zylinderförmig, gerundet, schalenförmig und/oder stufenförmig sein bzw. eine entsprechende Form aufweisen. In einigen Ausführungsformen können alle Aufnahmen 5 desselben Transportelements 1 bzw. Grundkörpers 2 dieselbe Form und/oder Abmessungen aufweisen bzw. gleich dimensioniert sein. Es kann auch vorgesehen sein, dass mindestens eine Aufnahme 5 eine von einer zweiten Aufnahme 5 desselben Transportelements 1 bzw. Grundkörpers 2 unterschiedliche Form und/oder Abmessungen aufweist (nicht in den Figuren dargestellt). Der Grundkörper 2 kann eine dritte Abmessung D3 haben, die senkrecht zu den ersten Abmessung D₁ und der zweiten Abmessung D₂ sein kann. Die dritte Abmessung D₃ kann kleiner als die erste Abmessung D₁ sein. Die dritte Abmessung D₃ kann kleiner als die zweite Abmessung D₂ sein.

Figur 5 zeigt einige Ausführungsbeispiele von in eine Aufnahme 5 eingesetzten Pflanzen und/oder Pflanzenplugs 7. Der Pflanzenplug 7 kann ein Basiselement 18 aufweisen. In einigen Ausführungsformen kann der Pflanzenplug 7 eine Pflanze 6 aufweisen, die in dem Basiselement 18 eingepflanzt sein kann. Das Basiselement 18 kann z.B. Schaumstoff, Steinwolle, Erde, Kunststoff, Kokosfaser, Hanffaser, künstliche oder natürliche Fasern, künstliche oder natürliche Produkte und/oder ein poröses Material aufweisen. Es kann vorgesehen sein, dass die Aufnahme 5 ein Volumen hat, dass im Wesentlichen dem Volumen des Pflanzenplugs 7 bzw. einem Basiselement 18 des Pflanzentags 7 entspricht. Damit kann das Basiselement 18 bzw. das Pflanzenplug7 fest und sicher in der Aufnahme 5 aufgenommen sein. Es kann vorgesehen sein, dass das Basiselement 18 aus der Aufnahme 5 herausragt, vergleiche z.B. die obere Ausführungsform der Figur 5. Es kann auch vorgesehen sein, dass das Basiselement 18 in der Aufnahme 5 versenkt ist, vergleiche z.B. das mittlere Ausführungsbeispiel der Figur 5. Es kann auch vorgesehen sein, dass das Basiselement 18 flächig mit der Oberseite 3 und/oder der Unterseite 4 des Grundkörpers 2 abschließt bzw. bündig ist. Ist die Pflanze in das Basiselement 18 eingepflanzt, so können Wurzeln 17 der Pflanze 6 sich durch das Basiselement 18 erstrecken und aus dem Basiselement 18 herausragen.

In einigen Ausführungsformen kann alternativ oder zusätzlich in mindestens einer, mehrerer oder allen Aufnahme 5 ein Trägermaterial aufgenommen sein, in das die Pflanze 6 eingepflanzt sein kann. Das Trägermaterial kann z.B. Schaumstoff, Steinwolle, Erde, Kunststoff, Kokosfaser, Hanffaser, künstliche oder natürliche Fasern, künstliche oder natürliche Produkte und/oder ein poröses Material aufweisen. Ist die Pflanze in das Trägermaterial eingepflanzt, so können Wurzeln 17 der Pflanze 6 sich durch das Trägermaterial erstrecken und aus dem Trägermaterial herausragen.

Die Pflanze 6 kann Blätter 16 und/oder Früchte aufweisen. Wie in dem unteren Ausführungsbeispiel der Figur 5 dargestellt, kann die Pflanze 6 auch lediglich ein oder mehrere Samen sein oder aufweisen. Die Pflanze 6 kann noch nicht ausgewachsen sein. In einigen Ausführungsformen kann das Pflanzenplug 7 in der Aufnahme 5 aufgenommen sein, wobei noch keine Pflanze 6 in das Basiselement 18 eingepflanzt ist. In einigen Ausführungsformen kann das Pflanzenplug 7 damit keine Pflanze 6 aufweisen. In einigen Ausführungsformen kann alternativ oder zusätzlich vorgesehen sein, dass in mindestens eines, mehrere oder alle Pflanzenplugs 7 Pflanzen 6 eingepflanzt sind. In einigen Ausführungsformen können sich das Basiselement 18 des Pflanzenplugs und das Trägermaterial dadurch unterscheiden, dass das Basiselement 18 in die Aufnahme 5 eingesetzt wird und/odereinsetzbar ist und/oder aus der Aufnahme entfernt wird und/oder entfernbar ist, das Trägermaterial aber in der Aufnahme verbleibt und/oder vor dem Einpflanzen und/oder Einsetzen der Pflanzen 6 und/oder Planzenplugs 7 bereits in der Aufnahme 5 aufgenommen ist. In einigen Ausführungsformen kann das Transportelement 1 das Trägermaterial aufweisen. In einigen In einigen Ausführungsformen kann das Transportelement 1 in mindestens eine Aufnahme aufgenommenes Trägermaterial aufweisen. Ein

Ist ein Pflanzenplug 7 mit einer Pflanze 6 und/oder eine Pflanze 6 in der Aufnahme 5 eingesetzt und/oder eingepflanzt, so können die Wurzeln 17 der Pflanze 6 durch die zweite Öffnung an der Unterseite 4 des Grundkörpers 2 durch den zweiten Öffnungsquerschnitt A 2 hinausragen, vergleiche z.B. die obere und die untere Ausführungsform der Figur 5. Ist ein Pflanzenplug 7 mit einer Pflanze 6 und/oder eine Pflanze 6 in der Aufnahme 5 eingepflanzt, so können Stängel der Pflanze 6, Blätter 16 und/oder Früchte der Pflanze 6 über der Oberseite 3 des Grundkörpers 2 hinausragen bzw. hinausstehen, vergleiche z.B. die in der Figur 5 gezeigte obere und untere Ausführungsform.

In einigen Ausführungsformen kann, wie beispielhaft in den Figuren 4 und 5 gezeigt, das Transportelement 1 bzw. der Grundkörper 2 mehrere Schichten 14, 15 aufweisen. Mindestens eine der Schichten 14, 15 kann lichtabsorbierend sein und/oder zumindest abschnittsweise ein lichtabsorbierendes Material aufweisen oder aus einem solchen bestehen. Mindestens eine der Schichten 14, 15 kann lichtreflektierend sein und/oder zumindest abschnittsweise ein lichtreflektierendes Material aufweisen oder aus einem solchen bestehen. Mindestens eine der Schichten 14, 15 kann im Wesentlichen lichtundurchlässig sein und/oder zumindest abschnittsweise ein im Wesentlichen lichtundurchlässiges Material aufweisen oder aus einem solchen bestehen.

Alternativ oder zusätzlich kann die Oberseite 3 und/oder die Unterseite 4 zumindest abschnittsweise lichtabsorbierend sein und/oder zumindest abschnittsweise ein lichtabsorbierendes Material aufweisen oder aus einem solchen bestehen. Alternativ oder zusätzlich kann die Oberseite 3 und/oder die Unterseite 4 zumindest abschnittsweise mit einem lichtabsorbierendes Material beschichtet und/oder benetzt sein.

Alternativ oder zusätzlich kann die Oberseite 3 und/oder die Unterseite 4 zumindest abschnittsweise lichtreflektierend sein und/oder zumindest abschnittsweise ein lichtreflektierendes Material aufweisen oder aus einem solchen bestehen. Alternativ oder zusätzlich kann die Oberseite 3 und/oder die Unterseite 4 zumindest abschnittsweise mit einem lichtreflektierenden Material beschichtet und/oder benetzt sein.

Alternativ oder zusätzlich kann die Oberseite 3 und/oder die Unterseite 4 zumindest abschnittsweise im Wesentlichen lichtundurchlässig sein und/oder zumindest abschnittsweise ein lichtundurchlässiges Material aufweisen oder aus einem solchen bestehen. Alternativ oder zusätzlich kann die Oberseite 3 und/oder die Unterseite 4 zumindest abschnittsweise mit einem lichtundurchlässigen Material beschichtet und/oder benetzt sein.

In einigen Ausführungsformen kann vorgesehen sein, dass der Grundkörper 2 mindestens einen flexiblen Abschnitt aufweist. In einigen Ausführungsform kann vorgesehen sein das alternativ oder zusätzlich der Grundkörper 2 mindestens einen starren Abschnitt aufweist. Der starre Abschnitt kann verglichen mit dem flexiblen Abschnitt steif sein, insbesondere weniger gut bieg- oder verformbar sein. Es kann vorgesehen sein, dass mindestens eine, mehrere oder alle Aufnahme 5 in mindestens einem starren Abschnitt angeordnet sind. Der flexible Abschnitt kann einen flexiblen Kunststoff, z.B. ein Elastomer, aufweisen oder aus einem solchen bestehen. Der starre Abschnitt kann einen verglichen mit dem flexiblen Abschnitt steifen Kunststoff, z.B. einen Duroplast, aufweisen oder seinen solchen bestehen.

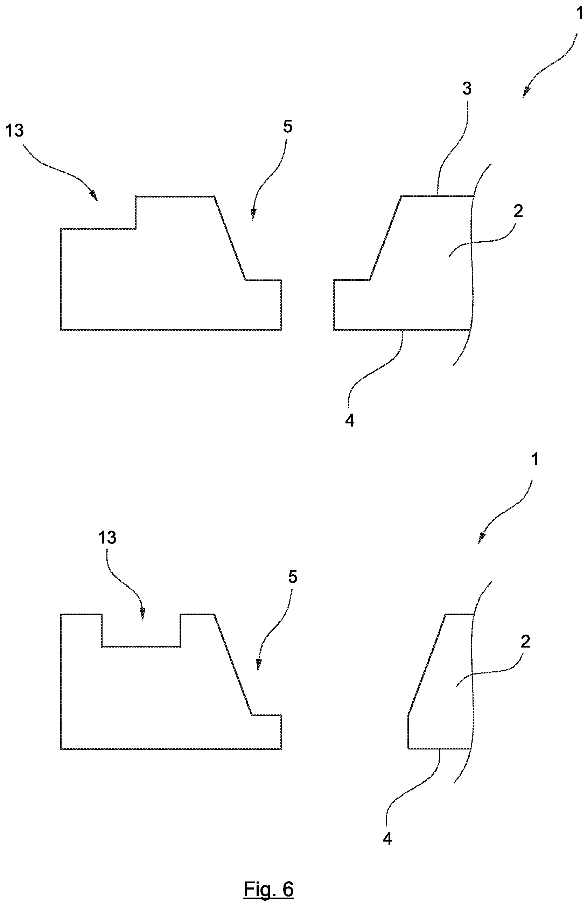

Wie in Figur 6 gezeigt kann der Grundkörper 2 bzw. Transportelement 1 z.B. an einer Außenseite eine Mulde 13 aufweisen. Die Mulde 13 kann dazu eingerichtet sein, mit einer Förderervorrichtung kraft- und/oder formschlüssig verbunden zu sein. Beispielsweise kann ein Fördervorrichtungsverbindungselement, z.B. eine Klemme, ein Mitnehmer, ein Greifer oder dergleichen in die Mulde 13 eingreifen. In einigen anderen Ausführungsformen kann das Transportelement 1 alternativ oder zusätzlich ein Verbindungsmittel aufweisen, das mit der Fördervorrichtung kraft- und/oder formschlüssig verbindbar sein kann. Das Verbindungsmittel kann beispielsweise ein Haken sein oder aufweisen. In einigen Ausführungsformen kann das Verbindungsmittel ein Verbindungselement aufweisen, dass dazu eingerichtet sein kann, mit einem Stift und/oder einem Mitnehmer der Fördervorrichtung verbunden zu werden.

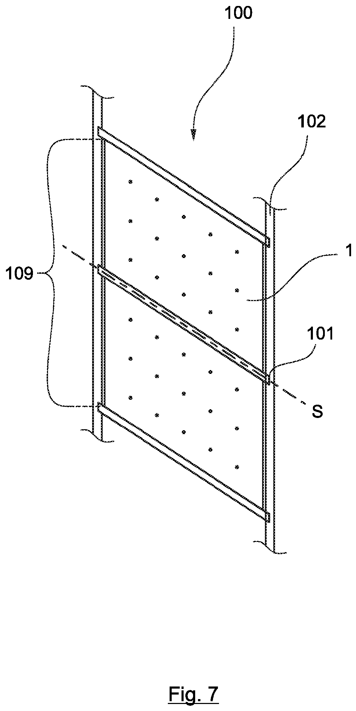

Figur 7 zeigt einen Abschnitt eines erfindungsgemäßen Förderbandes 100. Das Förderband 100 weist zwei Transportelemente 1 und eine Querverstrebung 101 auf, die einen Förderbandabschnitt 109 bilden. Mindestens eines der Transportelemente 1 kann derart mit der Querverstrebung 101 verbunden sein, dass das Transportelement 1 relativ zu der Querverstrebung 101 um eine Schwenkachse S verschwenkbar ist. Alternativ können auch beide Transportelemente 1 derart mit der Querverstrebung101 verbunden sein, dass jedes der Transportelemente 1 um eine Schwenkachse S relativ zu der Querverstrebung 101 verschwenkbar ist.

Transportelement 1 und Querverstrebung 101 können derart miteinander verbunden sein, dass bei einer Verschwenkung des Transportelements 1 relativ zu der Querverstrebung 101 um die Schwenkachse S kein oder nur sehr wenig Licht durch die Verbindung treten kann. Es kann vorgesehen sein, dass bei der Verschwenkung kein Lichtspalt oder dergleichen gebildet wird. In einigen Ausführungsformen kann die Querverstrebung ein Dichtelement, z.B. eine Dichtlippe, sein oder aufweisen. Alternativ oder zusätzlich kann mindestens einer, mehrere oder alle der Transportelemente mindestens ein Dichtelement, z.B. eine Dichtlippe, aufweisen. Das Dichtelement kann dazu eingerichtet sein, fluidisch dicht zu sein, und/oder Transportelemente und/oder Querverstrebung fluidisch abzudichten. Alternativ oder zusätzlich kann das Dichtelement lichtundurchlässig und/oder lichtabsorbierend sein.

Es kann vorgesehen sein, dass das Förderband 100 mehrere Förderbandabschnitte 109 aufweist, die miteinander verbunden sein können. In einigen Ausführungsformen ist das Förderband 100 durch miteinander verbundene Förderbandabschnitte 109 gebildet. In einigen Ausführungsformen besteht das Förderband 100 aus mehreren, miteinander verbundenen Förderbandabschnitten 109. In einigen Ausführungsformen kann vorgesehen sein, dass das Förderband 100 nur abschnittsweise Förderbandabschnitte 109 aufweist. In einigen Ausführungsformen kann vorgesehen sein, dass das Förderband mindestens einen Förderbandabschnitt 109 und mindestens ein nicht zu einem Förderbandabschnitt 109 verbundenes Transportelement 1 aufweist, z.B. ein oder mehrere einzelne Transportelemente 1.

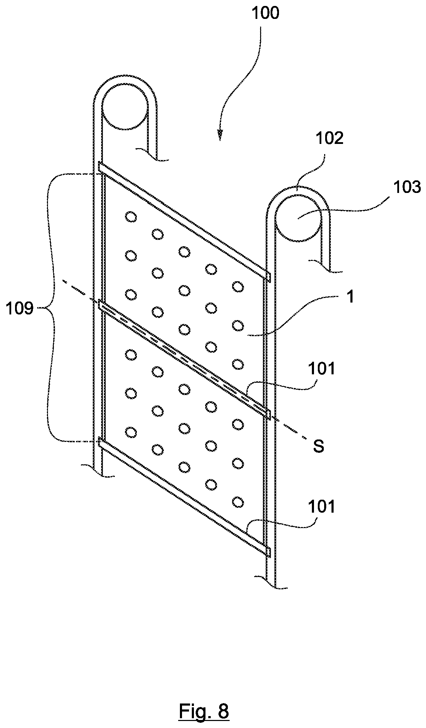

In Figur 8 ist beispielhaft eine Umlenkung 103, z.B. eine Umlenkungsrolle dargestellt, mittels der das Förderband 100 bzw. der Förderbandabschnitt 109 umgelenkt werden kann. Bei dem in Figur 8 dargestellten Ausführungsbeispiel erfolgt eine Umlenkung um 180°. Es kann allerdings auch vorgesehen sein, dass die Umlenkung um einen von 180° verschiedenen Winkel erfolgt, z.B. ein Winkel kleiner als 180°.

Mit den Transportelement 1 und/oder der Querverstrebung 101 kann eine Antriebskomponente 102 verbunden sein. Das Förderband 100 kann die Antriebskomponente 102 aufweisen. Die Antriebskomponente 102 kann beispielsweise eine Förderkette und oder ein Zugmittel sein oder aufweisen.

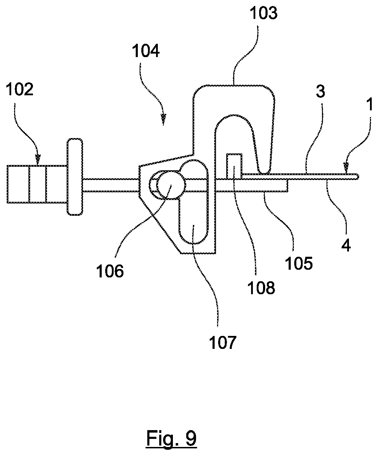

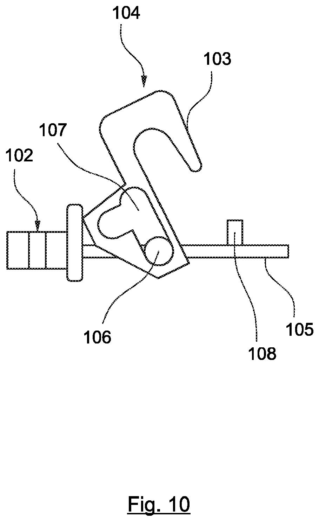

Eine beispielhafte Verbindung von Antriebskomponente 102 und Transportelement 1 ist in Figuren 9 und 10 dargestellt. Mit Antriebskomponente 102 kann wie in den Fig. 9 und 10 gezeigt ein Fördervorrichtungsverbindungselement 104 verbunden sein. Das Fördervorrichtungsverbindungselement 104 kann mit Transportelement 1 verbunden sein. Die Verbindung kann kraft- und/oder formschlüssig sein. Durch das Fördervorrichtungsverbindungselement 104 kann eine Bewegung der Antriebskomponente 102 auf Transportelement 1, Querverstrebung 101, und/oder Förderbandabschnitt 109 übertragen sein oder werden.

Bei dem in Figur 9 und 10 gezeigten Ausführungsbeispiel kann das Fördervorrichtungsverbindungselement 104 eine Auflage 105 und einen Anschlag 108 aufweisen. Ein Transportelement 1 kann mit einer Unterseite 4 auf der Auflage 105 aufliegen. Das Transportelement 1 kann seitlich den Anschlag 108 kontaktieren. Das Fördervorrichtungsverbindungselement 104 kann eine Klemme 103 aufweisen. Die Klemme 103 kann dazu eingerichtet sein, in einer Spannposition, vergleiche z.B. Figur 9, auf die Oberseite des Transportelements 1 zu drücken und damit zusammen mit der Auflage 108 das Transportelement 1 fixieren. Die Klemme 103 kann um einen Pin 106 des Fördervorrichtungsverbindungselement 104 drehbar und/oder bewegbar sein. Die Klemme 103 kann einen Hohlraum 107 aufweisen, in den der Pin 106 eingreifen kann. Hohlraum 107 kann derart dimensioniert und angeordnet sein, dass mittels Hohlraum 107 und Pin 106 die Klemme 103 in einer in Figur 9 dargestellten Spannposition gesperrt, gesichert und/oder gehalten werden kann. Alternativ oder zusätzlich definieren Hohlraum 107 und Pin 106 die Spannposition, so dass die Klemme 103 nicht weiter als die Spannposition verdreht werden kann.

Hohlraum 107 kann derart dimensioniert und angeordnet sein, dass mittels Hohlraum 107 und Pin 106 die Klemme 103 in einer in Figur 10 dargestellten Freigabeposition gesperrt, gesichert und/oder gehalten werden kann. Alternativ oder zusätzlich definieren Hohlraum 107 und Pin 106 die Freigabeposition, so dass die Klemme 103 nicht weiter als die Freigabeposition verdreht werden kann. In der Freigabeposition kann das Transportelement 1 von dem Fördervorrichtungsverbindungselement 104 gelöst sein oder werden bzw. von der Auflage 105 und/oder dem Anschlag 108 gelöst sein oder werden. Alternativ oder zusätzlich kann in der Freigabeposition ein Transportelement 1 auf die Auflage 105 aufgelegt werden, so dass diese anschließend unter Überführung der Klemme 103 in die Sperrposition mit dem Fördervorrichtungsverbindungselement 104 verbunden sein kann oder werden kann. Die Klemme 103 kann dazu eingerichtet sein, zwischen Spannposition und Freigabeposition bzw. umgekehrt drehbar bzw. von der Spannposition in die Freigabeposition oder umgekehrt überführbar zu sein. Das Fördervorrichtungsverbindungselement 104 kann alternativ oder zusätzlich Haken, Stifte, Mitnehmer und/oder Winkel aufweisen, mittels derer das Transportelement 1 und/oder die Querverstrebung 101 und/oder der Förderbandabschnitt 109 mit dem Fördervorrichtungsverbindungselement 104 verbindbar ist. Alternativ oder zusätzlich kann Transportelement 1, Querverstrebung 101 und/oder Förderbandabschnitt 109 mit dem Fördervorrichtungsverbindungselement 104 verschraubt, vernagelt und/oder vernietet sein.

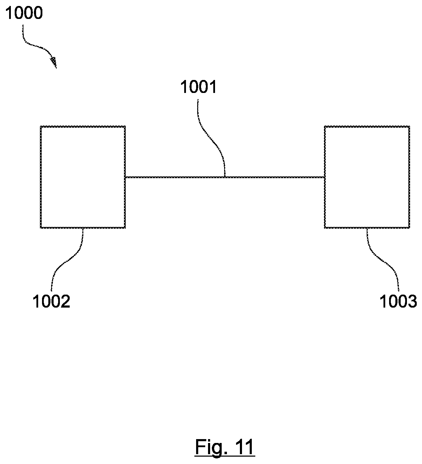

Figur 11 zeigt eine erste Ausführungsform eines Pflanzenzuchtsystems 1000. Das Pflanzenzuchtsystem 1000 weist eine Saatstation 1002, eine Fördervorrichtung 1001 und eine Erntestation 1003 auf. Die Fördervorrichtung 1001 kann dazu eingerichtet sein, Transportelement 1 und/oder Förderbandabschnitt 109 zu transportieren, zu bewegen und/oder zu fördern. Die Saatstation 1002 kann dazu eingerichtet sein, Pflanzen 6 und/oder Pflanzenplugs 7 in Aufnahmen 5 eines Transportelements 1 einzusetzen und/oder einzupflanzen. In einigen Ausführungsformen kann vorgesehen sein, dass Transportelement 1 mit ungefüllten Aufnahmen 5 bzw. mit nicht in die Aufnahmen 5 eingesetzten Pflanzen 6 und/oder Pflanzenplugs 7 der Saatstation 1002 zugeführt werden. In einigen Ausführungsformen kann vorgesehen sein, dass in mindestens eine Aufgabe 5 vor dem Zuführen in die Saatstation 1002 bereits eine oder mehrere Pflanzen 6 und/oder Pflanzenplugs 7 eingesetzt worden sind.

In einigen Ausführungsformen werden Transportelemente 1 von der Fördereinrichtung 1001 der Saatstation 1002 zugeführt. Alternativ oder zusätzlich kann die Saatstation 1002 dazu eingerichtet sein, Transportelemente 1 und/oder Förderbandabschnitte 109 anzunehmen und/oder in das Pflanzenzuchtsystem 1000 neu einzubringen. Es kann vorgesehen sein, dass noch nicht zu dem Pflanzenzuchtsystem 1000 gehörende Transportelement 1 und/oder Förderbandabschnitte 109 an oder mit der Saatstation 1002 dem Pflanzenzuchtsystem 1000 übergeben werden kann. Die Saatstation 1002 kann eine oder mehrere Pflanzen 6 und/oder Pflanzenplugs 7 in ungefüllte Aufnahmen 5 einsetzen. Die Saatstation 1002 kann dazu eingerichtet sein, Jungpflanzen bzw. noch nicht vollständig ausgewachsene Pflanzen 6 in die Aufnahme 5 einpflanzen und/oder einzusetzen. In einigen Ausführungsformen kann die Pflanze 6 samenförmig sein, bzw. einem oder mehreren Samen aufweisen oder entsprechen. In anderen Worten kann die Pflanze 6 beim Einpflanzen oder Einsetzen noch nicht gewachsen, zumindest noch nicht ausgewachsen sein.

Es kann vorgesehen sein, dass die Aufnahme 5 vor dem Einpflanzen und/oder Einsetzen bereits mit einem Trägermaterial, z.B. Erde, Schaumstoff, Steinwolle, einem Kunststoff, Kokosfaser, Hanffaser, künstliche oder natürliche Fasern, künstliche oder natürliche Produkte, einem porösen Material oder dergleichen befüllt ist. Die Saatstation 1002 kann dazu eingerichtet sein, eine Pflanze 6 in das Trägermaterial einzupflanzen. Es kann vorgesehen sein, dass eines, mehrere oder alle der der Saatstation zugeführten Transportelemente 1 Trägermaterial aufweisen. Es kann vorgesehen sein, dass mindestens eine, mehrere oder alle Aufnahmen 5 eines der Saatstation 1002 zugeführten Transportelemente 1 mit Trägermaterial befüllt sind oder solches aufweisen. In einigen anderen Ausführungsformen weist keine oder mindestens eine der Aufnahmen 5 Trägermaterial auf, d.h. Transportelement 1 wird der Saatstation 1002 mit mindestens einer ungefüllter bzw. leerer Aufnahme 5 zugeführt.

Alternativ oder zusätzlich kann die Saatstation 1002 dazu eingerichtet sein, mindestens ein Pflanzenplug 7 in einer Aufnahme 5 einzusetzen. Der Pflanzenplug 7 kann ein Basiselement 18 und eine bereits darin eingepflanzte Pflanze 6 aufweisen. In einigen anderen Ausführungsformen kann der Pflanzenplug 7 das Basiselement 18 aufweisen, wobei noch keine Pflanze 16 in das Basiselement 18 eingepflanzt ist. In diesen Fällen kann vorgesehen sein, dass die Saatstation 1002 erst den Pflanzenplug 7 mit Basiselement 18 in die Aufnahme 5 einsetzt, und anschließend eine Pflanze 6 in das Basiselement 18 einsetzt bzw. einpflanzt. In einigen anderen Ausführungsformen kann vorgesehen sein, dass die Saatstation 1002 erst eine Pflanze 6 in das Basiselement 18 einsetzt bzw. einpflanzt, und dann den Pflanzenplug 7 mit Basiselement 18 und Pflanze 6 in die Aufnahme 5 einsetzt bzw. eingepflanzt.

Saatstation 1002 und/oder Erntestation 1003 können bewegbar und/oder verfahrbar sein. Die Saatstation 1002 kann mindestens einen Roboterarm, Werkzeugarm, Knickarm, Greifer, Umsetzer oder dergleichen aufweisen, um eine Pflanze 6 und/oder Pflanzenplug 7 in eine Aufnahme 5 einzusetzen. Die Saatstation 1002 kann mindestens einen Roboterarm, Werkzeugarm, Knickarm, Greifer, Umsetzer oder dergleichen aufweisen, um eine Pflanze 6 und/oder Pflanzenplug 7 aus der Aufnahme 5 zu entnehmen bzw. zu ernten.

Die Erntestation 1003 kann Pflanzen 6 und/oder Pflanzenplug 7 aus Aufnahmen 5 des Transportelements 1 und/oder Förderbandabschnitts 109 entnehmen und/oder ernten. Wird Pflanzenplug 7 entnommen, so kann in einigen Ausführungsformen vorgesehen sein, dass der Pflanzenplug 7 im wesentlichen vollständig aus der Aufnahme 5 entnommen wird, d. h. Pflanze 6 und Basiselement 18 des Pflanzenplug 7 aus der Aufnahme 5 durch die Erntestation 1003 entnommen und/oder entfernt werden. In einigen Ausführungsformen kann alternativ oder zusätzlich vorgesehen sein, dass nur die Pflanze 6 des Pflanzenplug 7 entnommen wird, das Basiselement 18 des Pflanzenplug 7 aber in der Aufnahme 5 verbleibt. Sind Pflanzen 6 in Trägermaterial eingesetzt worden, so kann vorgesehen sein, dass die Erntestation 1003 sowohl Pflanzen 6 als auch Trägermaterial aus der Aufnahme 5 entnimmt und/oder entfernt. Alternativ oder zusätzlich kann vorgesehen sein, dass die Erntestation 1003 nur Pflanzen 6 entnimmt bzw. erntet, das Trägermaterial aber in der Aufnahme 5 verbleibt. Die Erntestation 1003 kann dazu eingerichtet sein, Pflanzen 6 eines Pflanzenplug 7 von dem Basiselement 18 zu trennen und/oder Früchte und/oder Blätter 16 einer Pflanze 6 von der Pflanze 6 zu trennen. In einigen anderen Ausführungsformen kann alternativ oder zusätzlich vorgesehen sein, dass die Erntestation 1003 dazu eingerichtet sein kann, Pflanzen 6 und/oder Blätter 16 und/oder Früchte einer Pflanze 6 zu verarbeiten, beispielsweise zu verkleinern, zu waschen und/oder zu verpacken. Alternativ oder zusätzlich kann vorgesehen sein, dass eine Verarbeitungsstation der Erntestation nach gelagert ist, wobei die Verarbeitungsstation dazu eingerichtet sein kann, die von der Erntestation entnommenen Pflanzen und/oder Blätter 16 und/oder Früchte einer Pflanze 6 zu verarbeiten, beispielsweise zu verkleinern, zu waschen und/oder zu verpacken.

In einigen Ausführungsformen kann vorgesehen sein, dass die Erntestation 1003 die Transportelemente 1 und/oder Förderbandabschnitt 109 aus dem Pflanzenzuchtsystem 1000 entfernt. Es kann vorgesehen sein, dass Transportelemente 1 und/oder Förderbandabschnitte 109 damit nicht von der Erntestation 1003 zu der Saatstation 1002 zurückgeführt werden. In einigen anderen Ausführungsformen kann alternativ oder zusätzlich vorgesehen sein, dass die Transportelemente 1 und/oder Förderbandabschnitte 109 nach dem Entfernen der Pflanzen 6 und/oder Pflanzenplug 7 und/oder dem Ernten von der Erntestation 1003 zu der Saatstation 1002 zurückgeführt werden, beispielsweise über die Fördervorrichtung 1001. In einigen Ausführungsformen kann nach der Erntestation 1003 eine Reinigungsstation vorgesehen sein, mittels derer die Transportelemente 1 und/oder Förderbandabschnitte 109 gereinigt werden können. In einigen Ausführungsform kann alternativ oder zusätzlich nach der Erntestation 1003 eine Auffüllstation vorgesehen sein, mittels derer Trägermaterial in mindestens einer Aufnahme 5 eingesetzt werden kann. Die Transportelemente 1 und/oder Förderbandabschnitte 109 können anschließend der Saatstation 1002 zugeführt werden.

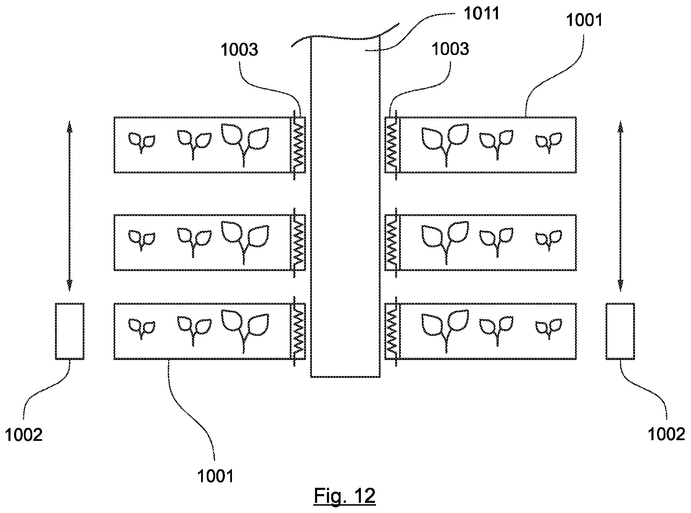

Figur 12 zeigt ein beispielhaftes Pflanzenzuchtsystem 1000 mit zwei Saatstationen 1002, sechs Fördervorrichtungen 1001 und sechs Erntestationen 1003. Bei der in Figur 12 gezeigten Ausführungsform kann je eine Saatstation 1002 je drei Fördervorrichtungen 1001 und je drei Erntestationen 1003 zugeordnet sein. Die Saatstation 1002 kann beispielsweise zwischen drei Saatpositionen beweglich bzw. verfahrbar sein, wobei an einer Saatposition eine Saatstation 1002 von der Fördervorrichtung 1001 geförderte Transportelemente 1 und/oder Förderbandabschnitte 109 befüllen kann. Nach dem Befüllen eines oder mehrerer Transportelemente 1 und/oder Förderbandabschnitten 109 einer ersten Fördervorrichtung 1001 an einer ersten Saatposition kann die Saatstation 1002 zu einer zweiten Saatposition verfahren bzw. bewegt werden, um an der zweiten Saatposition Transportelemente 1 und/oder Förderbandabschnitte 109 einer zweiten Fördervorrichtung 1001 zu befüllen. Die befüllten Transportelemente 1 und/oder Förderbandabschnitte 109 können von einer jeweiligen Fördervorrichtung 1001 zu einer entsprechenden Erntestation 1003 transportiert werden und an der jeweiligen Erntestation 1003 entnommen, geleert und/oder geerntet werden. Die entnommenen Pflanzen 6. und/oder Früchte und/oder Blätter der Pflanzen 6, und/oder entnommene Pflanzenplug 7 können von der jeweiligen Erntestation 1003 an ein Transportmittel 1011 übergeben werden. Es kann vorgesehen sein, dass jede Erntestation 1003 geerntete und/oder entnommene Pflanzen 6, und/oder deren Blätter 16 und/oder Früchte, und/oder geerntete Pflanzenplug 7, demselben Transportmittel 1011 übergibt. Das Transportmittel 1011 kann beispielsweise ein Förderband sein oder aufweisen. Die geernteten und/oder entnommenen Pflanzen 6 und/oder Pflanzenplug 7 können von dem Transportmittel 1011 einer Verarbeitungsstation zugeführt sein oder werden.

In einigen Ausführungsformen kann vorgesehen sein, dass alternativ oder zusätzlich mindestens eine Erntestation 1003 zwischen Erntepositionen an verschiedenen Fördervorrichtungen 1001 bewegbar bzw. verfahrbar ist, so dass dieselbe Erntestation 1003 von verschiedenen Fördervorrichtungen transportierte Transportelemente ernten kann.

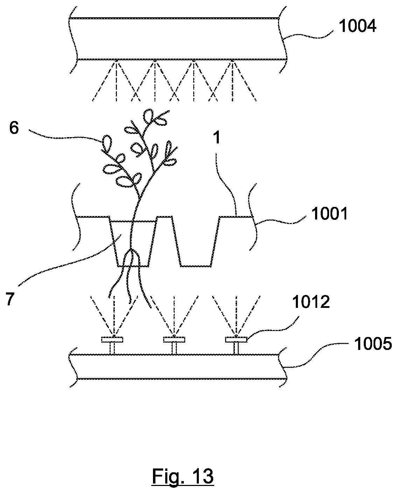

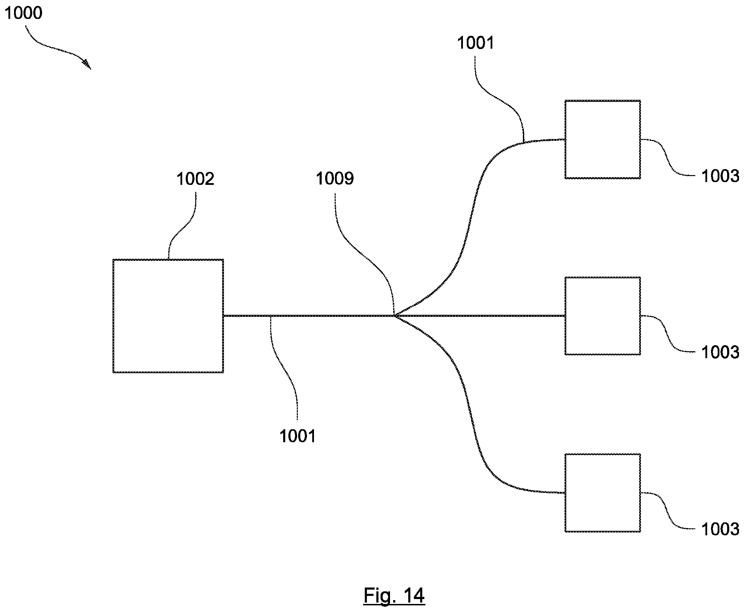

Wie in Fig. 13 gezeigt, kann in mindestens einem Abschnitt der Fördervorrichtung eine Beleuchtungseinheit 1004 angeordnet sein. Die Beleuchtungseinheit 1004 kann dazu eingerichtet sein, in Aufnahmen 5 aufgenommene Pflanzen 6 und/oder Pflanzenplugs 7 zu beleuchten und/oder zu bestrahlen. Die Beleuchtungseinheit 1004 kann dazu eines oder mehrere geeignete Beleuchtungsmittel aufweisen. Das Beleuchtungsmittel kann dazu eingerichtet sein, Licht, UV-Wellen, Wärme und/oder elektromagnetische Strahlung abzustrahlen. Die Beleuchtungseinheit kann in einigen Ausführungsformen wie in Fig. 14 gezeigt im Wesentlichen über der Fördervorrichtung 1001 angeordnet sein. In einigen Ausführungsformen kann die Beleuchtungseinheit 1004 derart angeordnet sein, dass sie die Oberseite 3 von von der Fördervorrichtung 1001 transportierten Transportelemente 1 beleuchten kann. Es kann vorgesehen sein, dass mindestens eine Beleuchtungseinheit 1004 in mindestens einem Abschnitt der Fördervorrichtung 1001 angeordnet ist. In einigen Ausführungsformen kann vorgesehen sein, dass jeweils mindestens eine Beleuchtungseinheit 1004 in mehreren Abschnitten der Fördervorrichtung 1001 angeordnet ist. In einigen Ausführungsformen kann vorgesehen sein, jeden Abschnitt der Fördervorrichtung 1001 zu beleuchten.

Wie in Fig. 13 gezeigt, kann in mindestens einem Abschnitt der Fördervorrichtung 1001 eine Nährstoffmittelversorgungseinheit 1005 angeordnet sein. Die Nährstoffmittelversorgungseinheit 1005 kann dazu eingerichtet sein, in Aufnahmen 5 aufgenommene Pflanzen 6 und/oder Pflanzenplugs 7 mit Nährstoffen zu versorgen. Die Nährstoffmittelversorgungseinheit 1005 kann dazu eingerichtet sein, Wurzeln 17 der Pflanze 6 mit Nährstoffen zu versorgen und/oder Nährstoffe zuzuführen. Die Nährstoffmittelversorgungseinheit 1005 kann dazu geeignet eingerichtet sein. In einigen Ausführungsformen kann die Nährstoffmittelversorgungseinheit 1005 einen oder mehrere Zerstäuber 1012 aufweisen. Der Zerstäuber 1012 kann dazu eingerichtet sein, z.B. ein flüssiges Düngemittelgemisch, eine Nährstofflösung und/oder Nährstoffgemisch zu zerstäuben. Der Zerstäuber 1012 kann dazu eingerichtet sein, flüssiges Düngemittelgemisch, Nährstofflösung und/oder Nährstoffgemisch und/oder Nährstoffe auf die Wurzeln 17 der Pflanze 6 aufzusprühen. Die Nährstoffmittelversorgungseinheit 1005 kann in einigen Ausführungsformen, wie z.B. in Fig. 13 gezeigt, im Wesentlichen unter der Fördervorrichtung 1001 angeordnet sein. In einigen Ausführungsformen kann die Nährstoffmittelversorgungseinheit 1005 derart angeordnet sein, dass sie die Unterseite 4 von von der Fördervorrichtung 1001 transportierten Transportelemente 1 besprühen und/oder benetzen kann. In einigen Ausführungsformen kann die Nährstoffmittelversorgungseinheit 1005 derart angeordnet sein, dass sie der Unterseite 4 von von der Fördervorrichtung 1001 transportierten Transportelemente 1 zugewandt ist. Es kann vorgesehen sein, dass mindestens eine Nährstoffmittelversorgungseinheit 1005 in mindestens einem Abschnitt der Fördervorrichtung 1001 angeordnet ist. In einigen Ausführungsformen kann vorgesehen sein, dass jeweils mindestens eine Nährstoffmittelversorgungseinheit 1005 in mehreren Abschnitten der Fördervorrichtung 1001 angeordnet ist. In einigen Ausführungsformen kann vorgesehen sein, jeden Abschnitt der Fördervorrichtung 1001 mit Nährstoffen zu versorgen.

Es kann vorgesehen sein, dass mindestens eine, mehrere oder alle Beleuchtungseinheiten 1004 und mindestens eine, mehrere oder alle Nährstoffmittelversorgungseinheit 1005 in demselben Abschnitt der Fördervorrichtung 1001 angeordnet sind.

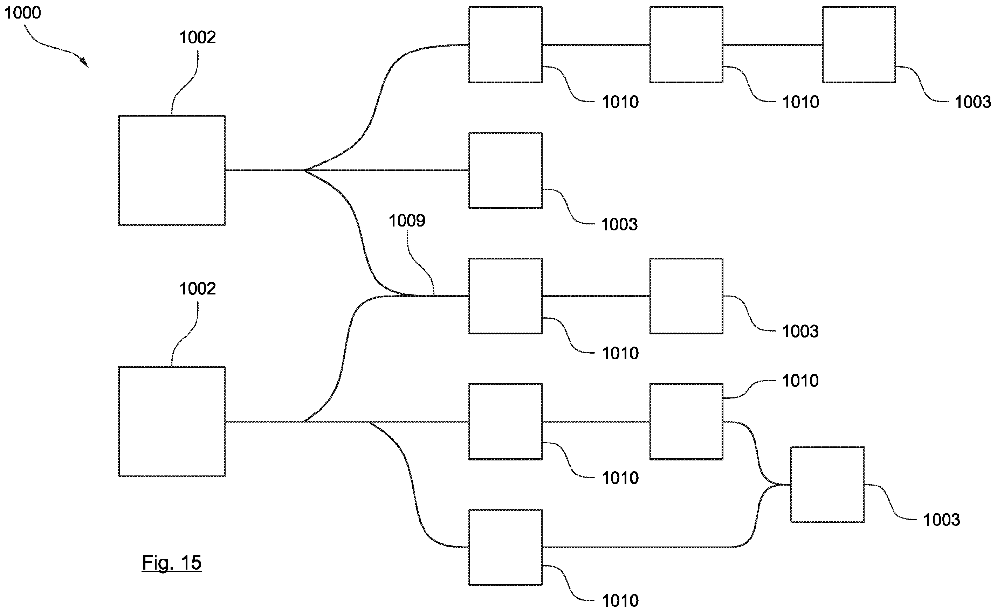

Wie in Fig. 14 und 15 gezeigt, kann das Pflanzenzuchtsystem mehrere Saatstationen 1002 und/oder Erntestation 1003 aufweisen. Über Weichen 1009 kann mindestens ein Saatstation 1002 mit mehreren Erntestation 1003 und/oder mehrere Saatstationen 1002 mit mindestens einer Erntestation 1003 verbunden sein. Je nach Stellung der Weichen 1009 können Transportelemente 1 und/oder Förderbandabschnitte 109 entsprechend zwischen den jeweiligen Saatstationen 1002 und Erntestationen 1003 von der Fördervorrichtung 1001 transportiert sein oder werden. Das Pflanzenzuchtsystem 1000 kann einen oder mehrere Vereinzeler aufweisen.

Es kann vorgesehen sein, dass das Pflanzenzuchtsystem 1000 wie in Figur 15 gezeigt mindestens eine Pufferstation 1010 aufweist. Die Pufferstation 1010 kann dazu eingerichtet sein, Transportelemente 1 und/oder Förderbandabschnitte 109 zu puffern, zwischenzuspeichern und/oder für einen gewissen Zeitraum zu lagern. Die Pufferstation 1010 kann dazu geeignete Mittel aufweisen, um Transportelemente 1 und/oder Förderbandabschnitt 109 von der Fördervorrichtung 1 zu lösen. Die Pufferstation 1010 kann geeignete Mittel aufweisen, um gelöste Transportelemente 1 und/oder gelöste Förderbandabschnitte 109 zu lagern, zu puffern und/oder zu speichern. Die Pufferstation 1010 kann geeignete Mittel aufweisen, um gelagerte Transportelemente 1 und/oder gelagerte Förderbandabschnitte 109 wieder mit der Fördervorrichtung 1 zu verbinden.

Die Pufferstation 1010 kann eine Leseeinheit aufweisen, die dazu eingerichtet sein kann, ein auf einem Transportelement 1 und/oder Förderbandabschnitt 109 angebrachtes Identifizierungselement auszulesen. In einigen Ausführungsformen weisen der Saatstation 1002 zugeführte Transportelemente 1 und/oder Förderbandabschnitte 109 mindestens ein Identifikationselement auf. Es kann vorgesehen sein, dass das Identifikationselement bereits Informationen bzgl. Transportelement und/oder in die Aufnahme 5 einzusetzende Pflanze 6 und/oder Pflanzenplug 7 aufweist. Es kann vorgesehen sein, dass die Saatstation ein Lesegerät zum Auslesen der Informationen aufweist, und eine oder mehrere den Informationen entsprechende Pflanzen 6 und/oder Pflanzenplugs 7 in eine oder mehrere Aufnahmen 5 einsetzt.

In einigen Ausführungsformen kann die Saatstation 1002 alternativ oder zusätzlich dazu eingerichtet sein, ein Identifikationselement an dem Transportelement 1 und/oder Förderbandabschnitt 109 anzubringen, zu modifizieren und/oder zu beschreiben. Beispielsweise kann die Saatstation 1002 dazu eingerichtet sein, eine bestimmte Pflanze 6 und/oder Pflanzenplug 7 einzusetzen, und anschließend Informationen bezüglich der eingesetzten Pflanze 6 und/oder Pflanzenplug 7 in dem Identifikationselement zu hinterlegen oder ein entsprechendes Identifikationselement anzubringen.

Das Identifizierungselement kann beispielsweise ein RFID-Chip, ein Barcode, ein Farbcode, ein Piktogramm, ein alphanumerischer Ziffercode und/oder ein QR-Code sein oder aufweisen. Das Identifizierungselement kann Informationen bezüglich des Transportelements und/oder Förderbandabschnitts 109, z.B. eine eindeutige Transportelement-Nummer oder einen eindeutigen Transportelement-Identifizierungscode aufweisen. Das Identifizierungselement kann alternativ oder zusätzlich Informationen bezüglich der in dem Transportelement 1 aufgenommenen Pflanzen 6 und/oder Pflanzenplug 7 aufweisen. Es kann vorgesehen sein, dass die Pufferstation 1010 ein Transportelement 1 für ein in Abhängigkeit der von der Leseeinheit ausgelesen Informationen vorgegebenes Zeitintervall lagert. Es kann vorgesehen sein, dass unterschiedliche Transportelemente und/oder Transportelemente mit unterschiedlichen Pflanzen 6 und/oder Pflanzenplug 7 von der Pufferstation 1010 für ein unterschiedliches Zeitintervall gelagert werden. Es kann vorgesehen sein, dass unterschiedliche Förderbandabschnitte und/oder Förderbandabschnitte mit unterschiedlichen Pflanzen 6 und/oder Pflanzenplug 7 von der Pufferstation 1010 für ein unterschiedliches Zeitintervall gelagert werden.

Mit der Pufferstation 1010 können verschiedene Pflanzen 6 auf verschiedenen Transportelemente 1 und/oder Förderbandabschnitten 109 unterschiedlich lange in dem Pflanzenzuchtsystem 1000 verweilen, bis sie der Erntestation 1003 zugeführt werden und/oder von Erntestation 1003 entnommen und/oder geerntet werden. Es kann sich somit eine flexible Züchtung verschiedener Pflanzen ergeben.

In einigen Ausführungsformen kann vorgesehen sein, dass das Pflanzenzuchtsystem 1000 Beleuchtungsstationen und/oder Nährstoffmittelversorgungsstationen aufweist. In einer Beleuchtungsstation kann mindestens eine Beleuchtungseinheit 1004 angeordnet sein. In einer Nährstoffmittelversorgungsstation kann mindestens eine Nährstoffmittelversorgungseinheit 1005 angeordnet sein. In einigen Ausführungsformen kann vorgesehen sein, dass eine, mehrere oder alle Beleuchtungseinheiten 1004 ausschließlich in einer, mehrere oder allen Beleuchtungsstationen angeordnet sind. Es kann vorgesehen sein, dass die Beleuchtungsstation lichtundurchlässig ist. Es kann vorgesehen sein, dass von der Fördervorrichtung 1001 transportierte Pflanzen 6 und/oder Pflanzenplugs 7 nur in einer oder mehreren Beleuchtungsstationen beleuchtet und/oder bestrahlt sind oder werden.

In einigen Ausführungsformen kann vorgesehen sein, dass eine, mehrere oder alle Nährstoffmittelversorgungseinheiten 1005 ausschließlich in einer, mehrere oder allen Nährstoffmittelversorgungsstationen angeordnet sind. Es kann vorgesehen sein, dass von der Fördervorrichtung 1001 transportierte Pflanzen 6 und/oder Pflanzenplugs 7 nur in einer oder mehreren Nährstoffmittelversorgungsstationen mit Nährstoffen versorgt sind oder werden.

Die Beleuchtungsstation und/oder die Nährstoffmittelversorgungsstation kann eine Pufferstation aufweisen. In einigen Ausführungsformen ist alternativ oder zusätzlich in mindestens einer Pufferstation eine Beleuchtungseinheit und/oder eine Nährstoffmittelversorgungseinheit angeordnet. Es kann vorgesehen sein, die von der Pufferstation geprüften bzw. gelagerten Transportelemente und/oder Förderbandabschnitte 109, bzw. die in den Transportelementen 1 aufgenommenen Pflanzen 6 und/oder Pflanzenplug 7 mit der Beleuchtungseinheit zu beleuchten und/oder mit der Nährstoffmittelversorgungseinheit mit Nährstoffen zu versorgen.

Die Beleuchtungsstation und/oder die Beleuchtungseinheit 1004 kann eine Leseeinheit aufweisen, die dazu eingerichtet sein kann, ein auf einem Transportelement 1 und/oder Förderbandabschnitt 109 angebrachtes Identifizierungselement auszulesen. Die Leseeinheit kann der Leseeinheit der Pufferstation entsprechen oder gleich ausgeführt sein. Es kann vorgesehen sein, dass die Beleuchtungsstation und/oder die Beleuchtungseinheit 1004 ein Transportelement 1 bzw. in dem Transportelement 1 aufgenommene Pflanzen 6 und/oder Pflanzenplug 7 für ein in Abhängigkeit der von der Leseeinheit ausgelesen Informationen vorgegebenes Zeitintervall beleuchtet. Alternativ oder zusätzlich kann vorgesehen sein, dass die Beleuchtungsstärke, Beleuchtungsdauer, Beleuchtungsfrequenz, Wellenlänge und/oder Wellenspektrum der Beleuchtung und/oder Bestrahlung in Abhängigkeit der von der Leseeinheit ausgelesen Informationen gewählt wird, bzw. die Beleuchtungseinheit 1004 entsprechend beleuchtet und/oder bestrahlt. Es kann vorgesehen sein, dass unterschiedliche Transportelemente und/oder Transportelemente mit unterschiedlichen Pflanzen 6 und/oder Pflanzenplug 7 von der Beleuchtungseinheit 1004 unterschiedlich beleuchtet werden. Es kann vorgesehen sein, dass unterschiedliche Förderbandabschnitte und/oder Förderbandabschnitte mit unterschiedlichen Pflanzen 6 und/oder Pflanzenplug 7 von der Beleuchtungseinheit 1004 unterschiedlich beleuchtet werden.

Die Nährstoffmittelversorgungsstation und/oder die Nährstoffmittelversorgungseinheit 1005 kann eine Leseeinheit aufweisen, die dazu eingerichtet sein kann, ein auf einem Transportelement 1 und/oder Förderbandabschnitt 109 angebrachtes Identifizierungselement auszulesen. Es kann vorgesehen sein, dass die Nährstoffmittelversorgungsstation und/oder die Nährstoffmittelversorgungseinheit 1005 ein Transportelement 1 bzw. in dem Transportelement 1 aufgenommene Pflanzen 6 und/oder Pflanzenplug 7 für ein in Abhängigkeit der von der Leseeinheit ausgelesen Informationen vorgegebenes Zeitintervall mit Nährstoffen versorgt. Alternativ oder zusätzlich kann vorgesehen sein, dass ein Nährstoffmittel, Nährstofflösung und/oder Düngemittel in Abhängigkeit der von der Leseeinheit ausgelesen Informationen gewählt wird, und/oder die Nährstoffmittelversorgungseinheit 1005 entsprechend die Wurzeln 17 der Pflanze 6 mit Nährstoffen versorgt. Alternativ oder zusätzlich kann vorgesehen sein, dass ein Volumen- oder Massenstrom in Abhängigkeit der von der Leseeinheit ausgelesen Informationen von der Nährstoffmittelversorgungseinheit 1005 gewählt und an die Pflanze 6 und/oder deren Wurzeln 17 abgegeben wird, bevorzugt aufgesprüht wird, wobei die Dauer und/oder Frequenz der Abgabe, bevorzugt des Aufsprühens, von den ausgelesenen Informationen abhängen kann. Es kann vorgesehen sein, dass unterschiedliche Transportelemente und/oder Transportelemente mit unterschiedlichen Pflanzen 6 und/oder Pflanzenplug 7 von der Nährstoffmittelversorgungseinheit unterschiedlich mit Nährstoffen versorgt werden. Es kann vorgesehen sein, dass unterschiedliche Förderbandabschnitte und/oder Förderbandabschnitte mit unterschiedlichen Pflanzen 6 und/oder Pflanzenplug 7 von der Nährstoffmittelversorgungseinheit unterschiedlich mit Nährstoffen versorgt werden.

Es kann sich somit eine flexible Züchtung verschiedener Pflanzen ergeben, da Beleuchtung und/oder Nährstoffzufuhr auf die jeweiligen Pflanzen abgestimmt sein kann.

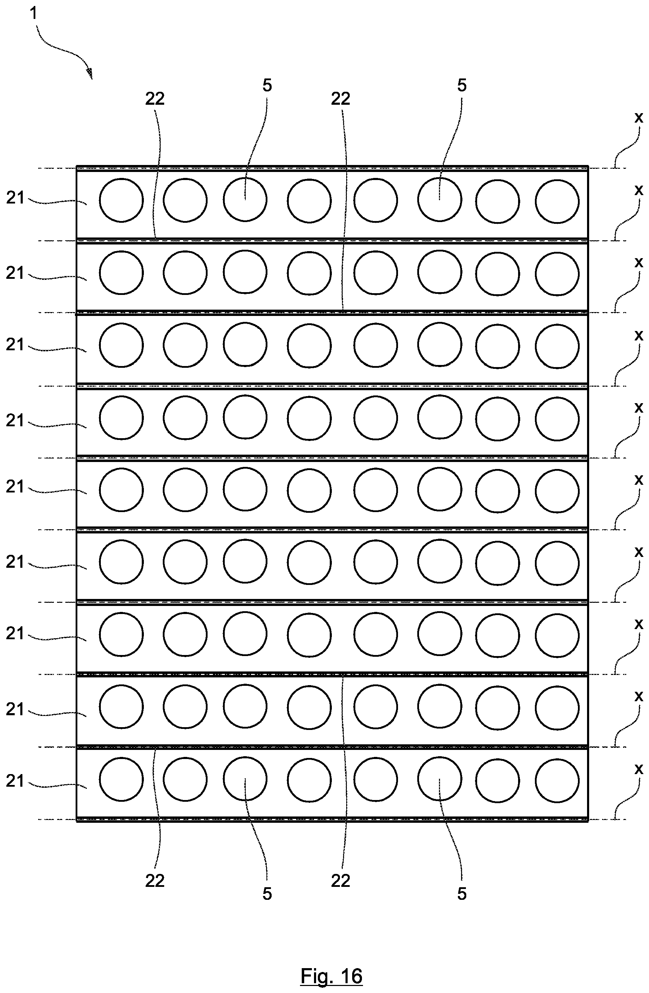

Fig. 16 zeigt eine weitere Ausführungsform eines erfindungsgemäßen Transportelements 1. Das in Figur 16 gezeigte Transportelement 1 kann einige, mehrere oder alle Merkmale oder Vorteile der vorstehend beschriebener Transportelemente 1 aufweisen. Das Transportelement 1 kann ein Teil eines Förderbands 100 und/oder Förderbandabschnitts 109 sein. Förderband 100 und/oder Förderbandabschnitt 109 kann das Transportelement 1 aufweisen. Förderband 100 und/oder Förderbandabschnitt 109 kann mehrere miteinander verbundene Transportelement 1 aufweisen, aus diesen gebildet sein oder aus diesen bestehen. Das Transportelement 1 weist mindestens zwei Module 21 auf. Das Transportelement 1 kann aus Modulen 21 gebildet sein oder werden. Der Grundkörper 2 des Transportelement 1 kann aus Modulen 21 gebildet sein oder werden. Damit kann das Transportelement 1 modular aus den Modulen 21 gebildet sein. In einigen Ausführungsformen können mindestens zwei der Module 21 lösbar miteinander verbunden sein, beispielsweise zusammengesteckt oder verclipst. Mindestens eines, mehrere oder alle der Module können mindestens eine oder mehrere Aufnahmen 5 aufweisen. Es kann vorgesehen sein, dass jeweils zwei Module 21 miteinander verbunden sind. Jeweils zwei Module 21 können an einem jeweiligen Verbindungbereich 22 zwischen den Modulen 21 miteinander verbunden sein. In einigen Ausführungsformen können sich Module 21 an oder in dem Verbindungbereich 22 überlappen. Der Verbindungsbereich 22 kann undurchlässig für Licht und/oder Feuchtigkeit sein. Es kann vorgesehen sein, dass an oder in dem Verbindungsbereich 22 die Module 21 um eine Schwenkachse X verschwenkbar sein können, oder verschwenkt sind oder werden. In einigen Ausführungsformen kann aber auch vorgesehen sein, dass zwischen mindestens zwei der Module 21 keine Schwenkachse X vorgesehen ist, bzw. mindestens zwei der Module 21 nicht gegeneinander verschwenkbar sein können. Der Verbindungsbereich 22 kann derart ausgeführt sein, dass er auch bei verschwenkten Modulen 21 lichtundurchlässig und/oder feuchtigkeitsundurchlässig ist. In einigen Ausführungsformen können Module 21 über Scharniere und/oder einen Scharnierestab miteinander verbunden sein. Scharniere und/oder Scharnierstab können an oder in dem Verbindungsbereich 22 angeordnet sein. Verbindungsbereich 22 kann Scharniere und/oder Scharnierstab aufweisen. In einigen Ausführungsformen kann vorgesehen sein, dass sich die Module 21 in dem Verbindungsbereich 22 überlappen. Module 21 können derart geformt und/oder ausgeführt sein, dass sie sich auch dann überlappen, wenn sie um Schwenkachse X verschwenkt sind.

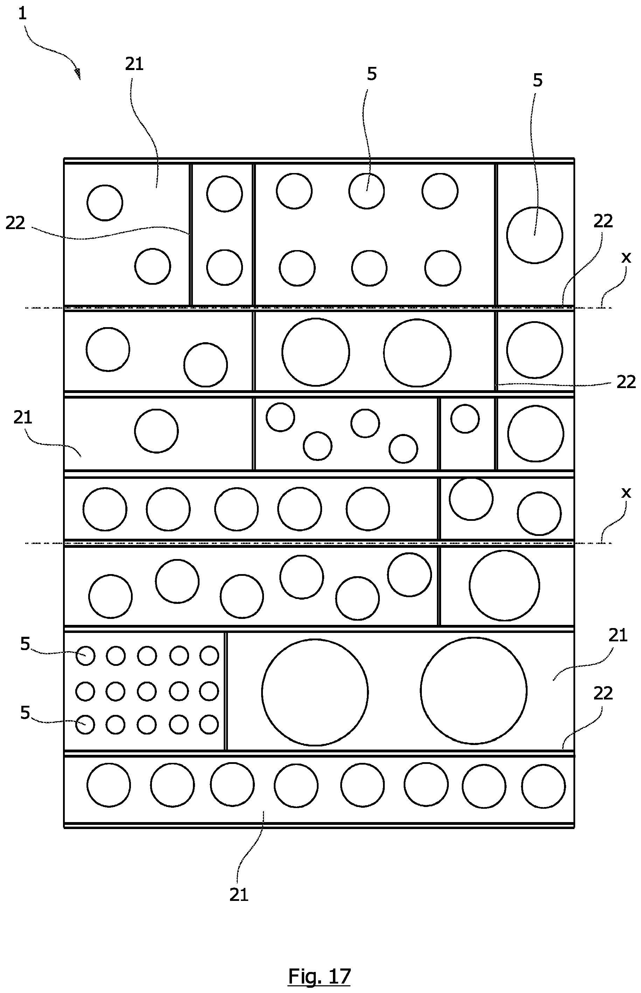

Figur 17 zeigt eine weitere Ausführungsform eines erfindungsgemäßen Transportelements 1. Das in Figur 17 gezeigte Transportelement 1 kann einige, mehrere oder alle Merkmale oder Vorteile der vorstehend beschriebener Transportelemente 1 aufweisen. Das Transportelement 1 kann ein Teil eines Förderbands 100 und/oder Förderbandabschnitts 109 sein. Förderband 100 und/oder Förderbandabschnitt 109 kann das Transportelement 1 aufweisen. Förderband 100 und/oder Förderbandabschnitt 109 kann mehrere miteinander verbundene Transportelement 1 aufweisen, aus diesen gebildet sein oder aus diesen bestehen. Mindestens eines oder mehrere der Module 21 können sich, wie beispielsweise in Figur 17 gezeigt, von mindestens einem anderen Modul 21 unterscheiden. Beispielsweise kann mindestens ein Modul 21 eine unterschiedliche Abmessung, beispielsweise Breite, Höhe oder Tiefe, oder Form verglichen mit mindestens einem anderen Modul 21 haben. Alternativ oder zusätzlich kann mindestens eines der Module 21 mindestens eine Aufnahme 5 haben, die verglichen mit mindestens einer Aufnahme 5 eines anderen Moduls 21 unterschiedliche Form, Abmessungen, z.B. Querschnitt haben kann. Beispielsweise kann eine Aufnahme 5 eines Moduls 21 kreisförmig, und eine Aufnahme 5 eines anderen Moduls 21 ellipsenförmig sein. In einigen Ausführungsformen kann mindestens eines der Module 21 eine Anzahl Aufnahmen 5 aufweisen, die von der Anzahl Aufnahmen 5 mindestens eines anderen Moduls verschieden ist.

Wie in Figur 17 gezeigt kann in einigen Ausführungsformen vorgesehen sein, dass Module 21 auch nebeneinander bzw. im Wesentlichen in eine Querrichtung parallel zu Schwenkachse X des Transportelement 1 angeordnet sein können bzw. über Verbindungsbereiche 22 miteinander verbunden sein können. Wie in Figur 17 gezeigt, müssen nicht alle Verbindungsbereich 22 eine Schwenkachse X haben bzw. kann vorgesehen sein, dass jeweils zwei über ein Verbindungsbereich 22 miteinander verbundene Module 21 nicht gegeneinander verschwenkbar sein können. Damit können einige miteinander verbundene Module 21 einen ersten Bereich bilden, der um eine Schwenkachse X gegenüber einem von anderen miteinander verbundenen Modulen 21 gebildeten Bereich verschwenkbar sein kann.

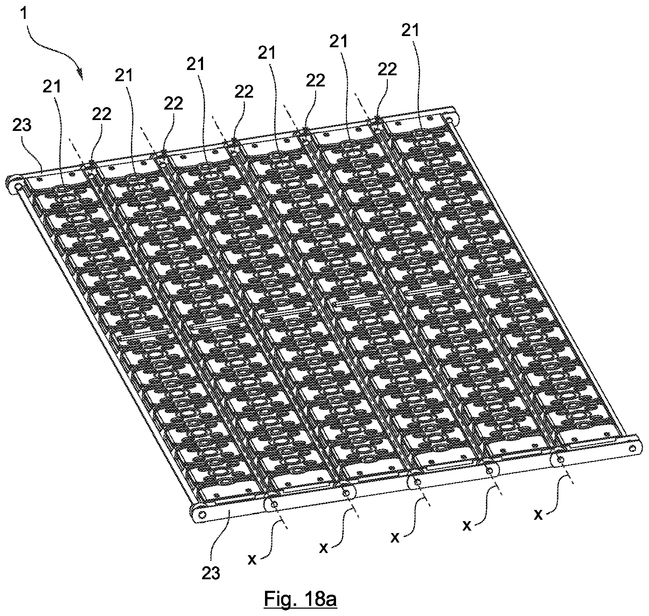

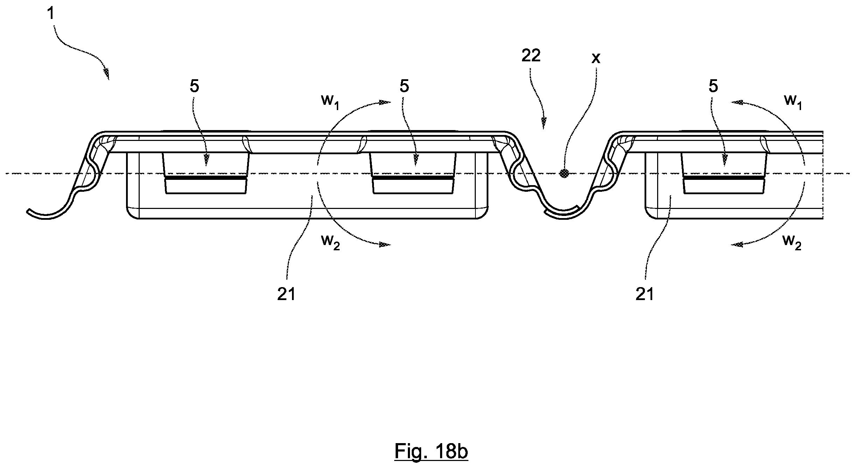

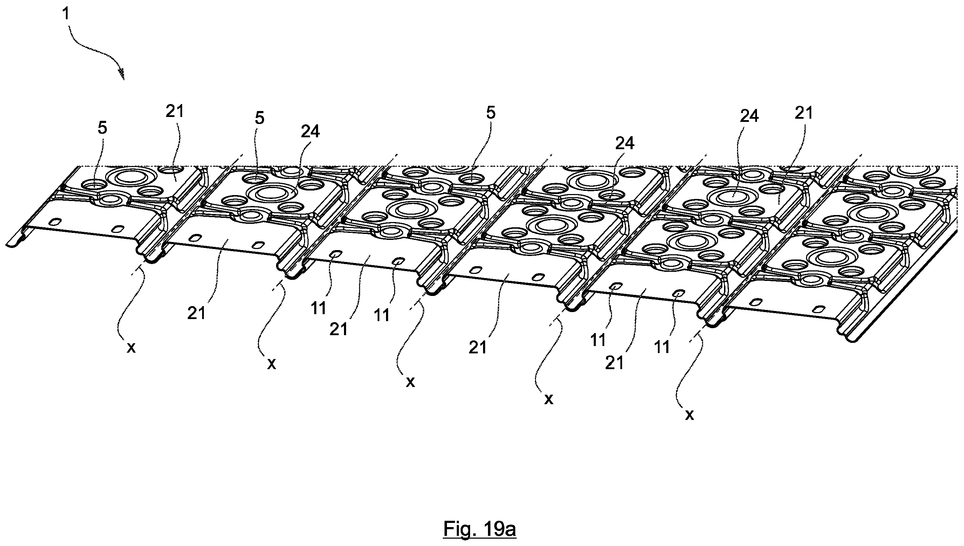

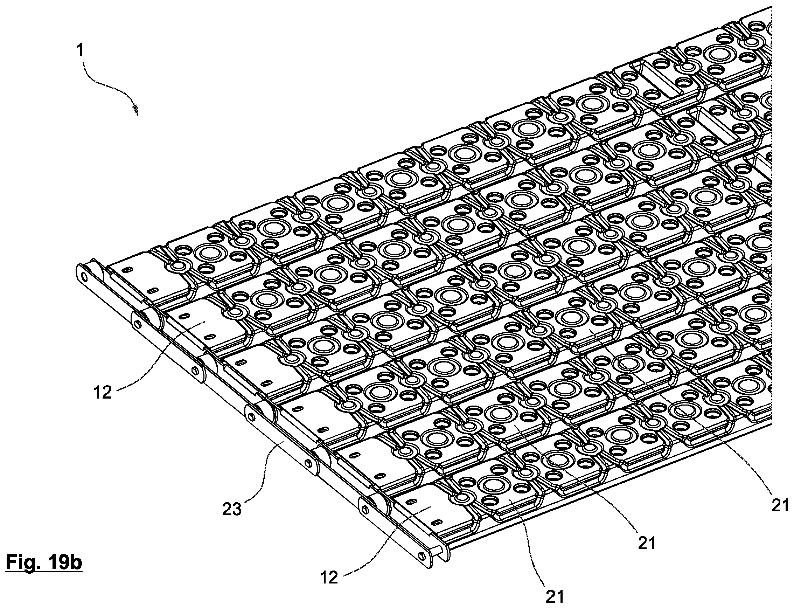

Figur 18 und 19 zeigt eine weitere Ausführungsform eines erfindungsgemäßen Transportelements 1. Das in Figuren 8 und 19 gezeigte Transportelement 1 kann einige, mehrere oder alle Merkmale oder Vorteile der vorstehend beschriebener Transportelemente 1 aufweisen. Das Transportelement 1 kann ein Teil eines Förderbands 100 und/oder Förderbandabschnitts 109 sein. Förderband 100 und/oder Förderbandabschnitt 109 kann das Transportelement 1 aufweisen. Förderband 100 und/oder Förderbandabschnitt 109 kann mehrere miteinander verbundene Transportelement 1 aufweisen, aus diesen gebildet sein oder aus diesen bestehen. Transportelement 1 kann mindestens zwei oder mehrere Module 21 aufweisen. Module 21 können sich in einem Verbindungsbereich 22 überlappen, vergleiche insbesondere Figur 18 unten. Jeweils zwei der Module 21 können um eine Schwenkachse X zwischen den Modulen verschwenkbar sein. Module 21 können in einem Schwenkwinkelbereich zwischen einem ersten relativen Schwenkwinkel w₁ und einem zweiten relativen Schwenkwinkel w₂ verschwenkbar sein. In einigen Ausführungsformen kann der erste Schwenkwinkel w₁ mindestens 45° betragen. In einigen Ausführungsformen kann der erste Schwenkwinkel w₁ mindestens 90° betragen. In einigen Ausführungsformen kann der zweite Schwenkwinkel w₂ mindestens minus 45° betragen. In einigen Ausführungsformen kann der zweite Schwenkwinkel w₂ mindestens minus 90° betragen. Erster und/oder zweiter Schwenkwinkel können relativ zu einer Ausrichtung eines benachbarten Moduls 21 definiert sein, vergleiche z.B. die gestrichelte Linie in Figur 18 unten. Mindestens zwei der Module 21 können sich im Verbindungsbereich 22 überlappen. Module 21 können derart geformt sein, dass sie sich auch bei Verschwenkung um einen Winkel im Schwenkwinkelbereich überlappen, vergleiche Figur 18 unten. Module 21 können beispielsweise eine von dem Modulrand sich wegerstreckende abgerundete Kante aufweisen, die beim Verschwenken entlang einer abgerundeten Kante eines benachbarten Moduls 21 geführt und/oder diese kontaktieren kann. Damit kann sichergestellt sein, dass kein Licht und/oder keine Feuchtigkeit durch den Verbindungsbereich 22 hindurchtreten kann.

Mindestens eine, mehrere oder alle Aufnahmen 5 müssen sich nicht durch das Transportelement 1 und/oder Modul 21 erstrecken. Mindestens eine, mehrere oder alle Aufnahmen 5 kann in dem Transportelement 1 und/oder Modul 21 angeordnet sein und zu einer Oberfläche, beispielsweise einer Oberseite, geöffnet sein.

In einigen Ausführungsformen kann das Transportelement 1 einseitig angeordnetes Kopplungselement 23 aufweisen. Das Kopplungselement 23 kann beispielsweise ein Kettenelement sein. Das Kopplungselement 23 kann mehrere Kettenglieder aufweisen und/oder aus solchen bestehen. In einigen Ausführungsformen kann ein Kettenglied eine Länge haben, die im Wesentlichen einer Abmessung eines Moduls 21 senkrecht zur Schwenkachse X entsprechen kann, vergleiche z.B. Figur 18 oben. Damit kann die Schwenkachse X durch die Verbindung der jeweiligen Kettenglieder definiert sein.

Eines, mehrere oder alle der Module 21 können einen Kopplungsabschnitt 12 mit einem Verbindungsmittel 11 aufweisen. Über Kopplungsabschnitt 12 und/oder Verbindungsmittel 11 kann das Modul 21 mit dem Kopplungselement 23, und/oder einem Kettenglied des Kopplungselement 23, verbunden sein oder werden. Die Verbindung zwischen Kopplungsabschnitt 12 und/oder Verbindungsmittel 11 mit Kopplungselement 23 kann lösbar sein. In einigen Ausführungsformen kann vorgesehen sein, dass die Module 21 über Kopplungselement 23 miteinander verbunden sind. In einigen Ausführungsformen kann vorgesehen sein, dass mindestens zwei der Module 21 nicht unmittelbar miteinander verbunden sind, sondern über Kopplungselement 23 bzw. Kettenelement miteinander verbunden sind. In anderen Worten kann vorgesehen sein, dass Module 21 nicht direkt miteinander verbunden sind, sondern mittelbar über Kopplungselement 23 und/oder miteinander verbundene Kettenglieder. In einigen Ausführungsformen weist das Transportelement 1 und/oder das durch miteinander verbundene Transportelement 1 gebildete Förderband 100 zwei sich seitlich gegenüberliegend angeordnete Kopplungselement 23 auf.

Ist das Förderband 100 und/oder ein Förderband Abschnitt 109 durch mindestens zwei miteinander verbundene Transportelement 1 gebildet, so kann vorgesehen sein, dass die Transportelemente 1 durch das Kopplungselement 23 und/oder dessen Kettenglieder miteinander verbunden sind, vergleiche beispielsweise Figur 18 oben oder Figur 19 unten.

In einigen Ausführungsformen kann vorgesehen sein, dass die Förderkette und/oder das Zugmittel des Förderband 100 das Kopplungselement 23 und/oder das Kettenelement, bzw. die miteinander verbundenen Kettenglieder aufweist oder ist. In einigen Ausführungsformen kann vorgesehen sein, dass die Förderkette und/oder das Zugmittel des Förderband 100 aus dem Kopplungselement 23 und/oder dem Kettenelement, bzw. aus den miteinander verbundenen Kettengliedern der miteinander verbundenen Transportelementen 1 besteht. In anderen Worten kann vorgesehen sein, dass das Förderband 100 außer dem Kopplungselement 23 und/oder dem Kettenelement, bzw. außer den miteinander verbundenen Kettengliedern der miteinander verbundenen Transportelementen 1 keine weitere Förderkette und/oder Zugmittel aufweist. In einigen Ausführungsformen kann die Fördervorrichtung 1001 ein Förderband 100 sein oder aufweisen.

Das Transportelement 1 und/oder mindestens eines der Module 21 kann eine Sicke 24 aufweisen. Die Sicke 24 kann das Transportelement 1 und/oder Modul 21 zumindest abschnittsweise verstärken und/oder versteifen. Die Sicke 24 kann eine Vertiefung und/oder Umformung aufweisen.

Der Grundkörper 2 des Transportelements 1 kann zumindest teilweise oder vollständig durch die Module 21 gebildet sein oder die Module 21 aufweisen. Die Oberseiten der Module 21 können die Oberseite 3 des Transportelements zumindest teilweise oder vollständig bilden. Die Unterseiten der Module 21 können die Unterseite 4 des Transportelements zumindest teilweise oder vollständig bilden.

Dadurch, dass das Transportelement 1 mehrere Module 21 aufweisen kann, und/oder modular gebildet sein kann, kann das Transportelement 1 flexibel an aufzunehmende Pflanzensorten angepasst sein oder werden. Beispielsweise kann durch geeignete Wahl der Module 21 ein Transportelement 1 und/oder ein aus den Transportelement 1 gebildetes Förderband 100 und/oder Förderbandabschnitt 109 einfach und unkompliziert verschiedene Pflanzensorten Aufnehmen und/oder transportieren.

Das Transportelement 1 und/oder Modul 21 kann beispielsweise durch Umformen aus einem Plattenmaterial hergestellt sein oder werden, beispielsweise durch Tiefziehen. Alternativ oder zusätzlich kann vorgesehen sein, dass Transportelement 1 und/oder Modul 21 durch Spritzgießen herzustellen.

### Bezugszeichenliste:

- 1: Transportelement
- 2: Grundkörper
- 3: Oberseite
- 4: Unterseite
- 5: Aufnahme
- 6: Pflanze
- 7: Pflanzenplug
- 8: erste Öffnung
- 9: zweite Öffnung
- 10: Fördervorrichtung
- 11: Verbindungsmittel
- 12: Kopplungsabschnitt
- 13: Mulde
- 14: erste Schicht
- 15: zweite Schicht
- 16: Blätter
- 17: Wurzeln
- 18: Basiselement
- 19: Reihe
- 20: Identifizierungselement
- 21: Modul
- 22: Verbindungsbereich
- 23: Kopplungselement
- 24: Sicke

- 100: Förderband
- 101: Querverstrebung
- 102: Antriebskomponente
- 103: Klemme
- 104: Fördervorrichtungsverbindungselement
- 105: Auflage
- 106: Pin
- 107: Hohlraum
- 108: Anschlag
- 109: Förderbandabschnitt

- 1000: Pflanzenzuchtsystem
- 1001: Fördervorrichtung
- 1002: Saatstation
- 1003: Erntestation
- 1004: Beleuchtungseinheit
- 1005: Nährstoffmittelversorgungseinheit
- 1006: erster Abschnitt
- 1007: zweiter Abschnitt
- 1008: dritter Abschnitt
- 1009: Weiche
- 1010: Pufferstation
- 1011: Transportmittel
- 1012: Zerstäuber
- 1013: Weiche

- D₁: erste Abmessung
- D₂: zweite Abmessung
- D₃: dritte Abmessung
- d₁: erster Abstand
- d₂: zweiter Abstand
- d₃: dritter Abstand
- d₄: vierter Abstand
- d₅: fünfter Abstand
- d₆: sechster Abstand
- A₁: erste Öffnungsquerschnittsfläche
- A₂: zweite Öffnungsquerschnittsfläche
- A₃: Querschnittsfläche
- S: Schwenkachse
- X: Schwenkachse
- w₁: erster relativer Schwenkwinkel
- w₂: zweiter relativer Schwenkwinkel

## Patentansprüche

1. Transportelement (1) für ein Pflanzenzuchtsystem (1000), wobei das Transportelement (1) einen Grundkörper (2) mit einer Oberseite (3) und einer Unterseite (4) und mindestens eine in dem Grundkörper (2) angeordnete oder sich durch den Grundkörper (2) erstreckende Aufnahme (5) für Pflanzen (6) oder Pflanzenplugs (7) aufweist, wobei das Transportelement (1) dazu eingerichtet ist, zumindest einen Teil einer Fördervorrichtung (1001) oder eines Förderbands (100) zu bilden oder mit einer Fördervorrichtung (1001) befestigbar oder verbindbar zu sein, **dadurch gekennzeichnet, dass** das Transportelement (1) mindestens zwei Module (21) aufweist, wobei bevorzugt jedes Modul (21) mindestens eine Aufnahme (5) für Pflanzen (6) oder Pflanzenplugs (7) aufweist, wobei die Module (21) um eine gemeinsame Schwenkachse (X) verschwenkbar sind.

2. Transportelement (1) nach Anspruch 1,
- bei dem die Module (21) in einem Schwenkwinkelbereich zwischen einem ersten relativen Schwenkwinkel (w₁) und einem zweiten relativen Schwenkwinkel (w₂) um die Schwenkachse (X) verschwenkbar sind, wobei der Schwenkwinkelbereich bevorzugt einen Winkelbereich zwischen mindestens - 45° bis 45°, besonders bevorzugt mindestens zwischen- 90° und 90°, umfasst, wobei sich die Module (21) bei einer Verschwenkung um relative Schwenkwinkel bevorzugt in dem Schwenkwinkelbereich (X) überlappen, und/oder
- bei dem die Module (21) derart ausgeführt sind, bevorzugt sich derart überlappen, dass kein Licht und/oder keine Feuchtigkeit zwischen den Modulen (21) hindurchtreten kann, und/oder
- bei dem die Module (21) durch Scharniere und/oder einen Scharnierstab miteinander verbunden sind, bevorzugt der Scharnierstab die Schwenkachse bildet.

3. Transportelement (1) nach einem der vorangegangenen Ansprüche 1 bis 2, bei dem
- das Transportelement (1) ein seitlich angeordnetes Kopplungselement (23), bevorzugt ein Kettenelement, aufweist, mit dem die Module (21) verbunden sind, und/oder
- das Transportelement (1) einen Topf aufweist, wobei bevorzugt der Topf einstückig mit der Aufnahme (5) ausgeführt ist, und/oder
- das Transportelement (1), und/oder bevorzugt mindestens eines der Module (21), eine Sicke (24) aufweist, die dazu eingerichtet ist, das Transportelement (1) zumindest abschnittsweise zu versteifen, und/oder
- das Transportelement (1) ein Tray ist oder aufweist, und/oder
- das Transportelement (1) ein Identifizierungselement (20) aufweist, bevorzugt einen RFID-Chip, Barcode und/oder QR-Code.

4. Transportelement (1) nach einem der vorangegangenen Ansprüche, bei dem die Aufnahme (5) an der Oberseite (3) des Grundkörpers (2) eine erste Öffnung (8) mit einer ersten Öffnungsquerschnittsfläche (A₁) und an der Unterseite (4) des Grundkörpers (2) eine zweite Öffnung (9) mit einer zweiten Öffnungsquerschnittsfläche (A₂) aufweist, wobei die erste Öffnungsquerschnittsfläche größer als die zweite Öffnungsquerschnittsfläche ist, wobei
- die erste Öffnung (8) und/oder die zweite Öffnung (9) vorzugsweise zumindest abschnittsweise rund, elliptisch und/oder polygonal ist oder eine runde, elliptische und/oder polygonale Form aufweist, und/oder
- die erste Öffnungsquerschnittsfläche vorzugsweise eine Fläche von 0,1 cm² bis 5 cm², bevorzugt 0,3 cm² bis 3 cm², besonders bevorzugt 0,5 cm² bis 2 cm², aufweist, und/oder die zweite Querschnittsfläche vorzugsweise eine Fläche von 0,2 cm² bis 10 cm², bevorzugt 0,5 cm² bis 5 cm², besonders bevorzugt 0,75 cm² bis 3 cm², aufweist.

5. Transportelement (1) nach einem der vorangegangenen Ansprüche, bei dem
- die Aufnahme (5) zumindest abschnittsweise kegelstumpfförmig, schalenförmig und/oder halbkugelförmig ist, und/oder bei dem sich die Aufnahme (5) von der Oberseite (3) zur Unterseite (4) verjüngt und/oder keilförmig und/oder stufenförmig ist, und/oder
- die Aufnahme (5) ein Volumen von 1 - 250 ml, bevorzugt 1 - 100 ml, besonders bevorzugt 1 - 50 ml aufweist.

6. Transportelement (1) nach einem der vorangegangenen Ansprüche mit einer Mehrzahl Aufnahmen (5), wobei die Aufnahmen (5) regelmäßig über den Grundkörper (2) verteilt sind, bevorzugt in Reihen (19) oder einem Raster angeordnet sind, und/oder wobei, mit Rückbezug auf Anspruch 4, mindestens eine der Aufnahmen (5) eine von mindestens einer anderen Aufnahme (5) verschiedenen erste Öffnungsquerschnittsfläche und/oder zweite Öffnungsquerschnittsfläche aufweist.

7. Transportelement (1) nach einem der vorangegangenen Ansprüche, bei dem das Transportelement (1) ein Verbindungsmittel (11) aufweist, das dazu eingerichtet ist, das Transportelement (1) mit einem weiteren Transportelement (1) zu verbinden, und oder das dazu eingerichtet ist mit der Fördervorrichtung (1001), bevorzugt einer Förderkette oder einem Zugmittel, form- und/oder kraftschlüssig verbunden zu sein, wobei
- das Verbindungsmittel (11) bevorzugt an einer Außenseite und/oder einem Außenbereich des Grundkörpers (2) angeordnet ist und/oder
- das Verbindungsmittel (11) bevorzugt einen Haken aufweist, mit dem das Transportelement (1) mit dem weiteren Transportelement (1) verhakbar ist oder mit dem das Transportelement (1) in die Fördervorrichtung (1001), besonders bevorzugt in die Förderkette oder in das Zugmittel, einhakbar ist, und/oder
- das Verbindungmittel bevorzugt ein Verbindungselement für eine Verbindung mit einem Mitnehmer oder einem Stift der Fördervorrichtung (1001) aufweist, wobei das Verbindungsmittel (11) besonders bevorzugt eine Mitnehmeraufnahme oder eine Stiftaufnahme ist oder aufweist, und/oder
- das Verbindungsmittel (11) bevorzugt eine Mulde (13) aufweist, die derart dimensioniert ist, dass eine Spannvorrichtung oder eine Klemme (103) der Fördervorrichtung (1001) form- und/oder kraftschlüssig in die Mulde (13) eingreifbar ist.

8. Transportelement (1) nach einem der vorangegangenen Ansprüche, bei dem der Grundkörper (2)
- zumindest abschnittsweise ein biegsames Material aufweist oder aus einem solchen besteht, und/oder
- eine Kunststofffolie und/oder ein Gummimaterial aufweist oder zumindest abschnittsweise aus einer solchen besteht, und/oder
- lichtundurchlässig ist und/oder zumindest abschnittsweise ein lichtundurchlässiges Material aufweist oder aus einem solchen besteht, und/oder
- zwei oder mehr miteinander verbundene oder übereinander angeordnete Schichten aufweist oder aus solchen besteht, wobei bevorzugt mindestens eine der Schichten lichtundurchlässig ist und/oder zumindest abschnittsweise ein lichtundurchlässiges Material aufweist oder aus einem solchen besteht, und/oder wobei bevorzugt eine erste Schicht (14) lichtabsorbierend ist und/oder ein lichtabsorbierendes Material aufweist oder aus einem solchen besteht, und/oder bei dem eine zweite Schicht (15) lichtreflektierend ist und/oder ein lichtreflektierendes Material aufweist oder aus einem solchen besteht.

9. Transportelement (1) nach einem der vorangegangenen Ansprüche, bei dem
- die Oberseite (3) und/oder die Unterseite (4) lichtabsorbierend ist und/oder ein lichtabsorbierendes Material aufweist oder aus einem solchen besteht, und/oder die Oberseite (3) und/oder die Unterseite (4) mit einem lichtabsorbierenden Material beschichtet ist, und/oder
- die Oberseite (3) und/oder die Unterseite (4) lichtreflektierend ist und/oder ein lichtreflektierendes Material aufweist oder aus einem solchen besteht, und/oder die Oberseite (3) und/oder die Unterseite (4) mit einem lichtreflektierenden Material beschichtet ist.

10. Transportelement (1) nach einem der vorangegangenen Ansprüche, das an der Unterseite (4) mindestens eine Vertiefung und an der Oberseite (3) eine mit der Vertiefung komplementäre Erhebung aufweist, und/oder der an der Oberseite (3) mindestens eine Vertiefung und an der Unterseite (4) eine mit der Vertiefung komplementäre Erhebung aufweist, so dass bei zwei übereinander gestapelten Transportelementen (1) die Erhebung des einen Transportelements (1) in die Vertiefung des anderen Transportelements (1) eingreift, wobei die Aufnahme (5) bevorzugt die Vertiefung ist oder aufweist.

11. Förderband (100), aufweisend mindestens zwei Transportelemente (1) nach einem der vorangegangenen Ansprüche 1 bis 10, wobei mindestens zwei der Transportelemente (1) paarweise miteinander verbunden sind, so dass die verbundenen Transportelemente (1) einen Förderbandabschnitt (109) bilden.

12. Förderband (100) nach Anspruch 11, wobei
- das Förderband (100) eine Querverstrebung (101) aufweist, und wobei mindestens zwei der Transportelemente (1) paarweise über die Querverstrebung (101) miteinander verbunden sind, so dass die Querverstrebung (101) und die mit der Querverstrebung (101) verbundenen Transportelemente (1) den Förderbandabschnitt (109) bilden, wobei bevorzugt eines der mit der Querverstrebung (101) verbundenen Transportelemente (1) verschwenkbar mit der Querverstrebung (101) verbunden ist, so dass das Transportelement (1) relativ zu der Querverstrebung (101) um eine Schwenkachse verschwenkbar ist, und/oder wobei bevorzugt beide der der mit der Querverstrebung (101) verbundenen Transportelemente (1) verschwenkbar mit der Querverstrebung (101) verbunden sind, so dass die Transportelemente (1) relativ zu der Querverstrebung (101) um jeweils eine Schwenkachse verschwenkbar sind, und/oder wobei bevorzugt die Querverstrebung (101) derart eingerichtet ist und/oder die Transportelemente (1) derart mit der Querverstrebung (101) verbunden sind, dass mindestens bei ebener Erstreckung des Förderbandabschnitts (109), besonders bevorzugt auch bei gekrümmtem Förderbandabschnitt (109), ein Verbindungsbereich der Querverstrebung (101) und der damit verbundenen Transportelemente (1) und/oder der Förderbandabschnitt (109) lichtundurchlässig ist, und/oder
- das Förderband (100) eine Förderkette und/oder ein Zugmittel aufweist, wobei mindestens eines, bevorzugt alle, der Transportelemente (1) und/oder der Förderbandabschnitt (109) form- und/oder kraftschlüssig mit der Förderkette und/oder dem Zugmittel verbunden ist, wobei das Förderband (100) bevorzugt ein mit der Förderkette und/oder dem Zugmittel verbundenes Fördervorrichtungsverbindungselement (104), besonders bevorzugt aufweisend einen Mitnehmer, einen Haken, eine Klemme (103), ein Federelement, einen Winkel, eine Verstiftung und/oder eine Verschraubung, aufweist, wobei die Querverstrebung (101), mindestens ein Transportelement (1) und/oder der Förderbandabschnitt (109) über das Fördervorrichtungsverbindungselement (104) form- und/oder kraftschlüssig mit der Förderkette und/oder dem Zugmittel verbunden ist, und/oder wobei die Förderkette und/oder das Zugmittel bevorzugt zumindest teilweise aus seitlich angeordneten Kopplungselementen (23), besonders bevorzugt Kettenelementen, der Transportelemente (1) gebildet ist oder solche umfasst, wobei das Kopplungselement (23) besonders bevorzugt miteinander verbundene Kettenglieder umfasst, wobei vorzugsweise ein Kettenglied mit einem Modul des Transportelements (1) verbunden ist.

13. Pflanzenzuchtsystem (1000), aufweisend mindestens ein Transportelement (1) nach einem der vorangegangenen Ansprüche 1 bis 10, und eine Fördervorrichtung (1001), die bevorzugt ein Förderband (100) nach einem der vorangegangenen Ansprüche 11 bis 12 ist oder aufweist, zum Transportieren des Transportelement (1), eine Saatstation (1002) zum Einsetzen von Pflanzen (6) oder Pflanzenplugs (7) in die Aufnahme (5) des Transportelements (1) und einer Erntestation (1003) zum Entnehmen von Pflanzen (6) und/oder der Pflanzenplugs (7) aus der Aufnahme (5) des Transportelements (1), wobei die Fördervorrichtung (1001) dazu eingerichtet ist, das Transportelement (1) von der Saatstation (1002) zu der Erntestation (1003) zu transportieren, und wobei das Pflanzenzuchtsystem (1000) mindestens eine Beleuchtungseinheit (1004) zum zumindest abschnittsweise Beleuchten von in die Aufnahme (5) eingesetzten Pflanzen (6) oder Pflanzenplugs (7) und mindestens eine Nährstoffmittelversorgungseinheit (1005) zum zumindest abschnittsweise Versorgen der in die Aufnahme (5) eingesetzten Pflanzen (6) oder Pflanzenplugs (7) mit Nährstoffen aufweist.

14. Pflanzenzuchtsystem (1000) nach Anspruch 13 mit Rückbezug auf Anspruch 4, bei dem die Saatstation (1002) dazu eingerichtet ist, die Pflanzen (6) oder Pflanzenplugs (7) derart in die Aufnahme (5) einzusetzen, dass Blätter und/oder Früchte der Pflanzen (6) und/oder von den Pflanzen (6) beim Transportieren mittels der Fördervorrichtung (1001) gebildete Blätter und/oder Früchte oberhalb der Oberseite (3) des Grundkörpers (2) ragen und Wurzeln (17) der Pflanzen (6) und/oder von den Pflanzen (6) beim Transportieren mittels der Fördervorrichtung (1001) gebildete Wurzeln (17) durch die zweiten Öffnungsquerschnittsfläche unterhalb der Unterseite (4) des Grundkörpers (2) ragen.

15. Pflanzenzuchtsystem (1000) nach einem der vorangegangenen Ansprüche 13 bis 14,
- bei dem die Nährstoffmittelversorgungseinheit (1005) einen Zerstäuber (1012) aufweist, über den eine Nährstofflösung und/oder ein Düngemittel auf in die Aufnahme (5) des Transportelements (1) eingesetzte Pflanzen (6) oder Pflanzenplugs (7), bevorzugt auf aus dem Transportelement (1) hinausragenden Wurzeln (17) der Pflanzen (6), aufsprühbar ist, und/oder
- bei dem die Nährstoffmittelversorgungseinheit (1005) derart angeordnet ist, bevorzugt unterhalb der Fördervorrichtung (1001), dass eine Förderrichtung der von der Fördervorrichtung (1001) transportierten Transportelements (1) oberhalb der Nährstoffmittelversorgungseinheit (1005) verläuft, und/oder
- bei dem die Beleuchtungseinheit (1004) derart angeordnet ist, bevorzugt oberhalb der Fördervorrichtung (1001), dass eine Förderrichtung der von der Fördervorrichtung (1001) transportierten Transportelements (1) unterhalb der Beleuchtungseinheit (1004) verläuft, und/oder
- bei dem die Fördervorrichtung (1001) dazu eingerichtet ist, die Transportelemente (1) zwischen Saatstation (1002) und Erntestation (1003) zumindest in einem ersten Abschnitt im Wesentlichen in eine horizontal Richtung und in einem zweiten Abschnitt unter einem Neigungswinkel zur horizontalen Richtung zu transportieren, wobei der Neigungswinkel bevorzugt ein spitzer Winkel ist, und/oder
- bei dem die Fördervorrichtung (1001) dazu eingerichtet ist, die Transportelemente (1) zwischen Saatstation (1002) und Erntestation (1003) zumindest in einem dritten Abschnitt im Wesentlichen in eine vertikale Richtung zu transportieren, und/oder
- aufweisend eine Pufferstation (1010) zwischen Saatstation (1002) und Erntestation (1003) aufweist, wobei die Fördervorrichtung (1001) dazu eingerichtet ist, Transportelemente (1) von der Saatstation (1002) zu der Pufferstation (1010) und von der Pufferstation (1010) zu der Erntestation (1003) zu transportieren, wobei die Pufferstation (1010) dazu eingerichtet ist, Transportelemente (1) von der Fördervorrichtung (1001) zu lösen, gelöste Trays (1) für eine bestimmte Zeit zu lagern und gelagerte Transportelemente (1) mit der Fördervorrichtung (1001) zu verbinden, wobei bevorzugt mindestens eine der Beleuchtungseinheiten (1004) und/oder bevorzugt mindestens eine der Nährstoffversorgungseinheiten in der Pufferstation (1010) angeordnet ist, und/oder
- bei dem die Saatstation (1002) dazu eingerichtet ist, ein Identifizierungselement (20) des Transportelements (1) mit Informationen der in die Aufnahme (5) eingesetzter oder einzusetzender Pflanzen (6) oder Pflanzenplugs (7) zu beschreiben und/oder ein Identifizierungselement (20) enthaltend Informationen der in die Aufnahme (5) eingesetzter oder einzusetzender Pflanzen (6) oder Pflanzenplugs (7) an dem Transportelement (1) anzubringen, wobei
- das Identifizierungselement (20) bevorzugt ein RFID-Chip, ein Barcode, ein Farbcode, ein Piktogramm, ein alphanumerischer Ziffercode und/oder ein QR-Code ist oder aufweist, und/oder
- die Pufferstation (1010) bevorzugt ein Lesegerät zum Auslesen der Informationen des Identifizierungselements (20) aufweist und die Pufferstation (1010) dazu eingerichtet ist, das das Identifizierungselement (20) aufweisenden Transportelement (1) für einen in Abhängigkeit der gelesenen Informationen bestimmten Zeitraum zu lagern, und/oder
- bei dem die Beleuchtungseinheit (1004) bevorzugt ein Lesegerät zum Auslesen der Informationen des Identifizierungselements (20) aufweist und die Beleuchtungseinheit (1004) dazu eingerichtet ist, Licht mit einer in Abhängigkeit der gelesenen Informationen bestimmten Beleuchtungsdauer, Beleuchtungsintensität und/oder ein Beleuchtungsspektrum abzustrahlen, und/oder
- bei dem die Nährstoffversorgungseinheit bevorzugt ein Lesegerät zum Auslesen der Informationen des Identifizierungselements (20) aufweist und die Nährstoffversorgungseinheit dazu eingerichtet ist, eine in Abhängigkeit der gelesenen Informationen bestimmte oder gewählte Nährstofflösung und/oder Düngemittel mit einem eine in Abhängigkeit der gelesenen Informationen bestimmten Volumen- oder Massenstrom abzugeben.

## Claims

1. Transport element (1) for a plant breeding system (1000), wherein the transport element (1) has a base body (2) with an upper side (3) and a lower side (4) and at least one receptacle (5) for plants (6) or plant plugs (7), which receptacle is arranged in the base body (2) or extends through the base body (2), wherein the transport element (1) is configured to form at least part of a conveying device (1001) or a conveyor belt (100) or to be fastenable or connectable to a conveying device (1001), **characterized in that** the transport element (1) has at least two modules (21), wherein preferably each module (21) has at least one receptacle (5) for plants (6) or plant plugs (7), wherein the modules (21) are pivotable about a common pivot axis (X).

2. Transport element (1) according to claim 1,
- wherein the modules (21) are pivotable about the pivot axis (X) in a pivot angle range between a first relative pivot angle (w₁) and a second relative pivot angle (w₂), wherein the pivot angle range preferably comprises an angle range between at least -45° to 45°, particularly preferably at least between -90° and 90°, wherein the modules (21) preferably overlap in the pivot angle range (X) during a pivoting about relative pivot angles, and/or
- wherein the modules (21) are embodied in such a way, preferably overlap in such a way, that no light and/or no moisture can pass between the modules (21), and/or
- wherein the modules (21) are connected to one another by hinges and/or a hinge rod, wherein preferably the hinge rod forms the pivot axis.

3. Transport element (1) according to one of the preceding claims 1 to 2, wherein
- the transport element (1) has a laterally arranged coupling element (23), preferably a chain element, to which the modules (21) are connected, and/or
- the transport element (1) has a pot, wherein the pot is preferably embodied in one piece with the receptacle (5), and/or
- the transport element (1), and/or preferably at least one of the modules (21), has a bead (24) which is configured to stiffen the transport element (1) at least in sections, and/or
- the transport element (1) is or has a tray, and/or
- the transport element (1) has an identification element (20), preferably an RFID chip, barcode and/or QR code.

4. Transport element (1) according to one of the preceding claims, wherein the receptacle (5) has a first opening (8) with a first opening cross-sectional area (A₁) on the upper side (3) of the main body (2) and a second opening (9) with a second opening cross-sectional area (A₂) on the lower side (4) of the main body (2), wherein the first opening cross-sectional area is larger than the second opening cross-sectional area, wherein
- the first opening (8) and/or the second opening (9) is preferably round, elliptical and/or polygonal at least in sections or has a round, elliptical and/or polygonal shape, and/or
- the first opening cross-sectional area preferably has an area of 0.1 cm² to 5 cm², preferably 0.3 cm² to 3 cm², particularly preferably 0.5 cm² to 2 cm², and/or the second cross-sectional area preferably has an area of 0.2 cm² to 10 cm², preferably 0.5 cm² to 5 cm², particularly preferably 0.75 cm² to 3 cm².

5. Transport element (1) according to one of the preceding claims, wherein
- the receptacle (5) is frustoconical, shell-shaped and/or hemispherical at least in sections, and/or wherein the receptacle (5) tapers from the upper side (3) to the lower side (4) and/or is wedge-shaped and/or stepped, and/or
- the receptacle (5) has a volume of 1-250 ml, preferably 1-100 ml, particularly preferably 1-50 ml.

6. Transport element (1) according to one of the preceding claims with a plurality of receptacles (5), wherein the receptacles (5) are distributed regularly over the main body (2), preferably arranged in rows (19) or in a grid, and/or wherein, with reference back to claim 4, at least one of the receptacles (5) has a first opening cross-sectional area and/or second opening cross-sectional area different from at least one other receptacle (5).

7. Transport element (1) according to one of the preceding claims, wherein the transport element (1) has a connecting means (11) which is configured to connect the transport element (1) to a further transport element (1), and/or which is configured to be connected to the conveying device (1001), preferably a conveying chain or a traction means, in a form-fitting and/or force-fitting manner, wherein
- the connecting means (11) is preferably arranged on an outer side and/or an outer region of the main body (2), and/or
- the connecting means (11) preferably has a hook with which the transport element (1) can be hooked to the further transport element (1) or with which the transport element (1) can be hooked into the conveying device (1001), particularly preferably into the conveying chain or into the traction means, and/or
- the connecting means preferably has a connecting element for a connection to a driver or a pin of the conveying device (1001), wherein the connecting means (11) particularly preferably is or has a driver receptacle or a pin receptacle, and/or
- the connecting means (11) preferably has a trough (13) which is dimensioned in such a way that a clamping device or a clamp (103) of the conveying device (1001) can engage in the trough (13) in a form-fitting and/or force-fitting manner.

8. Transport element (1) according to one of the preceding claims, wherein the main body (2)
- at least in sections has a flexible material or consists of such a material, and/or
- has a plastic film and/or a rubber material or at least in sections consists of such a material, and/or
- is opaque and/or at least in sections has an opaque material or consists of such a material, and/or
- has two or more layers connected to one another or arranged one above the other or consists of such a layer, wherein preferably at least one of the layers is opaque and/or at least in sections has an opaque material or consists of such a material, and/or wherein preferably a first layer (14) is light-absorbing and/or has a light-absorbing material or consists of such a material, and/or wherein a second layer (15) is light-reflecting and/or has a light-reflecting material or consists of such a material.

9. Transport element (1) according to one of the preceding claims, wherein
- the upper side (3) and/or the lower side (4) is light-absorbing and/or has a light-absorbing material or consists of such a material, and/or the upper side (3) and/or the lower side (4) is coated with a light-absorbing material, and/or
- the upper side (3) and/or the lower side (4) is light-reflecting and/or has a light-reflecting material or consists of such a material, and/or the upper side (3) and/or the lower side (4) is coated with a light-reflecting material.

10. Transport element (1) according to one of the preceding claims, which has at least one depression on the lower side (4) and an elevation on the upper side (3) that is complementary to the depression, and/or which has at least one depression on the upper side (3) and an elevation on the lower side (4) that is complementary to the depression, so that in the case of two transport elements (1) stacked one above the other the elevation of one transport element (1) engages in the depression of the other transport element (1), wherein the receptacle (5) is preferably or has the depression.

11. Conveyor belt (100), having at least two transport elements (1) according to one of the preceding claims 1 to 10, wherein at least two of the transport elements (1) are connected to one another in pairs, so that the connected transport elements (1) form a conveyor belt section (109).

12. Conveyor belt (100) according to claim 11, wherein
- the conveyor belt (100) has a transverse strut (101), and wherein at least two of the transport elements (1) are connected to one another in pairs via the transverse strut (101), so that the transverse strut (101) and the transport elements (1) connected to the transverse strut (101) form the conveyor belt section (109), wherein preferably one of the transport elements (1) connected to the transverse strut (101) is pivotably connected to the transverse strut (101), so that the transport element (1) is pivotable about a pivot axis relative to the transverse strut (101), and/or wherein preferably both of the transport elements (1) connected to the transverse strut (101) are pivotably connected to the transverse strut (101), so that the transport elements (1) are pivotable about a respective pivot axis relative to the transverse strut (101), and/or wherein preferably the transverse strut (101) is configured in such a way and/or the transport elements (1) are connected to the transverse strut (101) in such a way that at least in the case of a planar extension of the conveyor belt section (109), particularly preferably also in the case of a curved conveyor belt section (109), a connecting region of the transverse strut (101) and the transport elements (1) connected thereto and/or the conveyor belt section (109) is opaque, and/or
- the conveyor belt (100) has a conveying chain and/or a traction means, wherein at least one, preferably all, of the transport elements (1) and/or the conveyor belt section (109) is connected to the conveying chain and/or the traction means in a form-fitting and/or force-fitting manner, wherein the conveyor belt (100) preferably has a conveying device connecting element (104) connected to the conveying chain and/or the traction means, particularly preferably having a driver, a hook, a clamp (103), a spring element, an angle bracket, a pin connection and/or a screw connection, wherein the transverse strut (101), at least one transport element (1) and/or the conveyor belt section (109) is connected to the conveying chain and/or the traction means in a form-fitting and/or force-fitting manner via the conveying device connecting element (104), and/or wherein the conveying chain and/or the traction means is preferably formed at least partially from laterally arranged coupling elements (23), particularly preferably chain elements, of the transport elements (1) or comprises such, wherein the coupling element (23) particularly preferably comprises chain links connected to one another, wherein preferably a chain link is connected to a module of the transport element (1).

13. Plant breeding system (1000), having at least one transport element (1) according to one of the preceding claims 1 to 10, and a conveying device (1001), which is preferably or has a conveyor belt (100) according to one of the preceding claims 11 to 12, for transporting the transport element (1), a seeding station (1002) for inserting plants (6) or plant plugs (7) into the receptacle (5) of the transport element (1) and a harvesting station (1003) for removing plants (6) and/or the plant plugs (7) from the receptacle (5) of the transport element (1), wherein the conveying device (1001) is configured to transport the transport element (1) from the seeding station (1002) to the harvesting station (1003), and wherein the plant breeding system (1000) has at least one illumination unit (1004) for at least sectionally illuminating plants (6) or plant plugs (7) inserted into the receptacle (5) and at least one nutrient supply unit (1005) for at least sectionally supplying the plants (6) or plant plugs (7) inserted into the receptacle (5) with nutrients.

14. Plant breeding system (1000) according to claim 13 with reference back to claim 4, wherein the seeding station (1002) is configured to insert the plants (6) or plant plugs (7) into the receptacle (5) such that leaves and/or fruits of the plants (6) and/or leaves and/or fruits formed by the plants (6) during transport by means of the conveying device (1001) protrude above the upper side (3) of the main body (2) and roots (17) of the plants (6) and/or roots (17) formed by the plants (6) during transport by means of the conveying device (1001) protrude through the second opening cross-sectional area below the lower side (4) of the main body (2).

15. Plant breeding system (1000) according to one of the preceding claims 13 to 14,
- wherein the nutrient supply unit (1005) has an atomizer (1012), via which a nutrient solution and/or a fertilizer can be sprayed onto plants (6) or plant plugs (7) inserted into the receptacle (5) of the transport element (1), preferably onto roots (17) of the plants (6) protruding out of the transport element (1), and/or
- wherein the nutrient supply unit (1005) is arranged in such a way, preferably below the conveying device (1001), that a conveying direction of the transport element (1) transported by the conveying device (1001) runs above the nutrient supply unit (1005), and/or
- wherein the illumination unit (1004) is arranged in such a way, preferably above the conveying device (1001), that a conveying direction of the transport element (1) transported by the conveying device (1001) runs below the illumination unit (1004), and/or
- wherein the conveying device (1001) is configured to transport the transport elements (1) between seeding station (1002) and harvesting station (1003) at least in a first section substantially in a horizontal direction and in a second section at an angle of inclination to the horizontal direction, wherein the angle of inclination is preferably an acute angle, and/or
- wherein the conveying device (1001) is configured to transport the transport elements (1) between seeding station (1002) and harvesting station (1003) at least in a third section substantially in a vertical direction, and/or
- comprising a buffer station (1010) between seeding station (1002) and harvesting station (1003), wherein the conveying device (1001) is configured to transport transport elements (1) from the seeding station (1002) to the buffer station (1010) and from the buffer station (1010) to the harvesting station (1003), wherein the buffer station (1010) is configured to detach transport elements (1) from the conveying device (1001), to store detached trays (1) for a certain time and to connect stored transport elements (1) to the conveying device (1001), wherein preferably at least one of the illumination units (1004) and/or preferably at least one of the nutrient supply units is arranged in the buffer station (1010), and/or
- wherein the seeding station (1002) is configured to describe an identification element (20) of the transport element (1) with information of the plants (6) or plant plugs (7) inserted or to be inserted into the receptacle (5) and/or to attach an identification element (20) containing information of the plants (6) or plant plugs (7) inserted or to be inserted into the receptacle (5) to the transport element (1), wherein
- the identification element (20) is or has preferably an RFID chip, a barcode, a color code, a pictogram, an alphanumeric numeral code and/or a QR code, and/or
- the buffer station (1010) preferably has a reading device for reading the information of the identification element (20) and the buffer station (1010) is configured to store the transport element (1) having the identification element (20) for a certain period of time depending on the read information, and/or
- wherein the illumination unit (1004) preferably has a reading device for reading the information of the identification element (20) and the illumination unit (1004) is configured to emit light with a certain illumination duration, illumination intensity and/or an illumination spectrum depending on the read information, and/or
- wherein the nutrient supply unit preferably has a reading device for reading the information of the identification element (20) and the nutrient supply unit is configured to deliver a certain or selected nutrient solution and/or fertilizer depending on the read information with a certain volume or mass flow depending on the read information.

## Revendications

1. Élément de transport (1) pour un système de culture végétale (1000), dans lequel l'élément de transport (1) comprend un corps de base (2) avec une face supérieure (3) et une face inférieure (4) et au moins un logement (5) disposé dans le corps de base (2) ou s'étendant à travers le corps de base (2), pour des plantes (6) ou des godets de culture (7), dans lequel l'élément de transport (1) est conçu pour former au moins une partie d'un dispositif de convoyage (1001) ou d'une bande transporteuse (100) ou pour pouvoir être fixé ou relié à un dispositif de convoyage (1001), **caractérisé en ce que** l'élément de transport (1) comprend au moins deux modules (21), chaque module (21) présentant de préférence au moins un logement (5) pour des plantes (6) ou des godets de culture (7), les modules (21) étant pivotables autour d'un axe de pivotement commun (X).

2. Élément de transport (1) selon la revendication 1,
- dans lequel les modules (21) peuvent pivoter dans une plage d'angle de pivotement entre un premier angle de pivotement relatif (ω₁) et un deuxième angle de pivotement relatif (ω₂) autour de l'axe de pivotement (X), la plage d'angle de pivotement comprenant de préférence une plage d'angle entre au moins - 45° et 45°, particulièrement de préférence au moins entre - 90° et 90°, les modules (21) se chevauchant de préférence lors d'un pivotement selon des angles de pivotement relatifs dans la plage d'angle de pivotement (X), et/ou
- dans lequel les modules (21) sont réalisés de telle manière, de préférence se chevauchent de telle manière qu'aucune lumière et/ou humidité ne puisse passer entre les modules (21), et/ou
- dans lequel les modules (21) sont reliés entre eux par des charnières et/ou une barre de charnière, la barre de charnière formant de préférence l'axe de pivotement.

3. Élément de transport (1) selon l'une des revendications précédentes 1 à 2, dans lequel
- l'élément de transport (1) comprend un élément de couplage (23) disposé latéralement, de préférence un élément de chaîne, avec lequel les modules (21) sont reliés, et/ou
- l'élément de transport (1) comprend un pot, ce pot étant de préférence réalisé d'une seule pièce avec le logement (5), et/ou
- l'élément de transport (1), et/ou de préférence au moins un des modules (21), présente une nervure (24) conçue pour rigidifier au moins partiellement l'élément de transport (1), et/ou
- l'élément de transport (1) est ou présente un plateau, et/ou
- l'élément de transport (1) comprend un élément d'identification (20), de préférence une puce RFID, un code-barres et/ou un code QR.

4. Élément de transport (1) selon l'une des revendications précédentes, dans lequel le logement (5) présente, sur la face supérieure (3) du corps de base (2) une première ouverture (8) avec une première section transversale d'ouverture (A₁) et, sur la face inférieure (4) du corps de base (2), une deuxième ouverture (9) avec une deuxième section transversale d'ouverture (A₂), la première section transversale d'ouverture étant plus grande que la deuxième section transversale d'ouverture, dans lequel
- la première ouverture (8) et/ou la deuxième ouverture (9) sont de préférence au moins partiellement rondes, elliptiques et/ou polygonales ou présentent une forme ronde, elliptique et/ou polygonale, et/ou
- la première section transversale d'ouverture présente de préférence une surface de 0,1 cm² à 5 cm², de préférence de 0,3 cm² à 3 cm², particulièrement de préférence de 0,5 cm² à 2 cm², et/ou la deuxième section transversale présente de préférence une surface de 0,2 cm² à 10 cm², de préférence de 0,5 cm² à 5 cm², particulièrement de préférence de 0,75 cm² à 3 cm².

5. Élément de transport (1) selon l'une des revendications précédentes, dans lequel
- le logement (5) est au moins partiellement tronconique, en forme de cuvette et/ou hémisphérique, et/ou dans lequel le logement (5) se rétrécit de la face supérieure (3) vers la face inférieure (4) et/ou est en forme de coin et/ou en forme d'échelon, et/ou
- le logement (5) présente un volume de 1 à 250 ml, de préférence de 1 à 100 ml, particulièrement de préférence de 1 à 50 ml.

6. Élément de transport (1) selon l'une des revendications précédentes avec une pluralité de logements (5), les logements (5) étant répartis régulièrement sur le corps de base (2), de préférence disposés en rangées (19) ou en grille, et/ou dans lequel, en référence à la revendication 4, au moins un des logements (5) présente une première section transversale d'ouverture et/ou une deuxième section transversale d'ouverture différente d'au moins un autre logement (5).

7. Élément de transport (1) selon l'une des revendications précédentes, dans lequel l'élément de transport (1) comprend un moyen de liaison (11) conçu pour relier l'élément de transport (1) à un autre élément de transport (1), et/ou conçu pour être relié par ajustement de forme et/ou par adhérence au dispositif de convoyage (1001), de préférence une chaîne transporteuse ou un élément de traction, dans lequel
- le moyen de liaison (11) est de préférence disposé sur une face extérieure et/ou une zone extérieure du corps de base (2), et/ou
- le moyen de liaison (11) présente de préférence un crochet avec lequel l'élément de transport (1) peut être accroché à l'autre élément de transport (1) ou avec lequel l'élément de transport (1) peut être accroché dans le dispositif de convoyage (1001), particulièrement de préférence dans la chaîne transporteuse ou dans l'élément de traction, et/ou
- le moyen de liaison comprend de préférence un élément de liaison pour une liaison avec un entraîneur ou une broche du dispositif de convoyage (1001), le moyen de liaison (11) étant particulièrement de préférence un logement d'entraîneur ou un logement de broche ou en présentant un, et/ou
- le moyen de liaison (11) présente de préférence un creux (13) dimensionné de telle manière qu'un dispositif de serrage ou une pince (103) du dispositif de convoyage (1001) peut s'engager par ajustement de forme et/ou par adhérence dans le creux (13).

8. Élément de transport (1) selon l'une des revendications précédentes, dans lequel le corps de base (2)
- présente au moins partiellement un matériau flexible ou est constitué d'un tel matériau, et/ou
- présente un film plastique et/ou un matériau en caoutchouc ou est constitué au moins partiellement d'un tel matériau, et/ou
- est opaque et/ou présente au moins partiellement un matériau opaque ou est constitué d'un tel matériau, et/ou
- présente deux couches ou plus reliées entre elles ou disposées l'une au-dessus de l'autre ou est constitué de telles couches, au moins l'une des couches étant de préférence opaque et/ou comprenant au moins partiellement un matériau opaque ou étant constituée d'un tel matériau, et/ou dans lequel, de préférence, une première couche (14) absorbe la lumière et/ou comprend un matériau absorbant la lumière ou est constituée d'un tel matériau et/ou dans lequel une deuxième couche (15) réfléchit la lumière et/ou comprend un matériau réfléchissant la lumière ou est constituée d'un tel matériau.

9. Élément de transport (1) selon l'une des revendications précédentes, dans lequel
- la face supérieure (3) et/ou la face inférieure (4) absorbe la lumière et/ou comprend un matériau absorbant la lumière ou est constituée d'un tel matériau, et/ou la face supérieure (3) et/ou la face inférieure (4) est revêtue d'un matériau absorbant la lumière, et/ou
- la face supérieure (3) et/ou la face inférieure (4) réfléchit la lumière et/ou comprend un matériau réfléchissant la lumière ou est constituée d'un tel matériau, et/ou la face supérieure (3) et/ou la face inférieure (4) est revêtue d'un matériau réfléchissant la lumière.

10. Élément de transport (1) selon l'une des revendications précédentes, qui présente, sur la face inférieure (4), au moins un creux et, sur la face supérieure (3), une protubérance complémentaire au creux et/ou qui présente, sur la face supérieure (3), au moins un creux et, sur la face inférieure (4), une protubérance complémentaire au creux, de sorte que, lorsque deux éléments de transport (1) sont empilés l'un sur l'autre, la protubérance de l'un des éléments de transport (1) s'emboîte dans le creux de l'autre élément de transport (1), de préférence le logement (5) étant ou présentant le creux.

11. Bande transporteuse (100) comprenant au moins deux éléments de transport (1) selon l'une des revendications précédentes 1 à 10, au moins deux des éléments de transport (1) étant reliés par paires entre eux de sorte que les éléments de transport (1) reliés forment une section de bande transporteuse (109).

12. Bande transporteuse (100) selon la revendication 11, dans laquelle
- la bande transporteuse (100) présente une traverse (101) et dans laquelle au moins deux des éléments de transport (1) sont reliés entre eux par paires par l'intermédiaire de la traverse (101), de sorte que la traverse (101) et les éléments de transport (1) reliés à la traverse (101) forment la section de bande transporteuse (109), l'un des éléments de transport (1) reliés à la traverse (101) étant de préférence relié de manière pivotante avec la traverse (101), de sorte que l'élément de transport (1) peut pivoter autour d'un axe de pivotement par rapport à la traverse (101) et/ou dans laquelle, de préférence, les deux éléments de transport (1) reliés à la traverse (101) sont reliés de manière pivotante avec la traverse (101), de sorte que les éléments de transport (1) peuvent pivoter chacun autour d'un axe de pivotement par rapport à la traverse (101) et/ou dans laquelle, de préférence, la traverse (101) est conçue de telle manière et/ou les éléments de transport (1) sont reliés à la traverse (101) de telle manière que, au moins dans le cas d'une extension plane de la section de bande transporteuse (109), plus particulièrement de préférence également dans le cas d'une section de bande transporteuse (109) incurvée, une zone de liaison de la traverse (101) et des éléments de transport (1) qui y sont reliés et/ou la section de bande transporteuse (109) est opaque, et/ou
- la bande transporteuse (100) comprend une chaîne transporteuse et/ou un élément de traction, au moins un, de préférence tous, des éléments de transport (1) et/ou de la section de bande transporteuse (109) étant reliés par complémentarité de forme et/ou par force à la chaîne transporteuse et/ou à l'élément de traction, la bande transporteuse (100) comprenant de préférence un élément de liaison de dispositif de convoyage (104) relié à la chaîne transporteuse et/ou à l'élément de traction, présentant, plus particulièrement de préférence, un entraîneur, un crochet, une pince (103), un élément ressort, un angle, une goupille et/ou un vissage, la traverse (101), au moins un élément de transport (1) et/ou la section de bande transporteuse (109) étant reliés par complémentarité de forme et/ou par force à la chaîne transporteuse et/ou à l'élément de traction via l'élément de liaison de dispositif de convoyage (104) et/ou dans laquelle la chaîne transporteuse et/ou l'élément de traction est de préférence constitué, au moins partiellement, d'éléments de couplage (23) disposés latéralement, particulièrement de préférence d'éléments de chaîne, des éléments de transport (1) ou comprend de tels éléments, l'élément de couplage (23) comprenant, plus particulièrement de préférence, des maillons de chaîne reliés entre eux, un maillon de chaîne étant de préférence relié à un module de l'élément de transport (1).

13. Système de culture végétale (1000), comprenant au moins un élément de transport (1) selon l'une des revendications précédentes 1 à 10, et un dispositif de convoyage (1001), qui, de préférence, est ou comprend une bande transporteuse (100) selon l'une des revendications précédentes 11 à 12, pour transporter l'élément de transport (1), un poste de semis (1002) pour insérer des plantes (6) ou des godets de culture (7) dans le logement (5) de l'élément de transport (1) et un poste de récolte (1003) pour retirer des plantes (6) et/ou les godets de culture (7) du logement (5) de l'élément de transport (1), le dispositif de convoyage (1001) étant conçu pour transporter l'élément de transport (1) du poste de semis (1002) au poste de récolte (1003) et le système de culture végétale (1000) comprenant au moins une unité d'éclairage (1004) pour éclairer au moins partiellement les plantes (6) ou les godets de culture (7) insérés dans le logement (5) et au moins une unité d'alimentation en nutriments (1005) pour alimenter au moins partiellement en nutriments les plantes (6) ou les godets de culture (7) insérés dans le logement (5).

14. Système de culture végétale (1000) selon la revendication 13 en référence à la revendication 4, dans lequel le poste de semis (1002) est conçu pour insérer les plantes (6) ou les godets de culture (7) dans le logement (5) de telle manière que les feuilles et/ou les fruits des plantes (6) et/ou les feuilles et/ou les fruits formés par les plantes (6) lors du transport au moyen du dispositif de convoyage (1001) dépassent au-dessus de la face supérieure (3) du corps de base (2) et les racines (17) des plantes (6) et/ou les racines (17) formées par les plantes (6) lors du transport au moyen du dispositif de convoyage (1001) dépassent à travers la deuxième section transversale d'ouverture en dessous de la face inférieure (4) du corps de base (2).

15. Système de culture végétale (1000) selon l'une des revendications précédentes 13 à 14,
- dans lequel l'unité d'alimentation en nutriments (1005) comprend un atomiseur (1012) au moyen duquel une solution nutritive et/ou un engrais peut être pulvérisé sur les plantes (6) ou les godets de culture (7) insérés dans le logement (5) de l'élément de transport (1), de préférence sur les racines (17) des plantes (6) dépassant de l'élément de transport (1), et/ou
- dans lequel l'unité d'alimentation en nutriments (1005) est disposée de telle manière, de préférence en dessous du dispositif de convoyage (1001), qu'une direction de transport des éléments de transport (1) transportés par le dispositif de convoyage (1001) passe au-dessus de l'unité d'alimentation en nutriments (1005), et/ou
- dans lequel l'unité d'éclairage (1004) est disposée de telle manière, de préférence au-dessus du dispositif de convoyage (1001), qu'une direction de transport des éléments de transport (1) transportés par le dispositif de convoyage (1001) passe en dessous de l'unité d'éclairage (1004), et/ou
- dans lequel le dispositif de convoyage (1001) est conçu pour transporter les éléments de transport (1) entre le poste de semis (1002) et le poste de récolte (1003), au moins dans une première section, globalement dans une direction horizontale et, dans une deuxième section, selon un angle d'inclinaison par rapport à la direction horizontale, l'angle d'inclinaison étant de préférence un angle aigu, et/ou
- dans lequel le dispositif de convoyage (1001) est conçu pour transporter les éléments de transport (1) entre le poste de semis (1002) et le poste de récolte (1003), au moins dans une troisième section, globalement dans une direction verticale, et/ou
- comprenant un poste tampon (1010) entre le poste de semis (1002) et le poste de récolte (1003), dans lequel le dispositif de convoyage (1001) est conçu pour transporter les éléments de transport (1) du poste de semis (1002) vers le poste tampon (1010) et du poste tampon (1010) vers le poste de récolte (1003), dans lequel le poste tampon (1010) est conçu pour libérer les éléments de transport (1) du dispositif de convoyage (1001), stocker les plateaux (1) libérés pendant une durée déterminée et relier les éléments de transport (1) stockés au dispositif de convoyage (1001), dans lequel de préférence au moins l'une des unités d'éclairage (1004), dans lequel, de préférence, au moins une des unités d'éclairage (1004) et/ou de préférence au moins une des unités d'alimentation en nutriments est disposée dans le poste tampon (1010), et/ou
- dans lequel le poste de semis (1002) est conçu pour marquer un élément d'identification (20) de l'élément de transport (1) avec des informations concernant les plantes (6) ou les godets de culture (7) insérés ou à insérer dans le logement (5) et/ou fixer, à l'élément de transport (1), un élément d'identification (20) contenant des informations concernant les plantes (6) ou les godets de culture (7) insérés ou à insérer dans le logement (5), dans lequel
- l'élément d'identification (20) est ou comprend, de préférence, une puce RFID, un code-barres, un code couleur, un pictogramme, un code numérique alphanumérique et/ou un code QR, et/ou
- le poste tampon (1010) comprend de préférence un lecteur pour lire les informations de l'élément d'identification (20) et le poste tampon (1010) est conçu pour stocker l'élément de transport (1) comprenant l'élément d'identification (20) pendant une durée déterminée en fonction des informations lues, et/ou
- dans lequel l'unité d'éclairage (1004) comprend de préférence un lecteur pour lire les informations de l'élément d'identification (20) et l'unité d'éclairage (1004) est conçue pour émettre de la lumière avec une durée d'éclairage, une intensité d'éclairage et/ou un spectre d'éclairage déterminés en fonction des informations lues, et/ou
- dans lequel l'unité d'alimentation en nutriments comprend de préférence un lecteur pour lire les informations de l'élément d'identification (20) et l'unité d'alimentation en nutriments est conçue pour distribuer une solution nutritive et/ou un engrais déterminé ou choisi en fonction des informations lues avec un débit volumique ou massique déterminé en fonction des informations lues.
